# EUROPEAN PATENT SPECIFICATION

(11) **EP 2 534 191 B1**
(45) Date of publication and mention of the grant of the patent: **15.04.2020**
(21) Application number: 11702460.4
(22) Date of filing: 09.02.2011
(51) Int. Cl.: C08G 73/10, C08L 79/08, C09K 19/04, C09K 19/38

(54) **PHOTOALIGNING MATERIAL WITH LATERAL SUBSTITUTION**
Lichtausrichtungsmaterial mit seitlicher Substitution
Photo-alignement de matériau avec remplacement latéral

(30) Priority: 29.04.2010 EP 10161466; 12.02.2010 EP 10001443
(43) Date of publication of application: 19.12.2012
(73) Proprietor: ROLIC Technologies AG, 4123 Allschwill (CH)
(72) Inventor: ECKERT, Jean-François, F-67750 Kientzville (FR); PALIKA, Satish, 4800 Zofingen (CH); SCHUSTER, Andreas, 79114 Freiburg (DE)
(74) Representative: Veenstra, Eva
(86) International application number: PCT/EP2011/051845
(87) International publication number: WO 2011/098461

(56) References cited:
- EP-A1- 1 801 097
- EP-A1- 1 860 094
- EP-A1- 1 975 687
- EP-A2- 0 255 236
- EP-A2- 0 360 521
- WO-A1-2008/135131
- WO-A1-2009/080147
- WO-A2-2008/145225
- JP-A- 2 115 145
- US-A- 4 886 619
- US-A1- 2008 293 888

## Description

The present invention relates to photoaligning material with lateral substitution, compositions thereof, and its use for optical and electro optical devices, especially liquid crystal devices (LCDs) or security devices.

In the large scale manufacturing of LCDs, time duration between different processing steps are very tightly controlled. In display manufacturing using photoalignment technique UV exposure energy and its incidence angle on the coated alignment layer is an important and major processing step. This process step is optimized for a particular pretilt angle of liquid crystal and also for rest of the production process durations. Any desired variation of the pretilt angles requires usually a time consuming adjustment of the UV exposure unit. Hence, there is a constant need for a more economic manufacturing process.

EP 1 975 687, WO 2009/080147, EP 1 801 097, US 2008/293888, WO 2008/135131 describe photoalignining compounds having a cinnamate based photoreactive group, which is linked to an unsubstituted or substituted further phenyl ring. WO 2008/145225 describes photoalignining compounds having a cinnamate based photoreactive group, which is linked to an unsubstituted or substituted further alicyclic ring. JP 2115145, EP 255 236, EP360 521 and US 4 886 619 describe with fluoro substituted liquid crystals not having any photoreactiv group.

In the present invention a novel photoalignment material was found which gives access to the desired pretilt angles without major changes in the production line. Accordingly, in the present invention a compound was found, which is an aromatic diamine, comprising a mono- or multichromophoric lateral-substituted portion represented by formula (I) 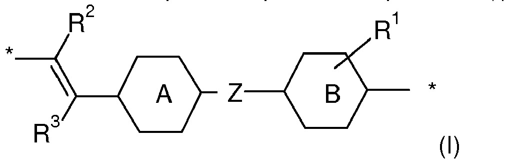 wherein
A represents an unsubstituted carbocyclic or heterocyclic aromatic selected from a monocyclic ring of five or six atoms, two adjacent monocyclic rings of five or six atoms, a bicyclic ring system of eight, nine or ten atoms, or a tricyclic ring system of thirteen or fourteen atoms; of eight, nine or ten atoms, or a tricyclic ring system of thirteen or fourteen atoms;
B substituted carbocyclic or heterocyclic aromatic selected from a monocyclic ring of five or six atoms, two adjacent monocyclic rings of five or six atoms, a bicyclic ring system of eight, nine or ten atoms, or a tricyclic ring system of thirteen or fourteen atoms; of eight, nine or ten atoms, or a tricyclic ring system of thirteen or fourteen atoms;
Z represents -OCO-, -OCH₂- or a single bond,
R¹ represents fluorine, chlorine or nitrile,
R² and R³ are independently from each other hydrogen, halogen or nitrile; unsubstituted or with halogen substituted C₁-C₁₂alkyl, in which one or more C-atom, CH- or CH₂- group may be replaced by a linking group; preferably R² and R³ are H, nitrile or fluorine; and a polymerizable group.

A photoalignment material, comprising a polymer having in a side chain at least one lateral-substituted portion represented by formula (I) 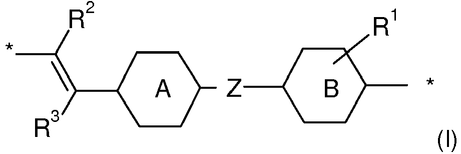 wherein
A and B independently from each other represent an unsubstituted or substituted carbocyclic or heterocyclic aromatic or alicyclic group selected from a monocyclic ring of five or six atoms, two adjacent monocyclic rings of five or six atoms, a bicyclic ring system of eight, nine or ten atoms, or a tricyclic ring system of thirteen or fourteen atoms;
Preferably A represents an unsubstituted or substituted carbocyclic or heterocyclic aromatic group selected from a monocyclic ring of five or six atoms, two adjacent monocyclic rings of five or six atoms, a bicyclic ring system of eight, nine or ten atoms, or a tricyclic ring system of thirteen or fourteen atoms; and B represents an unsubstituted or substituted carbocyclic or heterocyclic aromatic or alicyclic group selected from a monocyclic ring of five or six atoms, two adjacent monocyclic rings of five or six atoms, a bicyclic ring system of eight, nine or ten atoms, or a tricyclic ring system of thirteen or fourteen atoms;
Z represents a bridging group,
R¹ represents fluorine, chlorine or nitrile, and more preferably fluorine,
R² and R³ are independently from each other hydrogen, halogen or nitrile; unsubstituted or with halogen substituted C₁-C₁₂alkyl, in which one or more C-atom, CH- or CH₂- group may be replaced by a linking group; preferably R² and R³ are hydrogen, nitrile or fluorine, and more preferably R² and R³ are hydrogen and/or nitrile, and most preferably R² and R³ are hydrogen.

Substituents of the aromatic or alicyclic groups are for example a straight-chain or branched C₁-C₁₆alkyl group, which is unsubstituted or substituted by fluorine, di-(C₁-C₁₆alkyl)amino, C₁-C₁₆alkyloxy, nitro, nitrile and/or chlorine; and wherein one or more C-atom, CH- or CH₂- group may independently from each other be replaced by a linking group; halogen or nitrile. Preferred substituents are C₁-C₆alkyl group, especially methyl or ethyl, C₁-C₆alkoxy group, especially methoxy or ethoxy, chlorine, fluorine, or nitrile, more preferably methoxy, chlorine, fluorine, or nitrile and most preferably methoxy, chlorine or fluorine. Further, if the aromatic group is substituted, then it is preferably substituted once or twice.

In the context of the present invention halogen represents fluorine, chlorine, bromine or iodine and preferably fluorine or chlorine and more preferably fluorine.

In the context of the present invention alkyl or alkylen is substituted or unsubstituted and has the same meaning as primary, secondary and tertiary alkyl or respectively alkylen; and wherein one or more C-atom, CH- or CH₂- group may independently from each other be replaced by a linking group.
Preferred C₁-C₃₀alkyl is especially C₁-C₂₄alkyl and preferably C₁-C₁₆alkyl, more preferably C₁-C₁₂alkyl, most preferred C₁-C₆alkyl such as methyl, ethyl, propyl, isopropyl, butyl, sec.-butyl, tert.-butyl, pentyl, hexyl, heptyl, octyl, nonyl, decyl, undecyl, dodecyl, tridecyl, tetradecyl, pentadecyl, hexadecyl, heptadecyl octydecyl, nonadecyl, eicsyl, uneicosyl, docosyl, tricosyl or triacontyl; more preferred is C₁-C₆alkyl such as methyl, ethyl, propyl, butyl, pentyl or hexyl.
Preferred di-(C₁-C₁₆alkyl)amino or C₁-C₁₆alkyloxy has for the alkyl term the same preferences and meanings as given above.
In the context of the present invention alkylen is substituted or unsubstituted and has the same meaning as primary, secondary and tertiary alkylen.
Preferred C₁-C₂₄alkylen is methylen, ethylen, propylen, isopropylen, butylen, sec.-butylen, tert.-butylen, pentylen, hexylen, heptylen, octylen, nonylen, decylen, undecylen, dodecylen, tridecylen, tetradecylen, pentadecylen or hexadecylen; more preferred C₁-C₁₆alkylen; most preferred is C₁-C₁₂alkylen and especially most preferred is C₁-C₆alkylen.

The term "bridging group" as used in the context of the present invention is preferably selected from -O-, -CO-,-CH(OH)-, -CH₂(CO)-, -OCH₂-, -CH₂O-, -O-CH₂-O-, -COO-, -OCO-, -(C₁-C₁₆alkylen)(CO)O-, -(C₁-C₁₆alkylen)O(CO)-, -(CO)O(C₁-C₁₆alkylen)-, -O(CO)(C₁-C₁₆alkylen)-, -O(C₁-C₁₆alkylen)-, -(C₁-C₁₆alkylen)O-, -OCF₂-, -CF₂O-, -CON(C₁-C₁₆alkylen)-,-(C₁-C₁₆alkylen)NCO-, -CONH-, -NHCO-, -HNOCO-, -OCONH-, - NHCONH-, -OCOO- , -CO-S-, -S-CO- ,- CSS, -SOO-,-OSO- , -SOS-, -SO-, -CH₂(SO)-, -SO₂-, -CH=CH-, -C≡C-,-CH=CH-COO-, -OCO-CH=CH-, -CH=N-, -C(CH₃)=N-, -N=N- or a single bond; or a cyclic, straight-chain or branched, substituted or unsubstituted C₁-C₂₄alkylen, wherein one or more C-atom, CH- or CH₂- group may independently from each other be replaced by a linking group.
Preferably, the bridging group is -O-, -CO-, -COO-, -OCO-, -OCOO-, -OCF₂-, -CF₂O-, -CON(CH₃)-, -(CH₃)NCO-, -CONH-, -NHCO-, -CO-S-, -S-CO-, -CS-S--SOO-, -OSO-, -CH₂(SO₂)-, -CH₂-CH₂-, -OCH₂-, -CH₂O-, -CH=CH-, -C≡C-, -CH=CH-COO-, -OCO-CH=CH-, or a single bond.
More preferably bridging group is -COO-, -OCO-, -OCOO-, -OCF₂-, -CF₂O-,-CON(CH₃)-, -(CH₃)NCO-, -CONH-, -NHCO-, -CO-S-, -S-CO-, -CS-S-, -SOO-, -OSO, especially - COO-, -OCO-, -OCF₂-, -CF₂O-,-CON(CH₃)-, -(CH₃)NCO-, -CONH-, -NHCO-. Most preferred bridging group is -COO-, -OCO-, -OCH₂-, -CH₂O- or a single bond, and especially -OCO-, -OCH₂- or a single bond.

The term "linking group", as used in the context of the present invention is preferably selected from a single bond, -S-, -S(CS)-, -(CS)S-, -CO-S-, -S-CO-, -O-, -CO, -CO-O-, -O-CO-, 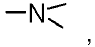 -NR²-, -NR²-CO-, -CO-NR²-, -NR²-CO-O-, -O-CO-NR²-, -NR²-CO-NR²-, -CH=CH-, -C≡C-, -O-CO-O-, -Si(CH₃)₂-O-Si(CH₃)₂-; and unsubstituted or substituted cyclohexylen and unsubstituted or substituted phenylene and wherein: R² represents hydrogen or C₁-C₆alkyl; especially hydrogen or methyl; with the proviso that oxygen atoms of linking groups are not directly linked to each other; preferred is a single bond, -O-, -O(CO), -S-, -(CO)O- or 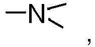 -NR²-; more preferred is a single bond, -O-, -O(CO) or -(CO)O-.

The "carbocyclic or heterocyclic aromatic group" and "aromatic group" as used in the context of the present invention represents five, six, ten or 14 ring atoms, e.g. furan, benzene or phenylene, pyridine, triazine, pyrimidine, biphenylene, naphthalene, phenanthrene, triphenylene, tetraline which are uninterrupted or interrupted by at least a single heteroatom and/or at least a single bridging group; preferred "carbocyclic or heterocyclic aromatic group" and "aromatic group" are benzene, phenylene, naphthalene, biphenylene, phenanthrene, or triphenylen and more preferred are benzene, phenylene and biphenylene, especially phenylene.

The term "phenylene", as used in the context of the present invention, preferably denotes a 1,2-, 1,3- or 1,4-phenylene group, which is optionally substituted. It is preferred that the phenylene group is either a 1,3- or a 1,4-phenylene group. 1,4-phenylene groups are especially preferred.

The "alicyclic group" as used in the context of the present invention represents for example ring systems, with 3 to 40 carbon atoms, preferably C₆-C₄₀ carbon atoms, as for example cyclopropane, cyclobutane, cyclopentane, cyclopentene, cyclohexane, cyclohexene, cyclohexadiene, decaline, tetrahydrofuran, dioxane, pyrrolidine, piperidine or a steroidal skeleton such as cholesterol, and preferred are cyclohexane or a steroidal skeleton.

The term "polymer" as used in the context of the present invention is not limited and comprises for example copolymer, polymer, homopolymer or oligomer, preferred is a homo- or copolymer.
The term "polymerising" as used in the context of the present invention is not limited and comprises for example copolymerising, polymerising, homopolymerising or oligomerising.

The photoalignment material used in the present invention comprise a polymer having a side chain as described above and a main chain, which is not particularly limited, and is represented for example by polyamic acid, polyimide, polyamic acid ester, polyester, polyamide, polysiloxane, cellulose derivative, polyacetal, polyurea, polyurethane, polystyrene derivative, poly(styrene-phenyl-maleimide)-derivative and poly(meth)acrylate, cyclo olefin polymer or a mixture thereof. A polyamic acid, polyimide, polyamic acid ester, polystyrene derivative and poly(styrenephenylmaleimide)- derivative are preferred; polyamic acid ester, polyamic acid, polyimide and mixtures thereof are more preferred, and polyamic acid , polyimide and mixtures thereof are particularly preferred.

Further, preferred is a photoalignment material, comprising a polymer having in a side chain, preferably in a mono- or multichromophoric, especially in a bichromophoric side chain, at least one lateral-substituted portion represented by formula (II) 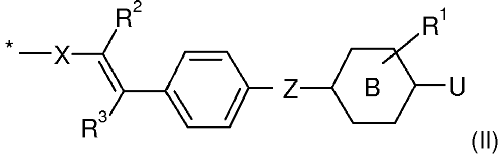 wherein
B and Z have the meanings and preferences as described above,
R¹ represents fluorine, chlorine or nitrile, and more preferably fluorine,
U represents hydrogen or a straight-chain or branched, unsubstituted, or at least once, with halogen, nitile, ether, ester, siloxane, amide or amine substituted C₁-C₁₆alkyl group, preferably at the terminal position substituted ; especially terminal substituted C₁-C₁₂alkyl group, more especially C₁-C₆alkyl group, wherein one or more C-atom, CH- or CH₂- group is independently from each other not replaced or replaced by a linking group within the above given meaning and preferences; especially a C-atom, CH- or CH₂- group is replaced by -NH-, -NCH₃-, -NH-CO-, -CO-NH-, -NH-CO-O-, -O-CO-NH-,
   -NH-CONH-, -NCH₃-, NCH₃-CO-, -CO-NCH₃-, -NCH₃-CO-O-, -O-CO-NCH₃-, - NCH₃-CONCH₃-, -O-, -CO, -CO-O-, -O-CO-, -CH=CH-, -C≡C-, -O-CO-O-, or an unsubstituted or substituted cyclohexylen or phenylene;
preferably U is hydrogen or Q¹-(C₁-C₁₆alkyl), preferably Q¹-(C₁-C₁₂alkyl) and most preferably Q¹-(C₁-C₆alkyl),which is unsubstituted or substituted by halogen, nitrile, ether, ester, amide or amine; preferably with fluorine or nitrile especially with 1, 2, 3, 4, 5, 6, 7, 8, 9 or 10, more especially with 1, 2, 3, 4, 5, 6 or 7, and most especially by 1, 2, 3 or 5 fluorine atoms; and wherein one or more C-atom, CH- or CH₂- group of Q -(C₁-C₁₆alkyl) is independently from each other not replaced or replaced by a linking group within the above given meaning and preferences; especially a C-atom, CH- or CH₂- group is replaced by -NH-, -NCH₃-, -NH-CO-, -CO-NH-, NH-CO-O-, -O-CO-NH-, -NH-CONH-, -NCH₃-, NCH₃-CO-, -CO-NCH₃-, -NCH₃-CO-O-, -NCH₃-CO-O-, -O-CO-NCH₃-, NCH₃-CONCH₃-, -O-, -CO, -CO-O-, -O-CO-, -CH=CH-, -C≡C-, -O-CO-O-, or unsubstituted or substituted cyclohexylen or phenylene; and wherein
Q¹ represents a single bond or -NH-, -NCH₃-, -NH-CO-, -CO-NH-, -NH-CO-O-, -O-CO-NH-, -NH-CONH-, -O-, -CO-, -COO-, -OCO-, -S-, -CS-, -SCS-, -SCO-, -CH=CH-, -C≡C- or -O-CO-O-, preferably Q¹ is -O-, -CO-, -COO-, -OCO- or a single bond, more preferably -O- or a single bond;
preferably the fluorine substituents of Q¹-(C₁-C₆alkyl) are in the terminal position of the alkyl group, at the opposite side of the linkage to ring B, more preferably the substituted (C₁-C₆alkyl) is
   -CF₃-CF₂H, -CH₂F, -CF₂CF₃, -CF₂CHF₂, -CF₂CH₂F, -CFHCF₃, -CFHCHF₂, -CFHCH₂F, -CF₂CH₃, -CFHCHF₂, -(CF₂)₂CF₃, -(CF₂)₂CHF₂, -(CF₂)₂CH₂F, -(CF₂)₂CH₃, -(CF₂)₃CHF₂, -(CF₂)₃CH₂F, -(CF₂)₃CF₃, -CF(CF₃)₂ or -CF₂(CHF)CF₃, and most preferably of formula -CF₂H, -CF₂H, -CH₂F, -CF₃, -CF₂CF₃, -CF₂CHF₂ ; and especially most preferably of formula -CF₃, -CH₂F, -CF₂CF₃, especially -CF₃;
more preferably U is hydrogen, -CF₃ -CF₂H, -CH₂F, -Q¹-(C₁-C₆alkylen)-CF₃, -Q¹-(C₁-C₆ alkylen)-CF₂H, -Q¹-(C₁₋C₆alkylen)-CH₂F, -Q¹-(C₁-C₆alkylen)-CF₂CF₃, -Q¹-(C₁-C₆alkylen)-CF₂CHF₂, -Q₁-(C₁-C₆alkylen)-CF₂CH₂F, -Q¹-(C₁-C₆alkylen)-CFHCF₃, -Q¹-(C₁-C₆alkylen)-CFHCHF₂, -Q¹-(C₁-C₆alkylen)-CFHCH₂F, -Q¹-(C₁-C₆alkylen)-CF₂CH₃, -Q¹-(C₁-C₆alkylen)-CFHCHF₂, -Q¹- (C₁-C₆alkylen)-(CF₂)₂CF₃, -Q¹-(C₁-C₆alkylen)-(CF₂)₂CHF₂, -Q¹-(C₁-C₆alkylen)-(CF₂)₂CH₂F, -Q¹-(C₁-C₆alkylen)-(CF₂)₂CH₃, -Q¹-(C₁-C₆alkylen)-(CF₂)₃CHF₂, -Q¹-(C₁-C₆alkylen)-(CF₂)₃CH₂F, -Q¹-(C₁-C₆alkylen)-(CF₂)₃CF₃, -Q¹-(C₁-C₆alkylen)-CF(CF₃)₂, -Q¹-(C₁-C₆alkylen)-CF₂(CHF)CF₃,
wherein one or more C-atom, CH- or CH₂- group is independently from each other not replaced or replaced by a linking group within the above given meaning and preferences; especially a C-atom, CH- or CH₂- group is replaced by -NH-, -NCH₃-, -NH-CO-, -CO-NH-, -NH-CO-O-, -O-CO-NH-, -NH-CONH-, -NCH₃-, NCH₃-CO-, -CO-NCH₃-, -NCH₃-CO-O-, -O-CO-NCH₃-, -NCH₃-CONCH₃-, -O-, -CO, -CO-O-, -O-CO-, -CH=CH-, -C≡C-, -O-CO-O-, or an unsubstituted or substituted cyclohexylen or phenylene;
wherein -Q¹- has the meaning and preferences given above,
R² and R³ are independently from each other each independently from each other represents hydrogen, fluorine, chlorine, nitrile, unsubstituted or with fluorine substituted C₁-C₁₂alkyl, in which one or more C-atom, CH- or CH₂- group may be replaced by a linking group; preferably hydrogen, nitrile or F, and more preferably hydrogen;
X is a bivalent aromatic group, such as phenylene, especially 1,4-phenylene; or X is -CH₂-, -CO-, -CS-, -O(CO)-, -(CO)O-, -NH(CO)-, -(CO)NH-, -OCF₂-, ((C₁-C₆alkyl)- N)CO-, preferably ((CH₃)N)CO-, or -S(CS)-, -O(CS), -S(CO)- preferably -O(CO)-.

More preferred is a photoalignment material, comprising a polymer having in a side chain preferably in a mono- or multichromophoric, especially in a bichromophoric side chain, at least one lateral-substituted portion represented by formula (III) 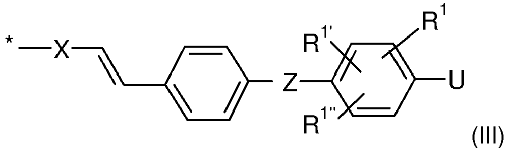 wherein
X , Z and U have the meanings and preferences as described above,
R¹ representschlorine, fluorine or nitrile and more preferably fluorine;
R^{1'} and R^{1"} have independently from each other the meaning of hydrogen, fluorine, C₁-C₆alkoxy, nitrile and/or chlorine or U; preferably hydrogen methoxy, fluorine or chlorine and more preferably hydrogen or fluorine.

Further, the present invention relates to a compound, especially a monomeric compound, comprising at least one lateral-substituted portion represented by formula (I), and preferably represented by (II) and more preferably represented by (III) as described above and with all preferences given above; and a polymerizable group.

In the context of the present invention the wording "polymerisable group" represents an unsubstituted or substituted aliphatic, aromatic or alicyclic polymerizable group, wherein "an unsubstituted or substituted aliphatic" group is C₁-C₃₀alkyl, in which one or more C-atoms, CH- or CH₂- group may be replaced by a linking group; and wherein "an unsubstituted or substituted aromatic group" or "alicyclic group have the meanings and preferences as given above.

In the context of the present invention the wording "polymerisable group" is not particularly limited and represents preferably amine, diamine, acrylate, methacrylate, 2-chloroacrylate, 2-phenylacrylate, acrylamide, methacrylamide, 2-chloroacrylamide, 2-phenyl-acrylamide, N-(C₁-C₆)alkyl substitutefd acrylamide-, N-(C₁-C₆)alkyl substituted methacrylamide, N-(C₁-C₆)alkyl substituted 2-chloroacrylamide, N-(C₁-C₆)alkyl substituted 2-phenylacrylamide, vinyl ether, vinyl ester, styrene, vinyl, carboxylic acid, carboxylic halogenid, carbonyl, siloxane, hydroxy, halogenid, norbornene or a mixture thereof. Preferred polymerisable group is amine, diamines, vinyl, acrylate or methacrylate, and more preferred is diamine group and more preferred a unsubstituted or substituted aliphatic, aromatic or alicyclic diamine group, and most preferred an aromatic diamine group comprising a phenyl group.

Especially most preferred is a compound represented by formula (IV) 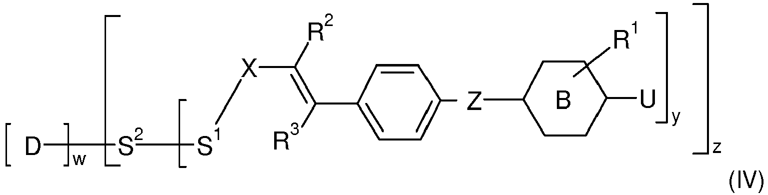 wherein
B represents an unsubstituted or substituted benzene, phenylene, pyridine, triazine, pyrimidine, biphenylene, naphthalene, phenanthrene, triphenylene, tetraline, preferably phenylene, or an alicyclic group selected from cyclopropane, cyclobutane, cyclopentane, cyclopentene, cyclohexane, cyclohexene, cyclohexadiene, decaline, tetrahydrofuran, dioxane, pyrrolidine, piperidine and a steroidal skeleton, preferably cyclohexane or a steroidal skeleton; preferably B is benzene, phenylene, biphenylene or naphthalene, and more preferably B is unsubstituted or substituted phenylene;
R¹ represents fluorine, chlorine or nitrile and more preferably fluorine or chlorine,
R² and R³ are hydrogen and/or nitrile, preferably hydrogen,
X is a bivalent aromatic group, such as phenylene, especially 1,4-phenylene; or X is -CH₂-, -CO-, -CS-, -O(CO)-, -(CO)O-, -NH(CO)-, -(CO)NH-, -OCF₂-, ((C1-C₆alkyl)-N)CO-, -(C₁-C₁₆alkylen)(CO)O-, -(C₁-C₁₆alkylen)O(CO)-, -(CO)O(C₁-C₁₆alkylen)-, -O(CO)(C₁-C₁₆alkylen)-, -O(C₁-C₁₆alkylen)-, -(C₁-C₁₆alkylen)O-, ((CH₃)N)CO-, or -S(CS)-, -O(CS), -S(CO) preferably 1,4-phenylene, O(CS), -S(CO), -CS-, -CO- or -O(CO)-, and more preferably -CO- or -O(CO)- or 1,4-phenylene;
Z represents -COO-, -OCO-, -OCF₂-, -CF₂O-,-(C₁-C₁₆alkylen)(CO)O-, -(C₁-C₁₆alkylen)O(CO)-, -(CO)O(C₁-C₁₆alkylen)-, -O(CO)(C₁-C₁₆alkylen)-, -O(C₁-C₁₆alkylen)-, -(C₁-C₁₆alkylen)O-, -CON(CH₃)-, -(CH₃)NCO-, -CONH-, -NHCO-, -OCH₂-, -CH₂O-, or a single bond, preferably -COO-, -OCO-, OCH₂-,-OCF₂-, -CF₂O-,-CH₂O-, or a single bond, especially -OCO-, OCH₂- or a single bond,
U is hydrogen, -CF₃ -CF₂H, -CH₂F, -Q¹-(C₁-C₆alkylen)-CF₃, -Q¹-(C₁-C₆alkylen)-CF₂H, -Q¹-(C₁-C₆alkylen)-CH₂F, -Q¹-(C₁-C₆alkylen)-CF₂CF₃, -Q¹-(C₁-C₆alkylen)-CF₂CHF₂, -Q¹-(C₁-C₆ alkylen)-CF₂CH₂F, -Q¹-(C₁-C₆alkylen)-CFHCF₃, -Q¹-(C₁-C₆alkylen)-CFHCHF₂, -Q¹-(C₁-C₆ alkylen)-CFHCH₂F, -Q¹-(C₁-C₆alkylen)-CF₂CH₃, -Q¹-(C₁-C₆alkylen)-CFHCHF₂, -Q¹-(C₁-C₆ alkylen)-(CF₂)₂CF₃, -Q¹-(C₁-C₆alkylen)-(CF₂)₂CHF₂, -Q¹-(C₁-C₆alkylen)-(CF₂)₂CH₂F, -Q¹-(C₁-C₆alkylen)-(CF₂)₂CH₃, -Q¹-(C₁-C₆alkylen)-(CF₂)₃CHF₂, -Q¹-(C₁-C₆alkylen)-(CF₂)₃CH₂F, -Q¹-(C₁-C₆alkylen)-(CF₂)₃CF₃, -Q¹-(C₁-C₆alkylen)-CF(CF₃)₂, -Q¹-(C₁-C₆alkylen)-CF₂(CHF)CF₃; wherein one or more C-atom, CH- or CH₂- group is independently from each other not replaced or replaced by a linking group within the above given meaning and preferences; especially a C-atom, CH- or CH₂- group is replaced by -NH-, -NCH₃-, -NH-CO-, -CO-NH-, -NH-CO-O-, -O-CO-NH-, -NH-CONH-, -NCH₃-, NCH₃-CO-, -CO-NCH₃-,-NCH₃-CO-O-, -O-CO-NCH₃-, -NCH₃-CONCH₃-, -O-, -CO, -CO-O-, -O-CO-, -CH=CH-, -C≡C-, -O-CO-O- or an unsubstituted or substituted cyclohexylen or phenylene;
   wherein
Q¹ represents a single bond or -NH-, -NCH₃-, -NH-CO-, -CO-NH-, -NH-CO-O-, -O-CO-NH-, -NH-CONH-, -O-, -CO-, -COO-, -OCO-, -S-, -CS-, -SCS-, -SCO-, -CH=CH-, -C≡C- or -O-CO-O-, preferably Q¹ is -O-, -CO-, -COO-, -OCO- or a single bond, more preferably -O- or a single bond;
D represents an unsubstituted or substituted aliphatic, aromatic or alicyclic polymerizable group, preferably a diamine group having from 1 to 40 carbon atoms, more preferably D is an aromatic polymerizable group, most preferably an aromatic polymerizable diamine group;
y and z are each independently from each other 1, 2, 3 or 4, preferably 1 or 2; more preferably y is 2 and z is 1; or z is 2 and y is 1; and further more preferably y and z are 1;
w is 1,2,3,4 and preferably 1 or 2, more preferably w is 1;
further most preferably w is 1 and y is 2 and z is 1; and z is 2 and y is 1; or further most preferably w is 1 and y and z are 1; especially most preferably w is 1 and y is 2 and z is 1; and z is 2 and y is 1;
S¹ and S² each independently from each other represents a single bond or a spacer unit, which is a cyclic, straight-chain or branched, substituted or unsubstituted C₁-C₂₄alkylen, preferably C₁-C₁₂alkylen, more preferably C₁-C₆alkylen, such as methylen, ethylene, straight chain or branched propylene, butylene, pentylene or hexylene, in which one or more, preferably non-adjacent, C-atom, CH- or CH₂-group may be replaced by at least one linking group;
   wherein the linking group is preferred a single bond, -O-, -O(CO), -S-, -(CO)O-, -C≡C-, or 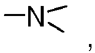 -NR²- and more preferably is a single bond, -O-, -O(CO) or -(CO)O- and most preferred by -O-; and wherein the substituent of C₁-C₂₄alkylen is preferably at least one C₁-C₆alkyl, preferably methyl; and/or
   a non-aromatic, aromatic, unsubstituted or substituted carbocyclic or heterocyclic group of formula (V):

      -(Z^{1a'})_{a3'}-(Z¹-C¹)ₐ₁-(Z²-C²)ₐ₂-(Z^{1a})ₐ₃- (V)

      wherein:
      C¹, C² each independently represents an alicyclic or aromatic, unsubstituted or substituted carbocyclic or heterocyclic group, preferably C¹ and C² are connected at the opposite positions via Z¹ ,Z², Z^{1a} and/or Z^{1a'} so that groups S¹ and/or S² have a long molecular axis, and
         Z¹, Z², Z^{1a}, Z^{1a'} each independently represents a bridging group within the above given meanings and preferences, and
      a₁, a_{3'}, a₂, a₃ each independently represents an integer from 0 to 3, such that a₁ + a_{3'} + a₂ + a₃ ≤ 6, preferably a₃ and or a_{3'} is 1 and a₁ + a₂ ≤ 4,
most preferred S¹ and S² each independently from each other represent a single bond or a straight-chain or branched, substituted, or unsubstituted C₁-C₁₂alkylen, preferably C₁-C₆alkylen, especially C₁-C₂alkylen, and further especially C₄-C₁₂alkylen; and in which one or more, preferably non-adjacent, C-atom, CH- or CH₂- group may be replaced by at least one linking group, wherein the linking group is preferred a single bond, -O-, -O(CO), -S-, -(CO)O-, -C=C-, or 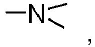 -NR²- and more preferred is a single bond, -O-, -O(CO)- or -(CO)O- and most preferred by -O-; especially most preferably S¹ and S² are together a single bond or a straight-chain or branched, substituted, or unsubstituted C₁-C₁₂alkylen, preferably C₁-C₆alkylen, especially C₁-C₂alkylen, and further especially C₄-C₁₂alkylen.

More especially most preferred is a compound of formula (IVa) 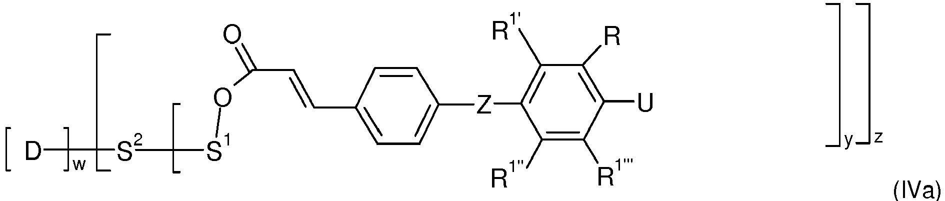 wherein
D represents an unsubstituted or substituted aliphatic, aromatic or alicyclic polymerizable group, preferably a diamine group having from 1 to 40 carbon atoms, more preferably D is an aromatic polymerizable group, most preferably an aromatic polymerizable diamine group;
w, y and z, and S¹ and S² and U have the above given meanings and preferences;
R is hydrogen or halogen, C₁-C₁₆alkoxy, C₁-C₁₆alkyl, nitro or nitrile, preferably methoxy, fluorine, chlorine or nitrile and more preferably fluorine, chlorine or methoxy,
R^{1'}, R^{1"} and R^{1'"} have independently from each other the meaning of hydrogen, fluorine, nitrile and/or chlorine or U; with the proviso that at least one R, R^{1'}, R^{1"} or R^{1'"} is not hydrogen; preferably R^{1'}, R^{1"} and R^{1'"} are hydrogen and R is fluorine or methoxy;
further more preferred R^{1"} and R^{1'"} are hydrogen and R is fluorine or chlorine and
R^{1'} is fluorine or chlorine, or R^{1'} is fluorine and R is hydrogen; or
further more preferred R^{1"} and R^{1'} are hydrogen and R and R^{1'"} are fluorine;
   - Z: represents a bridging group having the meaning and preferences as given above; especially most preferred is a compound of formula (IVa), wherein if y, z and w are 1 and S¹ represents butylene, pentylene or hexylene and S² has the same meaning and preferences as for the especially most preferred compound of formula (IV).

In the context of the present invention in a a preferred embodiment,
D represents unsubstituted or substituted aliphatic, aromatic or alicyclic diamine group having from 1 to 40 carbon atoms, more preferably D is an aromatic polymerizable group;
D is preferably selected from formula (VI):

H(R⁵)N-(Sp¹)ₖ₁-(X⁴)ₜ₁-(Z⁴⁻C⁴)ₐ₄-(Z⁵⁻C⁵)ₐ₅-(X⁵)t₂-(Sp²)ₖ₂- N(R⁴)H (VI)

wherein:
- R⁴, R⁵: each independently from each other represents a hydrogen atom or C₁-C₆alkyl;
- Sp¹, Sp²: each independently from each other represents an unsubstituted or substituted straight-chain or branched C₁-C₂₄alkylene, in which one or more -CH₂-group may independently from each other be replaced by a linking group, and
- k¹, k²: each independently is 0 or 1, preferably 0; and
- X⁴, X⁵: each independently represents -O-, -S-, -NH-, -N(CH₃)-, -CH(OH)-, -CO-, -CH₂(CO)-, -SO-, -CH₂(SO)-, -SO₂-, -CH₂(SO₂)-, -COO-, -OCO-, -OCO-O-, -S-CO-, -CO-S-, -SOO-, -OSO-, -SOS-, -CH₂-CH₂-, -OCH₂-, -CH₂O-, -CH=CH-, or -C≡C- or a single bond, preferably a single bond; and
- t¹, t²: each independently is an integer having a value of 0 or 1; and
- C⁴, C⁵: each independently represents a non-aromatic, aromatic, substituted or unsubstituted carbocyclic or heterocyclic group, which may have a side chain T preferably unsubstituted or substituted phenylen, and
- Z⁴ and: Z⁵ represent independently from each other a single bond or substituted or unsubstituted straight-chain or branched C₁-C₂₄alkylene group, in which one or more C-atom, CH- or CH₂- group may independently from each other be replaced by a non-aromatic, aromatic, unsubstituted or substituted carbocyclic or heterocyclic group; and/or a heteroatom and/or by a -O-, -CO-, -COO-, -OCO-, -OCF₂-, -CF₂O-, -CON(CH₃)-, -(CH₃)NCO-, -CONH-,-NHCO-, -CO-S-, -S-CO-, -CS-S-,-SOO-,-OSO-, -CH₂(SO₂)-,-CH₂-CH₂-, -OCH₂-, -CH₂O, -CH=CH-, -C≡C-, -CH=CH-COO-, -OCO-CH=CH-; preferably, Z⁴ is a single bond and Z⁵ represents an unsubstituted or substituted straight-chain or branched C₁-C₁₄alkylene group, C₁-C₃alkylene in which one or more, preferably non-adjacent, - C-atom, CH- or CH₂- group may be replaced by an oxygen or nitrogen atom and/or one or more carbon-carbon single bond is replaced by a carbon-carbon double or a carbon-carbon triple bond; and
- a₄, a₅: are independently from each other 0,1,2 or 3, such that a₄ + a₅ ≤ 4, preferably a4 and a5 are independently from each other 0 or 1, and more preferably at least one a4 or a5 is 1 and most preferably a4 and a5 is 1; and wherein
- D: is at least once linked to at least one spacer group S² and/or S¹; and/or linked via at least one Sp¹, Sp², C⁴, C⁵ and/or Z⁴; Z⁵ and wherein at least one of k¹, k², a⁴ and a⁵ is not equal to zero.

More preferably, D is selected from formula (VI), wherein:
C⁴, C⁵ independently from each other are selected from a compound of group G², wherein group G² denotes:

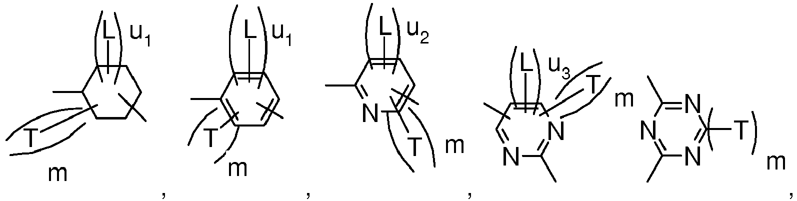

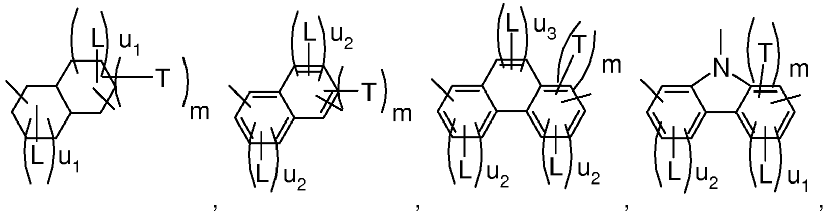

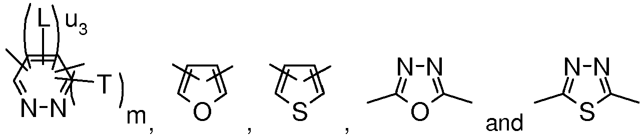

More preferred G² denotes 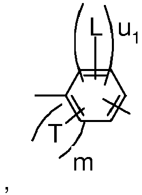 wherein
- "-": denotes the connecting bonds of C⁴ and C⁵ to the adjacent groups of compound of formula (VI) as described above; and
- L: is hydrogen, -CH₃, -COCH₃, -OCH₃, nitro, nitrile, halogen, -CH₂=CH-, -CH₂₌C(CH₃)-, -CH₂=CH-(CO)O-, -CH₂=CH-O-, -NR⁵R⁶ , -CH₂=C(CH₃)-(CO)O-, -CH₂=C(CH₃)-O-,wherein:
- R⁵, R⁶: each independently from each other represents a hydrogen atom or C₁-C₆alkyl;
- T: represents a substituted or unsubstituted straight-chain or branched C₁-C₂₄alkylene group, in which one or more C-atom, CH- or CH₂- group may independently from each other be replaced by a non-aromatic, aromatic, unsubstituted or substituted carbocyclic or heterocyclic group, or a heteroatom and/or by a bridging group, preferably T is hydrogen;
- m: is an integer from 0 to 2; preferably 1 or 0; and more preferably 0;
- u₁: is an integer from 0 to 4, preferably 0 with the proviso that m + u₁ is ≤4; and
- u₂: is an integer from 0 to 3, preferably 0; with the proviso that m + u₂ is ≤3; and
- u₃: is an integer from 0 to 2, preferably 0; with the proviso that m + u₃ is ≤2.

The diamine group D of the present invention is especially more preferably selected from radicals of the following structure: substituted or unsubstituted o-phenylenediamine, p-phenylene-diamine, m-phenylenediamine, biphenyldiamine, aminophenylen-Z⁵-phenylenamino, wherein Z⁵ has the same meaning and preferences as given above; naphthylenediamine, benzidine, diaminofluorene, 3,4-diaminobenzoic acid, 3,4-diaminobenzyl alcohol dihydrochloride, 2,4-diaminobenzoic acid, L-(+)-threo-2-amino-1-(4-aminophenyl)-1,3-propanediol, p-aminobenzoic acid, [3,5-3h]-4-amino-2-methoxybenzoic acid, L-(+)-threo-2-(N,N-dimethylamino)-1 -(4-aminophenyl)-1,3-propanediol, 2,7-diaminofluorene, 4,4'-diaminooctafluorobiphenyl, 3,3'-diaminobenzidine, 2,7-diamino-9-fluorenone, 3,5,3',5'-tetrabromo-biphenyl-4,4'-diamine, 2,2'-dichloro[1,1 '-biphenyl]-4,4'-diamine, 3,9-diamino-1,11 -dimethyl-5,7-dihydro-dibenzo(a,c)cyclohepten-6-one, dibenzo(1,2)dithiine-3,8-diamine, 3,3'-diaminobenzophenone, 3,3'-diaminodiphenylmethane, 4,4-bis-(3-amino-4-hydroxyphenyl)-valeric acid, 2,2-bis(3-amino-4-hydroxyphenyl)hexafluoropropane, 2,2-bis(3-amino-4-methylphenyl)hexafluoropropane, tetrabromo methylenedianiline, 2,7-diamino-9-fluorenone, 2,2-bis(3-aminophenyl)-hexafluoropropane, bis-(3-amino-4-chloro-phenyl)-methanone, bis-(3-amino-4-dimethylamino-phenyl)-methanone, 3-[3-amino-5-(trifluoromethyl)benzyl]-5-(trifluoromethyl)aniline, 1,5-diaminonaphthalene, benzidine-3,3'-dicarboxylic acid, 4,4'-diamino-1,1'-binaphthyl, 4,4'-diaminodiphenyl-3,3'-diglycolic acid, dihydroethidium, o-dianisidine, 2,2'-dichloro-5,5'-dimethoxybenzidine, 3-methoxybenzidine, 3,3'-dichlorobenzidine (diphenyl-d6), 2,2'-bis(trifluoromethyl)benzidine, 3,3'-bis(trifluoromethyl)benzidine, 3,3'-dichloro-benzidine-d6, tetramethylbenzidine, di-(aminophenyl)alkylen, and
the diamine group D is further selected from radicals from amino compounds listed below, which do not carry two amino groups and are taken as derivatives with at least one additional amino group:
aniline, 4-amino-2,3,5,6-tetrafluorobenzoic acid, 4-amino-3,5-diiodobenzoic acid, 4-amino-3-methylbenzoic acid, 4-amino-2-chlorobenzoic acid, 4-aminosalicylic acid, 4-aminobenzoic acid, 4-aminophthalic acid, 1-(4-aminophenyl)ethanol, 4-aminobenzyl alcohol, 4-amino-3-methoxybenzoic acid, 4-aminophenyl ethyl carbinol, 4-amino-3-nitrobenzoic acid, 4-amino-3,5-dinitrobenzoic acid, 4-amino-3,5-dichlorobenzoic acid, 4-amino-3-hydroxybenzoic acid, 4-aminobenzyl alcohol hydrochloride, 4-aminobenzoic acid hydrochloride, pararosaniline base, 4-amino-5-chloro-2-methoxybenzoic acid, 4-(hexafluoro-2-hydroxyisopropyl)aniline, piperazine-p-amino benzoate, 4-amino-3,5-dibromobenzoic acid, isonicotinic acid hydrazide p-aminosalicylate salt, 4-amino-3,5-diiodosalicylic acid, 4-amino-2-methoxybenzoic acid, 2-[2-(4-aminophenyl)-2-hydroxy-1-(hydroxymethyl)ethyl]isoindoline-1 ,3-dione, 4-amino-2-nitrobenzoic acid, ethyl 2-(4-aminophenyl)-3,3,3-trifluoro-2-hydroxypropanoate, ethyl 2-(4-amino-3-methylphenyl)-3,3,3-trifluoro-2-hydroxypropanoate, ethyl 2-(4-amino-3-methoxyphenyl)-3,3,3-trifluoro-2-hydroxypropanoate, 4-aminon-aphthalene-1,8-dicarboxylic acid, 4-amino-3-chloro-5-methylbenzoic acid, 4-amino-2,6-dimethylbenzoic acid, 4-amino-3-fluorobenzoic acid, 4-amino-5-bromo-2-methoxybenzenecarboxylic acid, 3,3'-tolidine-5-sulfonic acid,
or their derivatives, again with the proviso that compounds listed which do not carry two amino groups are taken as derivatives with at least one additional amino group.

More especially more preferred D is o-phenylenediamine, p-phenylene-diamine, m-phenylenediamine, biphenyldiamine, aminophenylen-Z⁵-phenylenamino, wherein Z⁵ has the same meaning and preferences as given above.

The diamine groups D are commercial available or accessible by known methods. The second amino group is accessible for example by substitution reaction.

D is further especially more preferably selected from the group of the following compounds: 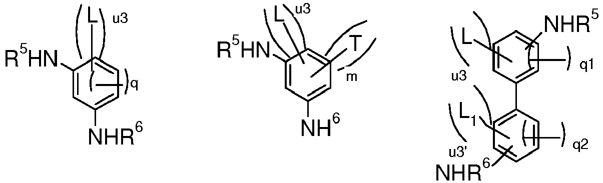 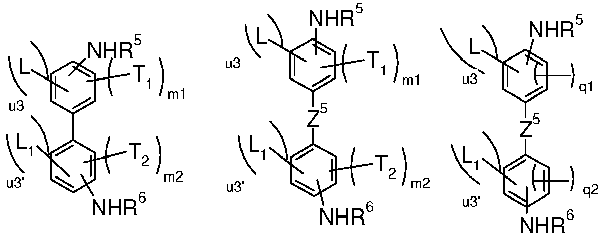 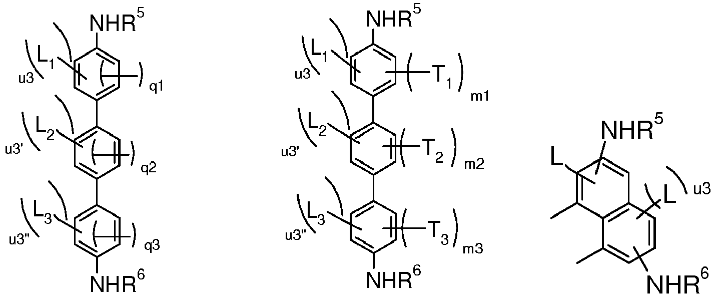 and
more especially further preferred are 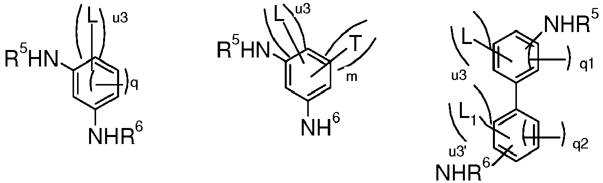 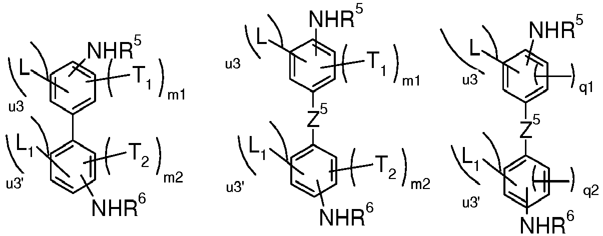 wherein
L, L₁, L₂ and L₃ are independently from each other hydrogen, -CH₃, -COCH₃, -OCH₃, nitro, nitrile, halogen, CH₂=CH-, CH₂=C(CH₃)-, CH₂=CH-(CO)O-, CH₂=CH-O-, -NR⁵R⁶, CH₂=C(CH₃)-(CO)O- or CH₂=C(CH₃)-O-, preferably hydrogen,
T, T₁, T₂ and T₃ are independently from each other a single bond or a substituted or unsubstituted straight-chain or branched C₁-C₂₄alkylene group, in which one or more C-atom, CH- or CH₂- group may independently from each other be replaced by a non-aromatic, aromatic, unsubstituted or substituted carbocyclic or heterocyclic group, and/or a heteroatom and/or by a linking group;
"-" is a single bond,
q is an integer of 1 or 2; and
q1, q2 and q3 are indepently from each other an integer from 0 to 2; preferably 1 or 2;
m is an integer of 1 or 2;
m1, m2 and m3 are indepently from each other an integer from 0 to 2; preferably 1or 2;
u₃, u_{3'} and u₃" are indepently from each other an integer from 0 to 2;
R⁵, R⁶ and Z⁵ are as described above; preferably Z⁵ is unsubstituted or substituted straight-chain or branched C₁-C₁₄alkylene group, C₁-C₆alkylene, in which one or more, preferably non-adjacent, - C-atom, CH- or CH₂- group may be replaced by an oxygen or nitrogen atom; more preferred Z⁵ is methylen, ethylen, propylen, 2,2-dimethyl-propylen, butylen, pentylen, hexylen, ₂(-O-C₁-C₆alkylen)methylen or ₂(-(CO)O-C1-C₆alkylen)methylen or the mono- or bi-radicals thereof; with the proviso that
D is at least once linked to at least one group S¹ or S² via a single bond "-"; or via a side chain T, T₁, T₂ or T₃; or via group Z⁵;
with the proviso that
u3 + q, or u3 + m is ≤ 4;
u3 + q1 and/or u3' + q2 or/and u3 + m1, or/and u3' + m2, or/and u3" + q3, or/and u3" + m3 is ≤ 4;
q1 + q2, and m1 + m2; and q1 + q2 + q3, and m1 + m2 + m3 is ≥ 1.

Most preferred are diamine compounds according to the invention, wherein D is a selected from the group of the following
compounds: 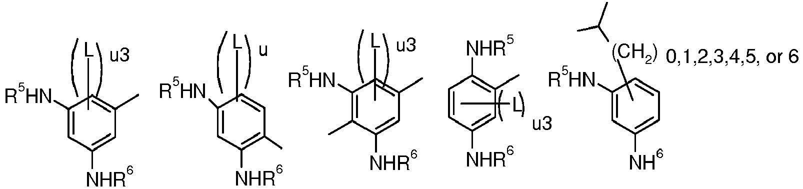 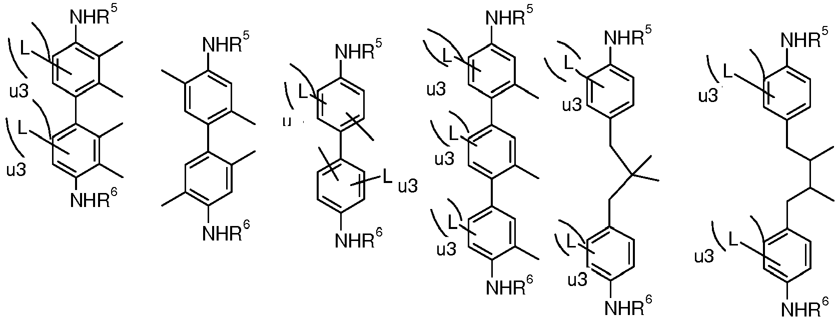 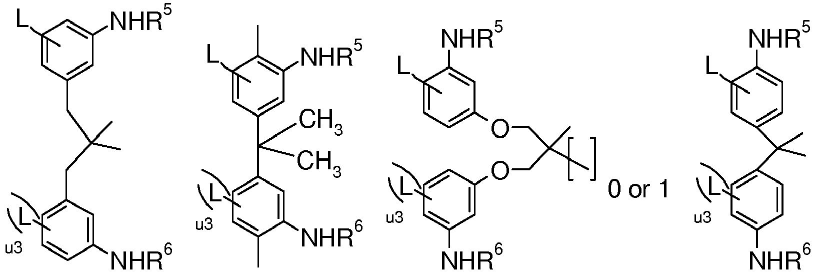 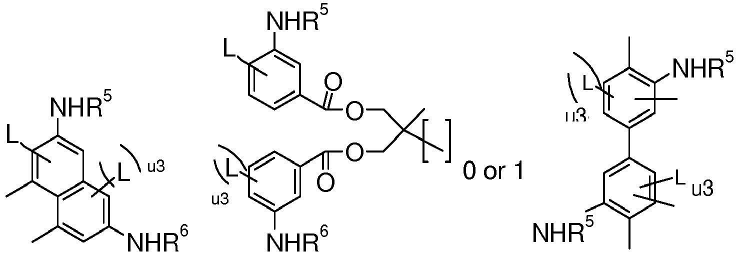 more preferred are 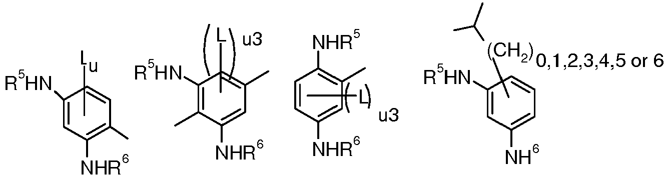 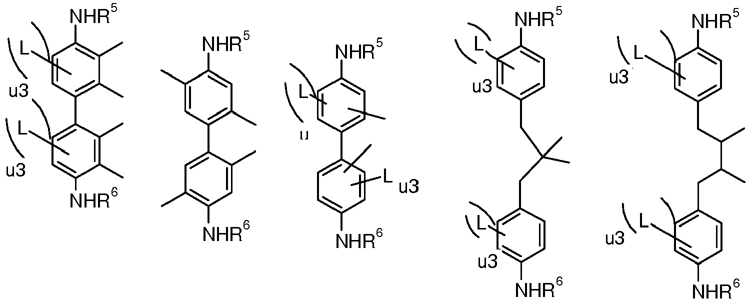 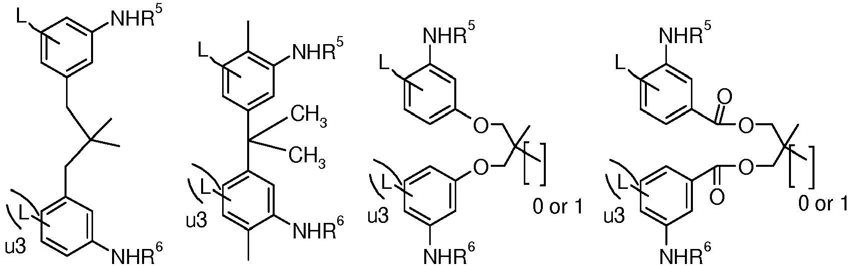
"-" denotes the linking(s) of D to S¹ or S² and represents a single bond; and
L is -CH₃, -COCH₃, -OCH₃, nitro, nitrile, halogen, CH₂=CH-, CH₂=C(CH₃)-, CH₂=CH-(CO)O-, CH₂=CH-O-, -NR⁵R⁶, CH₂=C(CH₃)-(CO)O- or CH₂=C(CH₃)-O-,
   wherein:
   R⁵, R⁶ each independently from each other represents a hydrogen or
   C₁-C₆alkyl, preferably hydrogen;u₃ is an integer from 0 to 2, preferably 0.

Additionally, preferred diamine group D of the present invention relates to diamines of formulae (VII) to (XV): as given below:

H₂N-alkylen-NH₂ (VII),

wherein alkylen is preferably C₁-C₂₄alkylen, which is at least once linked to S¹ or S² or X in
compound of formula (IV) 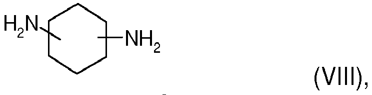 wherein cyclohexylen group is at least once linked to S¹ or S² or X in compound of formula
(IV) 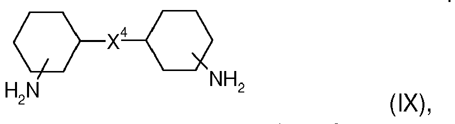 wherein X⁴ or/and cyclohexylen is at least once linked to S¹ or S² or X in compound of formula (IV) 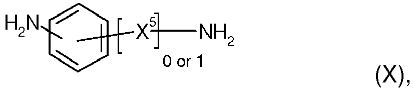 wherein X⁵ or/and at phenylene is at least once linked to S¹ or S² or X in compound of formula (IV)wherein X⁵ is C₁-C₃₀alkyl, 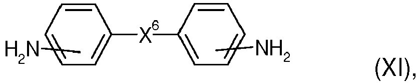 wherein X⁶ or/and phenylene is at least once linked to S¹ or S² or X in compound of formula (IV) 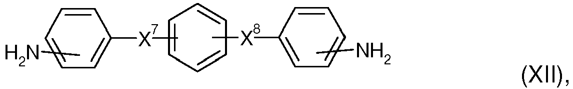 wherein X⁷, X⁸ or/and phenylene is at least once linked to S¹ or S² or X in compound of formula (IV) 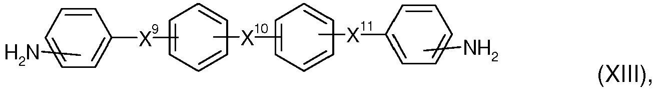 wherein X⁹, X¹⁰, X¹¹ or/and phenylene is at least once linked to S¹ or S² or X in compound of formula (IV) and
wherein X⁴, X⁶, X⁷, X⁸, X⁹, X¹⁰ and X¹¹ are independently from each other a bridging group or a single bond; or diamines of formulae (XIV) selected from the group of compounds given below: 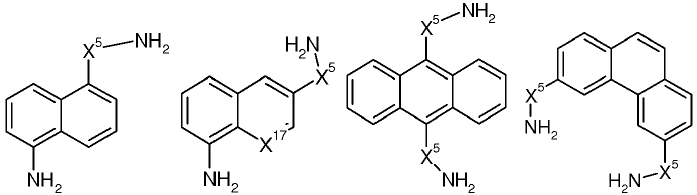 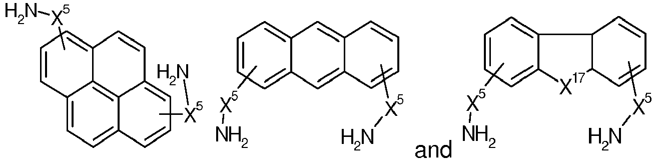 wherein X⁵ has the meaning given above and X¹⁷ is CH₂, O, NH; and which are linked at the aryl group to S¹ or S² or X in compound of formula (IV)
and (XV) 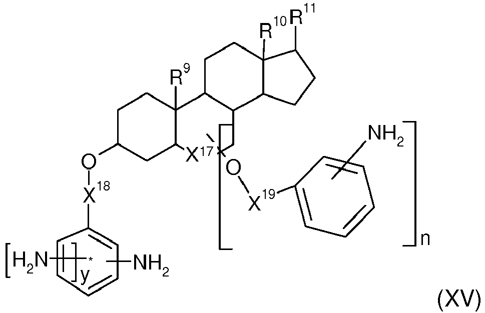 wherein
R⁹, R¹⁰, R¹¹ have independently from each other the above-described meaning, and R⁹ and R¹⁰ are C₁-C₃₀alkyl, and preferably methyl and R¹¹ is 2-methylheptane and n is 0, if y is 1 and y is 0 if n is 1, and y1 is a single or a double bond, and X¹⁸ is carbonyl or a single bond or NH,
wherein X¹⁷ is CH₂, O, NH, and which are linked S¹ or S² or X in compound of formula (IV).

The term "alkylen" as used above in D has the meaning of (C₁-C₂₄)alkylene, preferably (C₁-C₁₂)alkylene, which is branched, straight chain, substituted, unsubstituted, uninterrupted or interrupted by a linking group as defined above, and an alicyclic group, such as cyclohexylen or a C₁₇-C₄₀ alicyclic group, within the meaning and preferences as described above; or -Si(R³)₂- or -O-Si(R³)₂-, wherein R³ represents hydrogen, fluorine, chlorine, nitrile, unsubstituted or with fluorine substituted C₁-C₁₂alkyl, in which one or more C-atom, CH- or CH₂- group may be replaced by a linking group; preferably hydrogen, methyl or fluorine, and more preferably hydrogen;.

Further, preferred in the present invention is diamine group D (XV), wherein X¹² is a substituted or unsubstituted aliphatic, alicyclic group, preferably 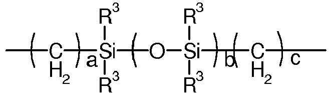 wherein R³ has the same meaning and preferences as given above and a, b and c are independently from each other 1, 2 or 3, and c is an integer from 1 to 20; such as 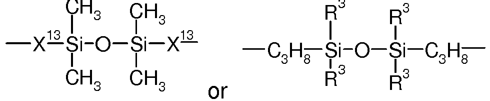 wherein X¹³ is methylen, ethylen, propylene or butylen, and R³ has the same meaning and is preferably methyl, ethyl or propyl.

Further preferred is, the diamine group D (VIII) is on of formula (VIII-1) 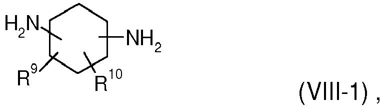 wherein R⁹ and R¹⁰ are independently from each other hydrogen, halogen, hydroxyl, a carbocyclic or heterocyclic non-aromatic group or C₁-C₃₀alkyl, which is branched, straight chain, substituted, unsubstituted, uninterrupted or interrupted as described above and preferably interrupted by a linking group, and more preferably by a carbocyclic or heterocyclic non-aromatic group, such as cyclohexylen or a C₁₇-C₄₀ alicyclic group, and
wherein the cyclohexyl group is linked to S¹ or S² or X in compound of formula (IV).

In addition preferred is the diamine group D (IX-1) 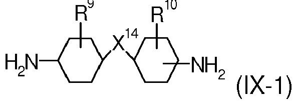 wherein
X¹⁴ is a bridging group or a single bond and preferably -COO-, -CONH-; a single bond, -O-, -S-, methylen, ethylen, propylene, R⁹ and R¹⁰ are independently from each other hydrogen, halogen, hydroxyl, a carbocyclic or heterocyclic non-aromatic group or C₁-C₃₀alkyl;
preferably X¹⁴ is a single bond, or, with CF₃, OCF₃, F, substituted or unsubstituted methylen, ethylen, propylene, butylen or pentylen and R⁹ and R¹⁰ are halogen or substituted or unsubstituted methylen, ethylen, propylene, and wherein at least one cyclohexyl group is linked to S¹ or S² or X in compound of formula (IV).

Further preferred is the diamine D(X-1) 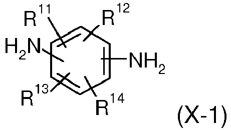 wherein R¹¹, R¹², R¹³ and R¹⁴ are independently from each other hydrogen, halogen, hydroxyl, a carbocyclic or heterocyclic non-aromatic group or C₁-C₃₀alkyl. Preferably C₁-C₃₀alkyl is methyl, ethyl, propyl, butyl, pentyl or hexyl, 1,1'-cyclohexyl, 4-(C₁-C₃₀ alkyl)-cyclohexyl, 3,4"-bis[4'-(C₁-C₃₀alkyl)-1,1'-bi(cyclohexyl)-4-yl], 1,1'-bi(cyclohexyl)-4-yl, 2-pyridine, pyrrolidine-2,5-dione, which is unsubstituted or substituted by CF₃, OCF₃, F, benzyl, pentyl, benzoic acid ester, 4-(phenoxycarbonyl), carboxylic acid, -SO₃H, -PO₃H, -OR¹⁵, wherein R¹⁵ is C₁-C₃₀ alkyl, preferably -C₁₂H₂₅; unsubstituted or substituted benzyl, and wherein the phenyl group is linked to S¹ or S² or X in compound of formula (IV); preferably, the two NH₂ groups of (X-1) are in meta or para position of the phenylene ring; further preferred structures of (X-1) are: 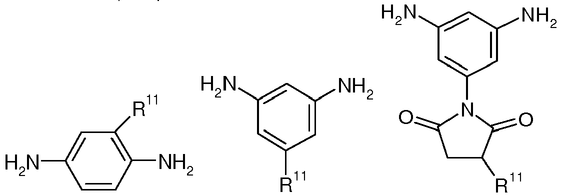 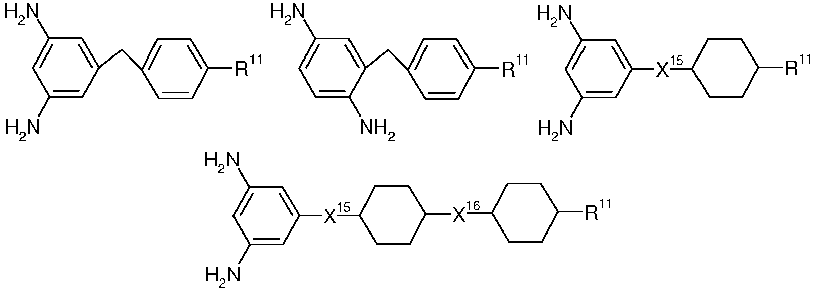
wherein R¹¹ has the meaning and preferences as given above,
X¹⁵ and X¹⁶ are independently from each other a single bond or C₁-C₃₀alkyl, preferably C₁-C₆ alkyl, -COO- and -CONH-; -COO(C₁-C₆alkylene)-, -CONH(C₁-C₆alkylene)-, and wherein at least one phenyl group is linked to S¹ or S² or X in compound of formula (IV).

Further preferred diamine compounds (X) are 1-hexa-decanoxy-2,4-diaminobenzene, 1-octadecanoxy-2,4-diaminobenzene, hexadecanoxy(3,5-diaminonbenzoyl), octadecanoxy(3,5-diaminobenzoyl).

Preferably, the diamine group D (XI) is of formula (XI-1) 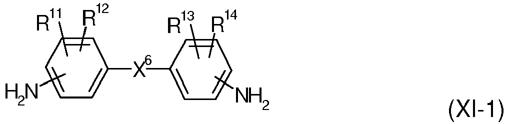
wherein X⁶ has the meaning and preferences as given above, and is preferably for example -O-, -S- or substituted or unsubstituted C₁-C₆alkylen, -O-(CH₂CH₂O)ₙ-; -O-(C₁-C₁₂alkyl)ₙ-O-, -S-(C₁-C₁₂alkyl)ₙ-S-, triazine, 1,3,5-triazinane-2,4,6-trione, 1,1'-cyclohexylene, NR⁵((C₁-C₆alkyl)ₙNR⁶), -(piperidine)ₙ₁-(C-)-C₆alkyl)ₙ-(piperidine)ₙ, wherein ₙ is an integer from 1 to 6, and ₙ₁ are an integer from 0 to 6,
wherein R¹¹, R¹², R¹³ and R¹⁴ have independently from each other the meaning and preferences as given above, and wherein at least one phenyl group or X⁶ is linked to S¹ or S² or X in compound of formula (IV).

Further preferred diamine group D (XI-1) is: 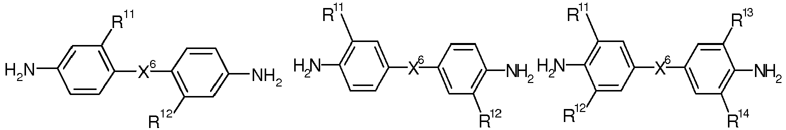 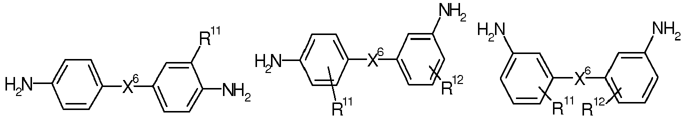 wherein R¹¹ and R¹² are independently from each other have the same meaning as given above, and which are preferably hydrogen, C₁-C₆alkyl, hydroxy, or 4-(C₁-C₃₀alkyl)-cyclohexyl or 3,4"-bis[4'-(C₁-C₃₀ alkyl)-1,1'-bi(cyclohexyl)-4-yl], and wherein at least one phenyl group or X⁶ is linked to S¹ or S² or X in compound of formula (IV).

More preferred are diamine group D (XI) given below: 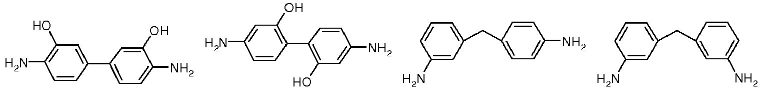 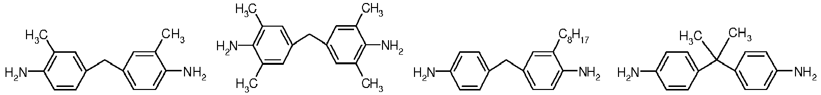 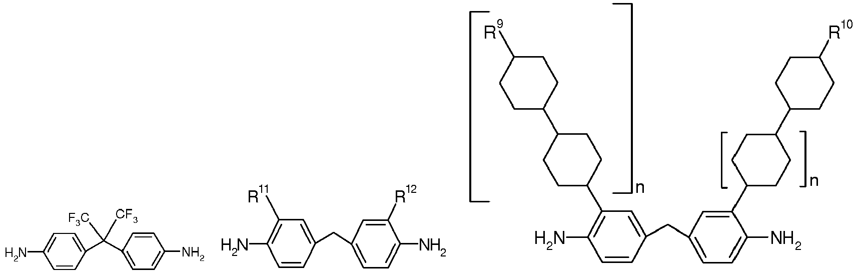 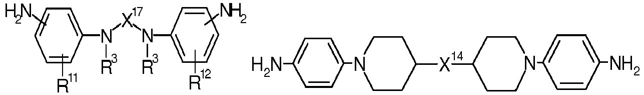
wherein n is independently from each other 0 or 1 and R³, R¹¹, R¹¹, X¹⁴ and X¹⁷ have the same meanings and preferences as given above, and wherein at least one phenyl group or cyclohexyl group or X¹⁷ is linked to S¹ or S² or X in compound of formula (IV);
   and
further more preferred are diamine group (XI) 4,4'-diaminodiphenyl, 4,4'-diaminodiphenyl-3,3'-dimethoxy, 4,4'-diaminodiphenyl-3,3'-dimethyl, 4,4'-diaminodiphenyl-3,3'-dihydroxy, 4,4'-diamino-diphenylmethane, 4,4'-diaminodiphenylsulfide, 4,4'-diamino-diphenylsulfone, 4,4'-diaminodiphenylcarbonyl, 4,4'-diaminodiphenyl oxomethylene, 4,4'-diaminodiphenyl-bis(trifluoromethyl)-methylene, 4,4'-diaminodiphenyl-bis(trifluoromethyl)methylene-3,3'-dimethoxy or 4,4'-diaminodiphenyl-bis(trifluoromethyl)methylene-3,3'-dihydroxy, 4,4'-diaminodiphenyl ether, 4,4'-(p-pheny-leneiso-propylidene)bisaniline, 2,2-bis[4-(4-aminophenoxy)phenyl]-hexafluoro-propane, 2,2'-bis[4-4-amino-2-trifluoro-methyl-phenoxy-)phenyl)hexafluoropropane,4,4'-diamino-2,2'-bis/trifluoromethyl)-biphenyl, 4,4'-bis[4-amino-2-trifluoromethyl)phenoxy]-octafluorobiphenyl.

Preferred are diamine groups D (XII) and (XIII), wherein X⁷ and X⁸, X⁹ and X¹⁰ or X¹¹ are a single bond or C₁-C₃₀alkyl.

Preferably, X⁷ and X⁸, X⁹ and X¹⁰ or X¹¹ are independently from each other a single bond, -O-alkoxy-, such as -O-methylen-, methylen-O-; C₁-C₁₂alkylen such as methylene, ethylen, propylene, butylen, pentylen or hexylen, substituted or unsubstituted 1,1'-cyclohexylene, - SO-, -S-, -SO₂-, -O-, -N(R²⁵)-, -C(CH₃)₂-, -C(CF₃)₂-, 1,1'-cyclohexyl, substituted or unsubstituted 4-(C₁-C₃₀ alkyl)-cyclohexyl, substituted or unsubstituted 3,4"-bis[4'-(C₁-C₃₀alkyl)-1,1'-bi(cyclohexyl)-4-yl], 1,1'-bi(cyclohexyl)-4-yl, wherein
R¹¹ and R¹² are indepently from each other preferably hydrogen, methyl, ethyl, propyl, butyl, pentyl or hexyl;
preferably X¹⁰ is -SO-, -SO₂-, -O-, -N(CH₃)-, -C(CH₃)₂-, -C(CF₃)₂-, 1,1'-cyclohexyl, 4-(C₁-C₃₀ alkyl)-cyclohexyl, 3,4"-bis[4'-(C₁-C₃₀ alkyl)-1,1'-bi(cyclohexyl)-4-yl] or 1,1'-bi(cyclohexyl)-4-yl, and wherein X⁹ and X¹¹ are identical and are methylene, ethylen, propylene, butylen, pentylen, hexylen or-O-;
wherein n is an integer from 0 to 3, preferably, 0 or 1; and
if n is 0 than X⁹ and X¹¹ are identical and are methylene, ethylene, propylene, butylene, pentylene, hexylene, -0-; -S-, -C(CH₃)₂-, -C(CF₃)₂-.

Further preferred diamine group D of (XII) is: 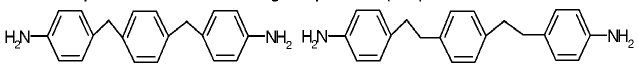 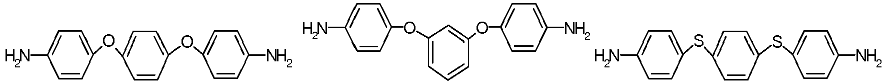 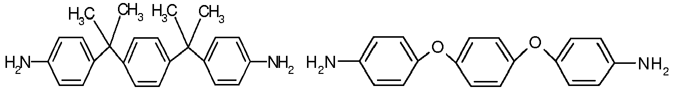 , wherein at least one phenyl group is linked to S¹ or S² or X in compound of formula (IV).

Further preferred diamine group D of (XIII) are: 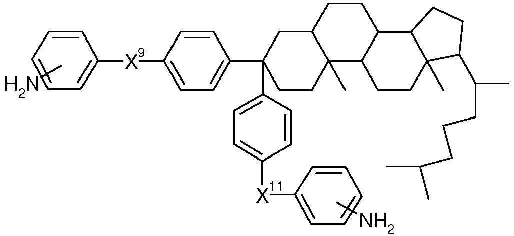 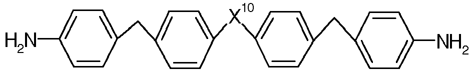 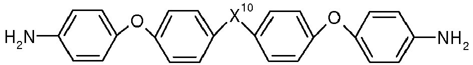 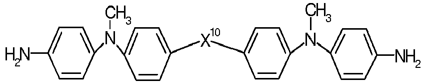 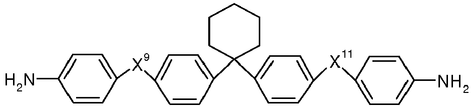 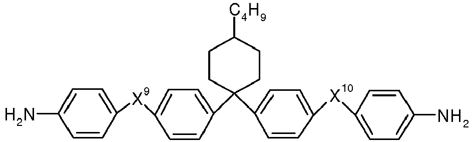 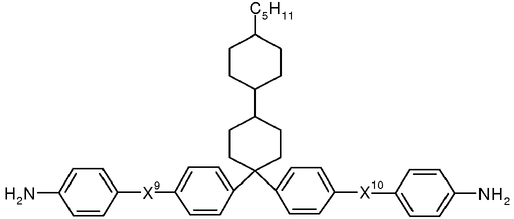 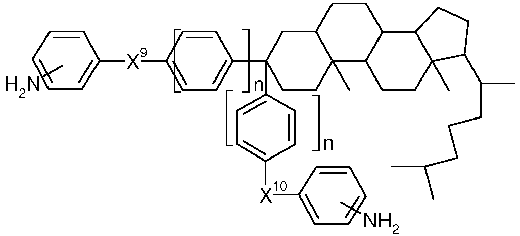 wherein n is 0 or 1, and wherein X⁷ and X⁸, X⁹ and X¹⁰ or X¹¹ have the above given meanings and preferences, and wherein at least one phenyl group or X⁹ or X¹⁰ is linked to S¹ or S² or X in compound of formula (IV).

Preferably the diamine group D (XIV) is 1,5-diaminonaphthalene, 2,7-diaminofluorene.

Preferably the diamine group D (XV) is a compound as given below: 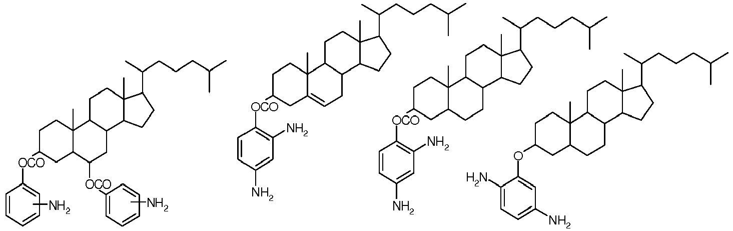 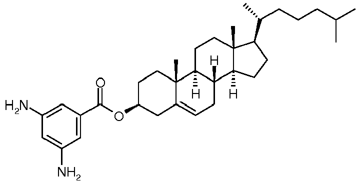 and further, 1-cholesteryl-oxy-2,4-diamino-benzene, 1-cholestanyloxy-2,4-diaminobenzene, cholesteryloxy(3,5-diamino-benzoyl), cholestan-yloxy(3,5-diaminobenzoyl).

Further, incorporated by reference are diamines as described in EP-A-1,818,354 on page 10, lines 48 to 58 and on page 11, lines 1 to 19.

Preferably much more especially most preferred is a compound of formula (XVI), 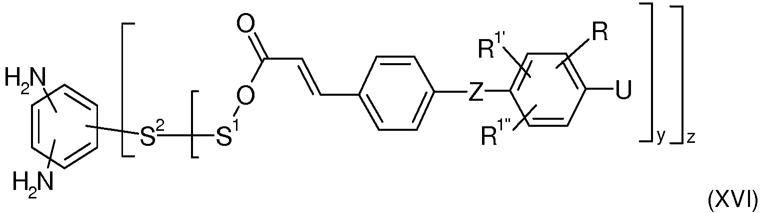 wherein
S¹, S², Z, U, y and z have the above given meanings and preferences as given for compound (IV); and R, R^{1'}, R^{1"} have independently from each other the meaning of hydrogen, fluorine, nitrile and/or chlorine, with the proviso that at least one R, R^{1'} or R^{1"} is not hydrogen;
preferably R, and R^{1'} have the above given meanings and preferences as given for compound (IVa); R^{1"} has the above given meanings and preferences as given for R^{1"} and R^{1'"} in compound (IVa);

Further, more preferably much more especially most preferred is a compound of formulae (XXVc), (XXVd), (XXVe), (XXVf), (XXVg), (XVIIII), (XIX)
and/or a photoalignment material, comprising a polymer having in a side chain at least one lateral-substituted portion represented by formulae (XXVc), (XXVd), (XXVe), (XXVf), (XXVg), (XVIIII), (XIX) 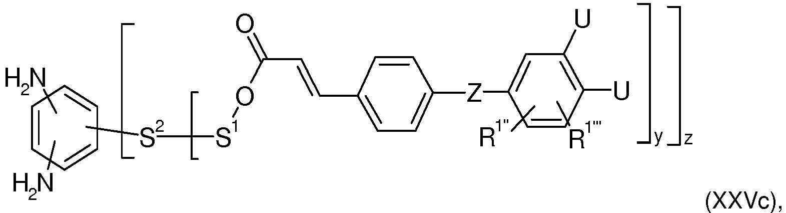 wherein
S¹, S², Z, U, y and z have independently from each other the meanings and preferences as given for compound (IV); and R^{1"}, R^{1'"} have independently from each other the meaning of hydrogen, fluorine, nitrile and/or chlorine or U and preferences as given for compound (IVa), with the proviso that at least one R^{1"} or R^{1'"} is not hydrogen; 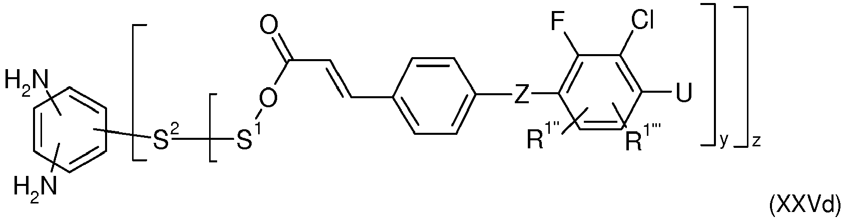 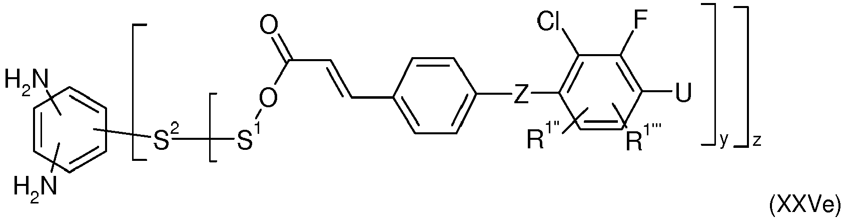 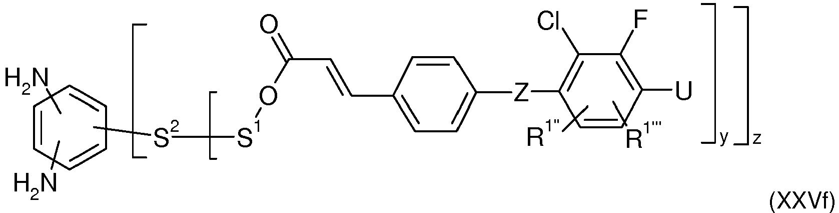 S¹, S², Z, U, y and z have independently from each other the meanings and preferences as given for compound (IV); and R^{1"}, R^{1'"} have the above given meanings and preferences as given for compound (IVa), and preferably have independently from each other the meaning of hydrogen, fluorine, nitrile and/or chlorine or U, preferably of hydrogen; 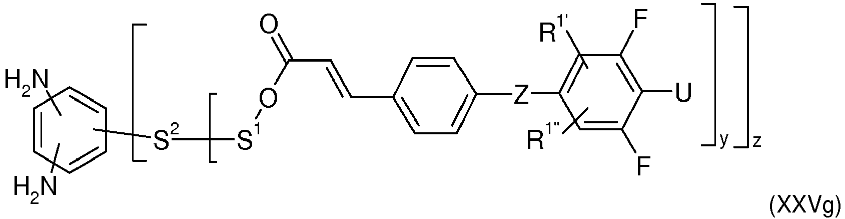 wherein
S¹, S², y, z, Z and U have the above given meanings as described above for (IV) and preferably as described below for (XVIIa), (XVIIb), (XVIIc), (XVIId), (XVIIf) and
R^{1'}, R^{1"} have independently from each other the meaning of hydrogen, fluorine, nitrile and/or chlorine or U, preferably of hydrogen.

Further, preferably much more especially most preferred is a compound of formula (XVIII), 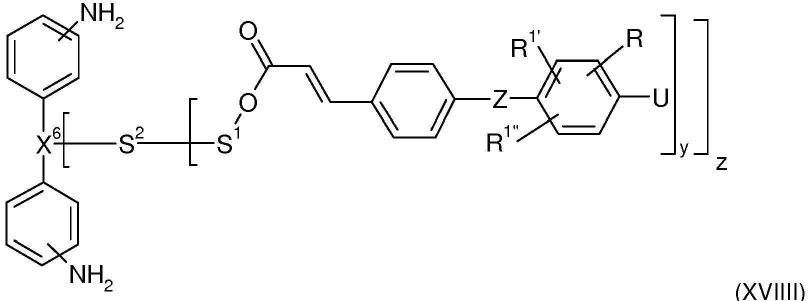
wherein U, S², S¹, Z, y and z have the meanings described above and preferably as described below for (XVIII) or (XIX); and
R, R^{1'}, R^{1"} have independently from each other the meaning of hydrogen, fluorine, nitrile and/or chlorine or U, with the proviso that at least one R^{1'} or R^{1"} is not hydrogen; and wherein X⁶ is a single bond or straight-chain or branched, substituted or unsubstituted C₁-C₆alkylen;

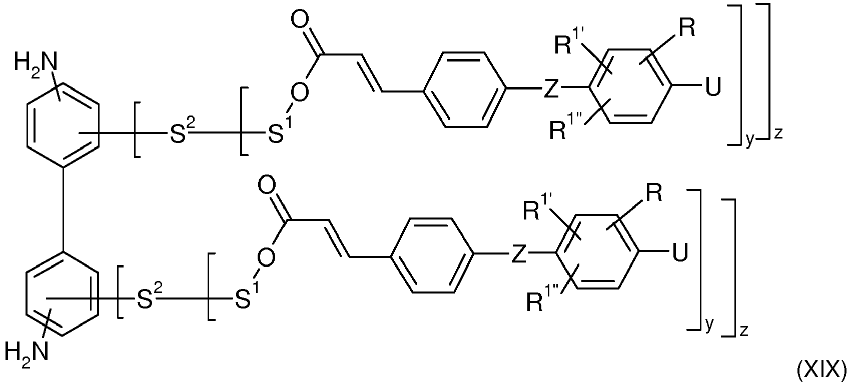

wherein U, S², S¹, Z, y and z have the meanings described above and preferably as described below for (XVIII) or (XIX); and
R, R^{1'}, R^{1"} have independently from each other the meaning of hydrogen, fluorine, nitrile and/or chlorine or U, with the proviso that at least one R, R^{1'}, R^{1"} is not hydrogen; and wherein X⁶ is a single bond or straight-chain or branched, substituted or unsubstituted C₁-C₆alkylen.

Especially preferably much more especially most preferred is a compound of formulae (XVIIa) 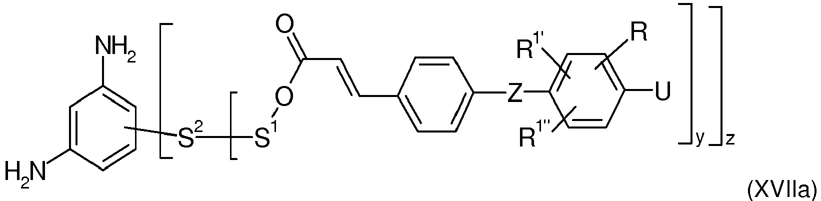 wherein
S¹, S², R¹, R^{1'}, R^{1"}, Z and U have the above given meanings and preferences; and
y and z are each independently from each other 1, 2, 3 or 4, preferably 1 or 2; more preferably y is 2 and z is 1; or z is 2 and y is 1; and further more preferably y and z are 1;
   or
R¹, R^{1'}, R^{1"}, Z and U have the above given meanings and preferences; and
S¹ and S² each independently from each other represent a single bond or a straight-chain or branched, substituted, or unsubstituted C₁-C₁₂alkylen, preferably C₁-C₆alkylen, especially C₁-C₂alkylen, and further especially C₄-C₁₂alkylen; and in which one or more, preferably non-adjacent, C-atom, CH- or CH₂-, group may be replaced by at least one linking group, wherein the linking group is preferred a single bond, -O-, -O(CO), -S-, -(CO)O-, -C≡C-, or 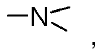 -NR²- and more preferably by preferred is a single bond, -O-, -O(CO) or -(CO)O- and most preferred by -O-; especially most preferably S¹ and S² are together a single bond or a straight-chain or branched, substituted, or unsubstituted C₁-C₁₂alkylen, preferably C₁-C₆alkylen, especially C₁-C₂alkylen, and further especially C₄-C₁₂alkylen;
further
especially preferably much more especially most preferred is a compound of formulae (XVIIb) or (XVIIc) 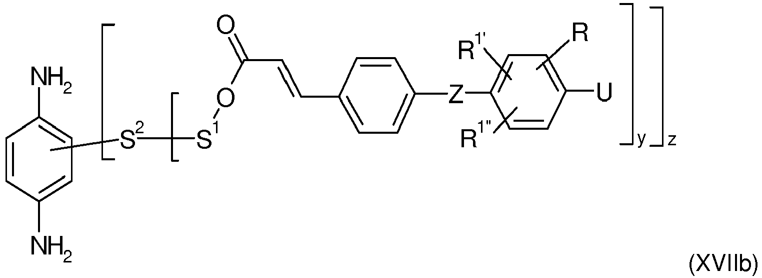 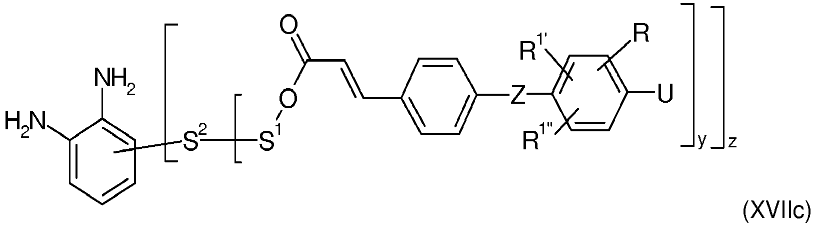 wherein
S¹, S², y, z, R¹, R^{1'}, R^{1"}, Z and U have the above given meanings and preferences; and
more especially preferably much more especially most preferred is a compound of formulae (XVIId) and (XVIIe) 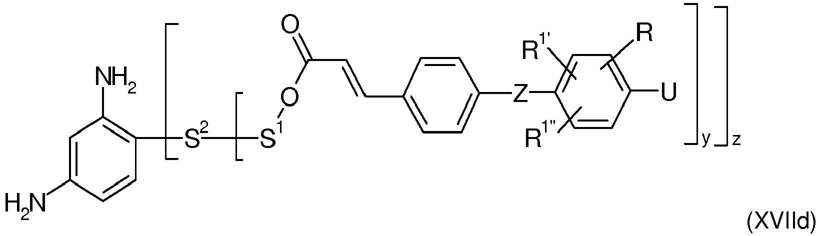 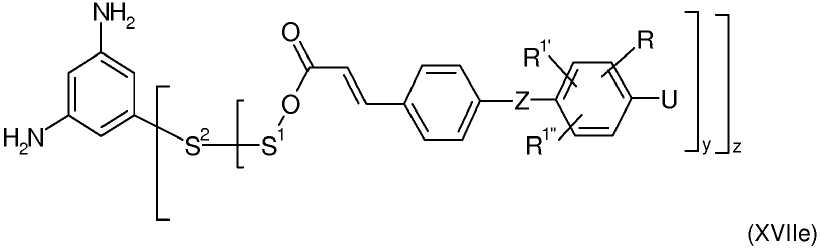 wherein
S¹, S², R¹, R^{1'}, R^{1"}, Z and U have the above given meanings and preferences; and
y and z are each independently from each other 1, 2, 3 or 4, preferably 1 or 2; more preferably y is 2 and z is 1; or z is 2 and y is 1; and further more preferably y and z are 1; most preferred S¹ and S² each independently from each other represent a single bond or a straight-chain or branched, substituted, or unsubstituted C₁-C₁₂alkylen, preferably C₁-C₆alkylen, especially C₁-C₂alkylen, and further especially C₄-C₁₂alkylen; and in which one or more, preferably non-adjacent, C-atom, CH- or CH₂-, group may be replaced by at least one linking group, wherein the linking group is preferred a single bond, -O-, -O(CO), -S-, -(CO)O-, -C≡C-, or 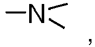 -NR²- and more preferably by preferred is a single bond, -O-, -O(CO) or -(CO)O- and most preferred by -O-;especially most preferably S¹ and S² are together a single bond or a straight-chain or branched, substituted, or unsubstituted C₁-C₁₂alkylen, preferably C₁-C₆alkylen, especially C₁-C₂alkylen, and further especially C₄-C₁₂alkylen;
or
further, more especially preferably much more especially most preferred is a compound of (XVIIf) 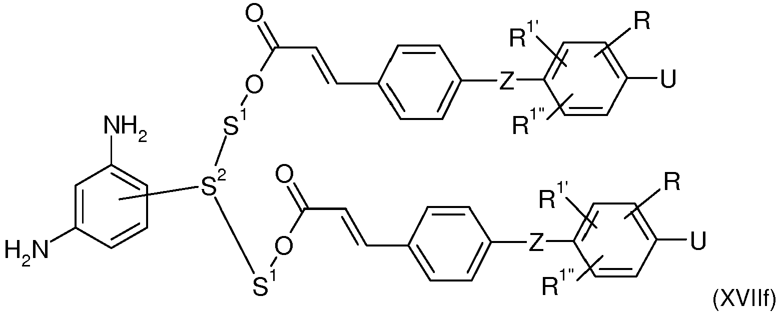 wherein
R¹, R^{1'}, R^{1"}, Z and U have the above given meanings and preferences; and
most preferred S² each independently from each other represent a single bond or a straight-chain or branched, substituted, or unsubstituted C₁-C₁₂alkylen, preferably C₁-C₆alkylen, especially C₁-C₂alkylen; and in which one or more, preferably non-adjacent, C-atom, CH- or CH₂- group may be replaced by at least one linking group, wherein the linking group is preferred a single bond, -O-, -O(CO), -S-, -(CO)O-, -C≡C-, or 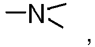 -NR²- and more preferably by preferred is a single bond, -O-, -O(CO) or -(CO)O- and most preferred by -O-;especially most preferably S¹ and S² are together a single bond or a straight-chain or branched, substituted, or unsubstituted C₁-C₁₂alkylen, preferably C₁-C₆alkylen, especially C₁-C₂alkylen, and further especially C₄-C₁₂alkylen;
or
further, more especially preferably much more especially most preferred is compound of formulae (XVIII) or (XIX) 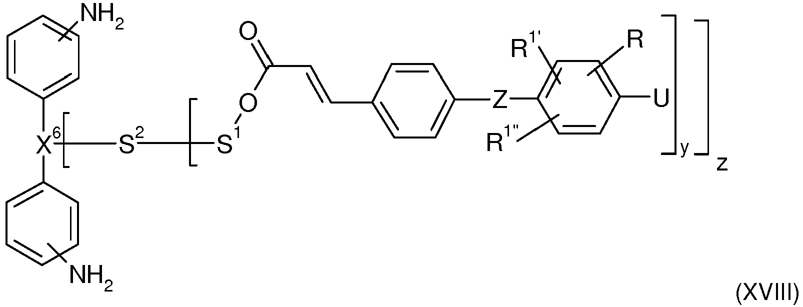 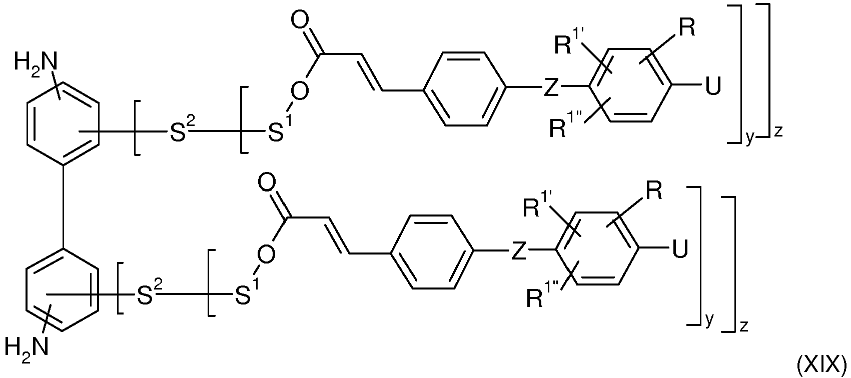 and preferably compound (XIX) is is compound of formula (XVIIIa), and compound (XVIII) is compound of formulae (XIXa), (XVIIIa) or (XVIIIb) 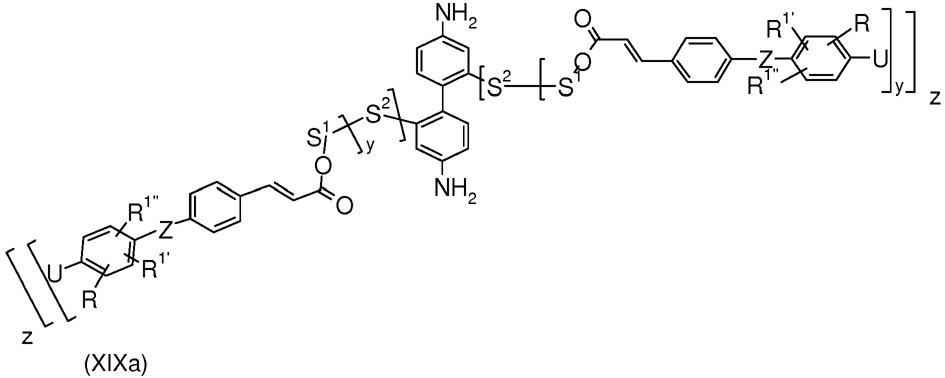 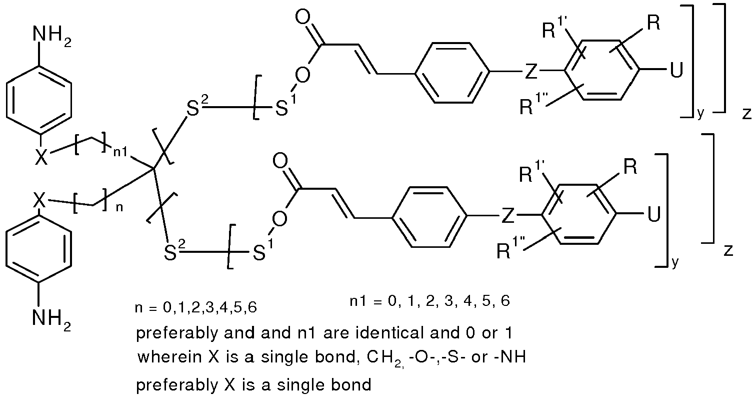 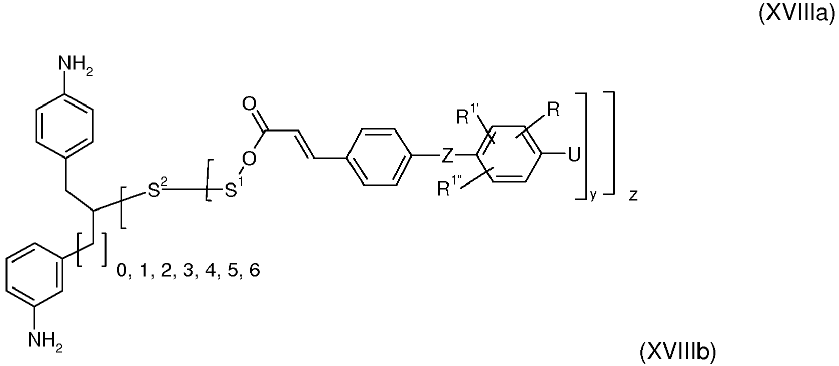
wherein R¹, R^{1'}, R^{1"}, Z and U have the above given meanings and preferences; and
S¹ and S² each independently from each other represents a single bond or a spacer unit, which is a cyclic, straight-chain or branched, substituted or unsubstituted C₁-C₂₄alkylen, preferably C₁-C₁₂alkylen, more preferably C₁-C₆alkylen, such as methylen, ethylene, straight chain or branched propylene, butylene, pentylene or hexylene, in which one or more, preferably non-adjacent, C-atom, CH- or CH₂- group may be replaced by at least one linking group, wherein the linking group is preferred a single bond, -O-, -O(CO), -S-, -(CO)O-, -C≡C-, or 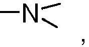 -NR²- and more preferably by preferred is a single bond, -O-, -O(CO) or -(CO)O- and most preferred by -O-, and wherein the substituent is preferably at least one C1-C₆alkyl, preferably methyl; and/or S¹ and S² each independently from each other represents a non-aromatic, aromatic, unsubstituted or substituted carbocyclic or heterocyclic group of formula (V):

   -(Z^{1a'})_{a3'}-(Z¹-C¹)ₐ₁-(Z²-C²)ₐ₂-(Z^{1a})ₐ₃- (V)

   wherein:
   C¹, C² each independently represents an alicyclic or aromatic, unsubstituted or substituted carbocyclic or heterocyclic group, preferably C¹ and C² are connected at the opposite positions via the bridging groups Z¹, Z², Z^{1a} and/or Z^{1a'} so that groups S¹ and/or S² have a long molecular axis, and
      Z¹, Z², Z^{1a}, Z^{1a'} each independently represents a bridging group within the above given meanings and preferences, and
   a₁, a_{3'}, a₂ , a₃ each independently represents an integer from 0 to 3, such that a₁ + a_{3'} + a₂ + a₃ ≤ 6, preferably a₃ and or a_{3'} is 1 and a₁ + a₂ ≤ 4,
most preferred S¹ and S² each independently from each other represent a single bond or a straight-chain or branched, substituted, or unsubstituted C₁-C₁₂alkylen, preferably C₁-C₆alkylen, especially C₁-C₂alkylen, and further especially C₄-C₁₂alkylen; and in which one or more, preferably non-adjacent, C-atom, CH- or CH₂-, group may be replaced by at least one linking group, wherein the linking group is preferred a single bond, -O-, -O(CO), -S-, -(CO)O-, -C≡C-, or 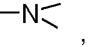 -NR²- and more preferably by preferred is a single bond, -O-, -O(CO) or -(CO)O- and most preferred by -O-;especially most preferably S¹ and S² are together a single bond or a straight-chain or branched, substituted, or unsubstituted C₁-C₁₂alkylen, preferably C₁-C₆alkylen; and
y and z are each independently from each other 1, 2, 3 or 4, preferably 1 or 2; more preferably y is 2 and z is 1; or z is 2 and y is 1; and further more preferably y and z are 1; X⁶ is preferably a single bond or straight-chain or branched, substituted or unsubstituted C₁-C₆alkylen, preferably straight-chain or branched propylene, butylen, pentylene or hexylene which are linked once or twice with the side-chain, especially wherein propylene is linked once in the 2-position or twice in 2,2'-position and butylen is linked once or twice in the 2- and/or 3- position.

More preferably much more especially most preferred is a compound having at least one lateral-substituted portion represented by formulae (XX), (XXI), (XXII), (XXIII), (XXIV), (XXV), (XXVa) or (XXVb) and/or a photoalignment material, comprising a polymer having in a side chain at least one lateral-substituted portion represented by formulae (XX), (XXI), (XXII), (XXIII), (XXIV), (XXV), (XXVa) or (XXVb) 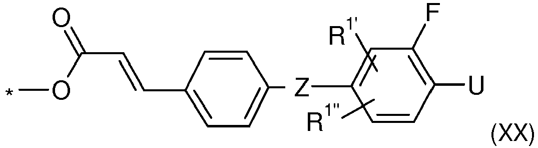 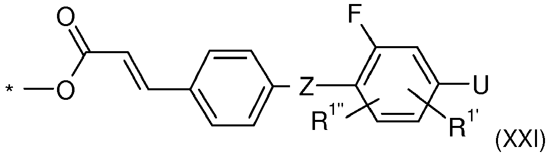 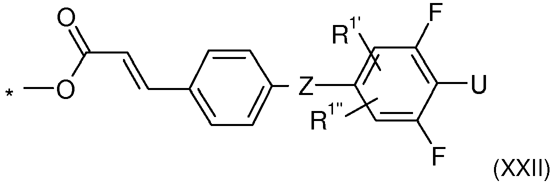 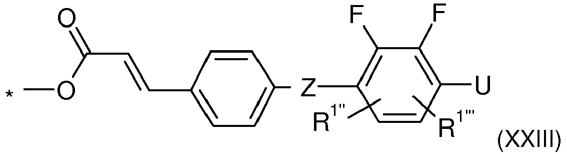 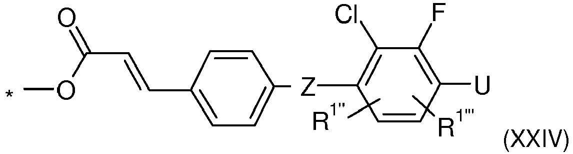 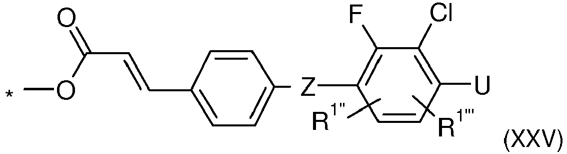 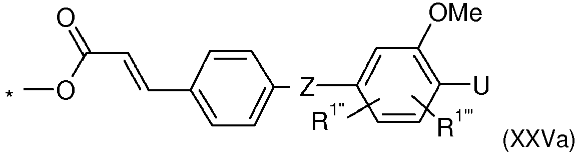 wherein in (XX), (XXI), (XXII), (XXIII), (XXIV), (XXV), (XXVa)
U, Z, have independently from each other the meanings and preferences as described above, and
R^{1'}, R^{1"} and R^{1'"} have independently from each other the meaning of hydrogen, fluorine, nitrile and/or chlorine, preferably R^{1'}, R^{1"} are hydrogen, and P^{1'"} is hydrogen, fluorine, nitrile and/or chlorine, 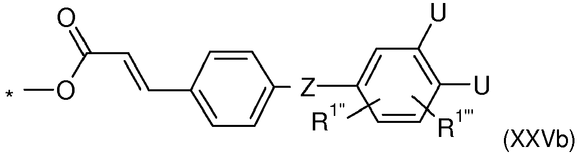
wherein
U, Z, have independently from each other the meanings and preferences, and Z is preferably -OCO-,
   -OCH₂- or a single bond. In a further preferred embodiment Z is -OCH₂- or a single bond, and
R^{1"} and R^{1'"} have independently from each other the meaning of hydrogen, , fluorine, nitrile and/or chlorine, with the proviso that at least one R^{1"} or R^{1'"} is not hydrogen.

Also further preferred are polymer having in a side chain at least one lateral-substituted portion represented by formulae (XXII), (XXIV), (XXV), (XXVa) or (XXVb).

Further, the present invention relates to a method for the preparation of a polymer, which comprises bringing into contact, preferably polymerising, the compounds, especially monomeric compounds of the invention, comprising at least one lateral-substituted portion represented by formula (I), optionally in the presence of a solvent.

Solvents which are used in the context of the present invention are
aprotic or protic polar solvents γ-butyrolactone, dimethylsulfoxide, N,N-dimethylacetamide, chlorobenzene, diethylene glycol diethyl ether, toluene, chloroform, chlorobenzene, diethylene glycol diethyl ether, diisobutylketone, methyl cellosolve, butyl cellosolve, butyl carbitol, tetrahydrofuran, N-methyl-2-pyrrolidone, N,N-dimethylformamide, methylethylketon (MEK), 1-methoxypropylacetat (MPA), alcohols, especially 1-methoxypropanol (MP). Preferred are aprotic polar solvents, especially γ-butyrolactone, N,N-dimethylacetamide, N-methyl-2-pyrrolidone, or N,N-dimethylformamide, methylethylketon (MEK), 1-methoxypropylacetat (MPA).

The polymer, especially the polyamic acid, polyamic acid ester and polyimide and mixtures thereof may be prepared in line with known methods, such as those described in Plast. Eng. 36 (1996), (Polyimides, fundamentals and applications), Marcel Dekker, Inc. and in WO WO2007/071091, on page 64 second paragraph to page 68, line 29.
Preferred is a method, wherein a polyamic acid, polyamic acid ester and polyimide and mixtures thereof is prepared by a reaction comprising bringing into contact at least one tetracarboxylic dianhydride with at least one monomeric compound of the invention comprising at least one lateral-substituted portion represented by formula (I), having as polymerizable group two diamino groups diamino, and

In general, the polyamic acid, polyamic acid ester and polyimide and mixtures thereof is prepared by polycondensation and dehydration reaction, which can be conducted in one process steps or in two.
Usually, at least one monomeric compound of the invention comprising at least one lateral-substituted portion represented by formula (I), comprising a polymerisable group, which is diamino is polycondensated with at least one tetracarboxylic dianhydride, whereby in preferably a polyamic acid or polyamic acid ester is formed, and then dehydrated, whereby preferably the corresponding polyimide or mixture of polyamic acid, polyamic acid ester and polyimide is formed.

More preferably, the present invention relates to a method, wherein subsequent to the polycondensation, cyclisation with removal of water is carried out thermally under formation of a polyimide.
More preferably, the present invention relates to a method, wherein imidisation is carried out prior or after the application of the polymer, copolymer or oligomer to a support, where preferably the irradiation with aligning light took place.

In the context of the present invention the term "polyimide" has the meaning of partially or completely imidisated polyamic acid or polyamic ester. In analogy, the term "imidisation" has in the context of the present invention the meaning of partially or complete imidisation.

Examples of material that may be used for the dehydration are for example acetic anhydride, trifluoroacetic anhydride or propionic anhydride. Examples of material that may be used for the ring-disclosure catalyst may include for example trimethylamine, pyridine or collidine.
A polyamic acid ester is obtained by reacting for example the above polyamic acid with an organic halide, alcohol or phenol.

The tetracarboxylic dianhydride used in the present invention is not particularly limited, and represents for examples a compound of formula (XXIII) 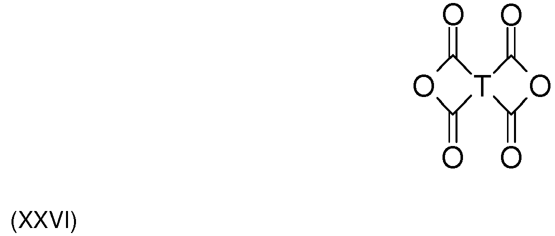 wherein:
- T: represents a tetravalent organic radical.

The tetravalent organic radical T is preferably derived from an aliphatic, alicyclic or aromatic tetracarboxylic acid dianhydride.

Preferred aliphatic or alicyclic tetracarboxylic acid dianhydrides or mixtures thereof are:1,1,4,4-butanetetracarboxylic acid dianhydride, ethylenemaleic acid dianhydride, 1,2,3,4-cyclobutanetetracarboxylic acid dianhydride,1,2,3,4-cyclopentanetetracarboxylic acid dianhydride, 2,3,5-tricarboxycyclopentylacetic acid dianhydride, exo-2,3,5-tricarboxy cyclopentyl acetic acid dianhydride, mixture containing at least 90% exo-2,3,5-tricarboxy cyclopentyl acetic acid dianhydride, tetrahydro-4,8-methanofuro[3,4-d]oxepine-1,3,5,7-tetrone, 3-(carboxymethyl)-1,2,4-cyclopentanetricarboxylic acid 1,4:2,3-dianhydride, hexahydrofuro[3',4':4,5]cyclopenta[1,2-c]pyran-1,3,4,6-tetrone, 3,5,6-tricarboxy-norbornylacetic acid dianhydride, 2,3,4,5-tetrahydrofurantetra-carboxylic acid dianhydride,rel-[1S,5R,6R]-3-oxabicyclo[3.2.1]octane-2,4-dione-6-spiro-3'-(tet rahydrofuran2',5'-dione), 4-(2,5-dioxotetrahydrofuran-3-yl)tetrahydronaphthalene--1,2-dicarboxylicacid dianhydride, 5-(2,5-dioxotetrahydrofuran-3-yl)-3-methyl-3-cyclohexene--1,2-dicarboxylic-acid dianhydride, bicyclo[2.2.2]oct-7-ene-2,3,5,6-tetracarboxylic acid dianhydride, bicyclo[2.2.2]octane-2,3,5,6-tetracarboxylic acid dianhydride, 1,8-dimethylbicyclo[2.2.2]oct-7-ene-2,3,5,6-tetracarboxylic acid dianhydride, pyromellitic acid dianhydride,3,3',4,4'-benzophenonetetracarboxylic acid dianhydride, 4,4'-oxydiphthalic acid dianhydride, 3,3',4,4'-diphenylsulfonetetracarboxylic acid dianhydride, 1,4,5,8-naphthalenetetracarboxylic acid dianhydride, 2,3,6,7-naphthalenetetracarboxylic acid dianhydride, 3,3',4,4'-dimethyldiphenylsilanetetracarboxylic acid dianhydride, 3,3',4,4'-tetraphenylsilanetetracarboxylic acid dianhydride,1,2,3,4-furantetracarboxylic acid di anhydride, 4,4'-bis(3,4-dicarboxyphenoxy)diphenyl sulfide dianhydride, 4,4'-bis(3,4-dicarboxyphenoxy)-diphenyl sulfone dianhydride, 4,4'-bis(3,4-dicarboxyphenoxy)-diphenylpropane dianhydride, 3,3',4,4'-biphenyltetracarboxylic acid dianhydride, ethylene glycol bis(trimellitic acid) dianhydride,4,4'-(1,4-phenylene)bis(phthalic acid) dianhydride, 4,4'-(1,3-phenylene)bis(phthalic acid) dianhydride, 4,4'-(hexafluoroisopropylidene)diphthalic acid dianhydride, 4-*tert*-butyl-6-(2,5-dioxotetrahydro-3-furanyl)-2-benzofuran-1,3-dione, 5-(2,5-dioxotetrahydro-3-furanyl)-3a,4,5,9b-tetrahydronaphtho[1,2-*c*]furan-1,3-dione, 5-(2,5-dioxotetrahydro-3-furanyl)-5-methyl-3a,4,5,9b-tetrahydronaphtho[1,2-*c*]furan-1,3-dione, 5-(2,5-dioxotetrahydro-3-furanyl)-6-methylhexahydro-2-benzofuran-1,3-dione, 5-(2,5-dioxotetrahydro-3-furanyl)-7-methyl-3a,4,5,7a-tetrahydro-2-benzofuran-1,3-dione, 6-(2,5-dioxotetrahydro-3-furanyl)-4-methylhexahydro-2-benzofuran-1,3-dione, 9-isopropyloctahydro-4,8-ethenofuro[3',4':3,4]cyclobuta[1,2-*f*][2]benzofuran-1,3,5,7-tetrone, 1,2,5,6-cyclooctanetetracarboxylic acid dianhydride, octahydro-4,8-ethenofuro[3',4':3,4]cyclobuta[1,2-f][2]benzofuran-1,3,5,7-tetrone, octahydrofuro[3',4':3,4]cyclobuta[1,2-*f*][2]benzofuran-1,3,5,7-tetrone, tetrahydro-3,3'-bifuran-2,2',5,5'-tetrone, 4,4'-oxydi(1,4-phenylene)bis(phthalic acid) dianhydride, and 4,4'-methylenedi(1,4-phenylene)bis(phthalic acid) dianhydride.

Preferred examples of aromatic tetracarboxylic acid dianhydrides are:
pyromellitic acid dianhydride,
3,3',4,4'-benzophenonetetracarboxylic acid dianhydride,
4,4'-oxydiphthalic acid dianhydride,
3,3',4,4'-diphenylsulfonetetracarboxylic acid dianhydride,
1,4,5,8-naphthalenetetracarboxylic acid dianhydride,
2,3,6,7-naphthalenetetracarboxylic acid dianhydride,
3,3',4,4'-dimethyldiphenylsilanetetracarboxylic acid dianhydride,
3,3',4,4'-tetraphenylsilanetetracarboxylic acid dianhydride,
1,2,3,4-furantetracarboxylic acid dianhydride,
4,4'-bis(3,4-dicarboxyphenoxy)diphenyl sulfide dianhydride,
4,4'-bis(3,4-dicarboxyphenoxy)diphenyl sulfone dianhydride,
4,4'-bis(3,4-dicarboxyphenoxy)diphenylpropane dianhydride,
3,3',4,4'-biphenyltetracarboxylic acid dianhydride,
ethylene glycol bis(trimellitic acid) dianhydride,
4,4'-(1,4-phenylene)bis(phthalic acid) dianhydride,
4,4'-(1,3-phenylene)bis(phthalic acid) dianhydride,
4,4'-(hexafluoroisopropylidene)diphthalic acid dianhydride,
4,4'-oxydi(1,4-phenylene)bis(phthalic acid) dianhydride,
4,4'-methylenedi(1,4-phenylene)bis(phthalic acid) dianhydride,
4-tert-butyl-6-(2,5-dioxotetrahydro-3-furanyl)-2-benzofuran-1,3-dione,
and the like.

More preferably the tetracarboxylic acid dianhydrides used to form the tetravalent organic radical T are selected from:
1,2,3,4-cyclobutanetetracarboxylic acid dianhydride,
1,2,3,4-cyclopentanetetracarboxylic acid dianhydride,
2,3,5-tricarboxycyclopentylacetic acid dianhydride,
tetrahydro-4,8-methanofuro[3,4-d]oxepine-1,3,5,7-tetrone,
3-(carboxymethyl)-1,2,4-cyclopentanetricarboxylic acid 1,4:2,3-dianhydride,
hexahydrofuro[3',4':4,5]cyclopenta[1,2-c]pyran-1,3,4,6-tetrone,
5-(2,5-dioxotetrahydrofuran-3-yl)-3-methyl-3-cyclohexene-1,2-dicarboxylic acid dianhydride, pyromellitic acid dianhydride,
4-(2,5-dioxotetrahydrofuran-3-yl)tetrahydronaphthalene-1,2-dicarboxylic acid dianhydride,
5-(2,5-dioxotetrahydro-3-furanyl)-5-methyl-3a,4,5,9b-tetrahydronaphtho[1,2-c]furan-1,3-dione,
5-(2,5-dioxotetrahydro-3-furanyl)-3a,4,5,9b-tetrahydronaphtho[1,2-c]furan-1,3-dione,
5-(2,5-dioxotetrahydro-3-furanyl)-7-methyl-3a,4,5,7a-tetrahydro-2-benzofuran-1,3-dione,
4-tert-butyl-6-(2,5-dioxotetrahydro-3-furanyl)-2-benzofuran-1,3-dione,
4,4'-(hexafluorineoisopropylidene)diphthalic acid dianhydride and
bicyclo[2.2.2]oct-7-ene-2,3,5,6-tetracarboxylic acid dianhydride.

More preferably the tetracarboxylic acid dianhydrides used to form the tetravalent organic radical T are selected from:
1,2,3,4-cyclobutanetetracarboxylic acid dianhydride,
1,2,3,4-cyclopentanetetracarboxylic acid dianhydride,
2,3,5-tricarboxycyclopentylacetic acid dianhydride, exo-2,3,5-tricarboxy cyclopentyl
acetic acid dianhydride, mixture containing at least 90% exo-2,3,5-tricarboxy cyclopentyl
acetic acid dianhydride; tetrahydro-4,8-methanofuro[3,4-d]oxepine-1,3,5,7-tetrone,
3-(carboxymethyl)-1,2,4-cyclopentanetricarboxylic acid 1,4:2,3-dianhydride,
hexahydrofuro[3',4':4,5]cyclopenta[1,2-c]pyran-1,3,4,6-tetrone,
5-(2,5-dioxotetrahydrofuran-3-yl)-3-methyl-3-cyclohexene-1,2-dicarboxylic acid dianhydride,
pyromellitic acid dianhydride,4-(2,5-dioxotetrahydrofuran-3-yl)tetrahydronaphthalene-1,2-dicarboxylic acid dianhydride,
5-(2,5-dioxotetrahydro-3-furanyl)-5-methyl-3a,4,5,9b-tetrahydronaphtho[1,2-c]furan-1,3-dione,
5-(2,5-dioxotetrahydro-3-furanyl)-3a,4,5,9b-tetrahydronaphtho[1,2-c]furan-1,3-dione,
5-(2,5-dioxotetrahydro-3-furanyl)-7-methyl-3a,4,5,7a-tetrahydro-2-benzofuran-1,3-dione,
4-tert-butyl-6-(2,5-dioxotetrahydro-3-furanyl)-2-benzofuran-1,3-dione,
4,4'-(hexafluoroisopropylidene)diphthalic acid dianhydride and
bicyclo[2.2.2]oct-7-ene-2,3,5,6-tetracarboxylic acid dianhydride.

In addition, the present invention relates to compositions, preferably a blend or/and a formulation, comprising a photoalignment material or a polymer according to the invention having in a side chain at least one lateral-substituted portion represented by formula (I), or obtained according to the method of the invention or prepared according to the method of the invention and/or at least one compound comprising at least one lateral-substituted portion represented by formula (I). Preferred compositions of the invention comprise
- optionally at least two different tetracarboxylic dianhydrides and compound (I) as described above and within the given preferences, wherein the polymerizable groups are amine; or/and
- optionally at least two different compounds (I) as described above and within the given preferences, and wherein preferably the polymerizable group is amine, preferably two amine groups;
- optionally compound (I) as described above and within the given preferences, wherein the polymerizable groups are amine, and at least one further diamine of the present invention which is not linked to a side chain of formula (I). Preferably, instead of the link to the side chain (I) the diamine is saturated at this potential linking position with hydrogen, optionally solvents as described above, or/and
- optionally additives as described below.

More preferred compositions of the invention are formulation comprising solvents within the description and preferences as given below, however not limited to them, especially in addition additives within the description and preferences as given below are comprised.

Further, the compositions of the present invention optionally comprise additives such as cross-linking agents, such as epoxy-, acrylate-, methacrylate- agents such as for example the photoalignment additives as disclosed in US 2009/0290109; or additives selected from the following group: 4,4'-methylene-bis-(N,N-diglycidylaniline), trimethylolpropane triglycidyl ether, benzene-1,2,4,5-tetracarboxylic acid 1,2,4,5-N,N'-diglycidyldiimide, polyethylene glycol diglycidyl ether and N,N-diglycidylcyclohexylamine.

Preferably, the composition of the invention comprises 0.5% to 99% by weight of photoalignment material having in a side chain at least one lateral-substituted portion represented by formula (I) and 99.5 to 1% by weight of an organic solvent. Preferably, the composition comprise 0.5 to 40% by weight and more preferably 0.5 to 10% by weight and most preferably 0.5 to 5% by of photoalignment material having in a side chain at least one lateral-substituted portion represented by formula (I).

In addition, the present invention relates to polymers, preferably a copolymers comprising a polymer having in a side chain at least one lateral-substituted portion represented by formula (I), and/or a compound comprising at least one lateral-substituted portion represented by formula (I), Preferred copolymers of the invention comprise
- at least two different tetracarboxylic dianhydrides and compound (I) as described above and within the given preferences, wherein the polymerizable group is amine; or/and
- at least two different compounds (I) as described above and within the given preferences, and wherein preferably the polymerizable group is amine, preferably two amine groups;
- compound (I) as described above and within the given preferences, wherein the polymerizable group is amine, and at least one further diamine of the present invention which is not linked to a side chain of formula (I). Preferably, instead of the link to the side chain (I) the diamine is saturated at this potential linking position with hydrogen.

In a further embodiment the present invention relates to a photoalignment material, preferably a polymer having in a side chain at least one lateral-substituted portion represented by formula (I), which is obtainable by the methods and the preferred methods as described above.

The polymers according to the invention may be used in form of polymer layers, preferably the photoalignment layer or especially the orientation layer, alone or in combination with other polymers, oligomers, monomers, photo-active polymers, photo-active oligomers and/or photo-active monomers, depending upon the application to which the polymer or oligomer layer is to be added. Therefore it is understood that by varying the composition of the polymer layer it is possible to control specific and desired properties, such as an induced pre-tilt angle, good surface wetting, a high voltage holding ratio or a specific anchoring energy.

In the context of the present invention the wording polymer layer has the meaning of oligomer, homopolymer or copolymer layer.

Further the present invention relates to a polymer layer, especially an orientation layer, comprising at least one photoalignment material having in a side chain at least one lateral-substituted portion represented by formula (I) as described in in the invention, or comprising at least one polymer obtained or prepared as described in the invention, or a polymer layer as prepared as described in the invention.

Polymer layers may readily be prepared from the polymers or oligomers of the present invention and a further embodiment of the invention relates to a polymer layer comprising a polymer according to the present invention, which is preferably prepared by treatment with aligning light.

Preferably, the present invention relates to a method for the preparation of a polymer layer, especially an orientation layer, comprising applying photoalignment material, or a polymer obtained or prepared as described in the invention, or a composition of the invention, to a support, and treating it with aligning light.

The polymer layer is preferably prepared by applying one or more polymers according to the invention to a support and, after imidisation or without imidisation, treating the polymer or composition comprising the polymer by irradiation with aligning light.

The treatment with aligning light may be conducted in a single step or in several separate steps. In a preferred embodiment of the invention the treatment with aligning light is conducted in a single step.

In the context of the present invention, aligning light is light of wavelengths, which can initiate photoalignment. Preferably, the wavelengths are in the UV-A, UVB and/or UV/C-range, or in the visible range. It depends on the photoalignment compound, which wavelengths are appropriate. Preferably, the photo-reactive groups are sensitive to visible and/or UV light. A further embodiment of the invention concerns the generating of aligning light by laser light.

The instant direction of the aligning light may be normal to the substrate or at any oblique angle.

For generating tilt angles, preferably the aligning light is exposed from oblique angles.

More preferably, aligning light is at least partially linearly polarized, elliptically polarized, such as for example circularly polarized, or non-polarized; most preferably at least circularly or partially linearly polarized light, or non-polarized light exposed obliquely. Especially, most preferred aligning light denotes substantially polarised light, especially linearly polarised light; or aligning light denotes non-polarised light, which is applied by an oblique irradiation.

In a more preferred embodiment of the invention the polymer, copolymer or oligomer is treated with polarised light, especially linearly polarised light, or by oblique radiation with non-polarised light.

In general, the support is a transparent support such as glass or plastic substrates, optionally coated with indium tin oxide (ITO) is used.

Further, it is possible to vary the direction of orientation and the tilt angle within the polymer layer by controlling the direction of the irradiation of the aligning light. It is understood that by selectively irradiating specific regions of the polymer layer very specific regions of the layer can be aligned. In this way, layers with a defined tilt angle can be provided. The induced orientation and tilt angle are retained in the polymer layer by the process, especially by the process of crosslinking.

Further preferred methods of the invention relates to
- a method for the preparation of a polymer layer, which are vertically aligned;
- a method for the preparation of multi-domain vertical alignment of a polymer layer;
- a method for the preparation of a polymer layer with tilted optical axis.

A further embodiment of the present invention concerns a polymer layer, in particular orientation layer, comprising at least one photoalignment material having in a side chain at least one lateral-substituted portion represented by formula (I) as described above or obtained as described above.

Polymer layer comprising at least one photoalignment material having in a side chain at least one lateral-substituted portion represented by formula (I) as described above.
It is understood that the polymer layers of the present invention (in form of a polymer gel, a polymer network, a polymer film, etc.) can also be used as orientation layers for liquid crystals. A further preferred embodiment of the invention relates to an orientation layer comprising one or more polymers or oligomers according to the invention, preferably in a cross-linked form. Such orientation layers can be used in the manufacture of unstructured or structured optical-or electro-optical elements, preferably in the production of hybrid layer elements.
In addition, the present invention concerns a method for the preparation of a polymer, wherein one or more polymers, copolymers or oligomers according to the present invention is applied to a support, preferably from a solution of the polymer or oligomer material and subsequent evaporation of the solvent, and wherein, after any imidisation step which may be necessary, the polymer or oligomer or polymer composition treated with aligning light, and preferably isomerized and/or cross-linked by irradiation with aligning light.
A preferred method of the present invention concerns a method, wherein the direction of orientation and the tilt angle within the polymer layer is varied by controlling the direction of the irradiation with aligning light, and/or wherein by selectively irradiating specific regions of the polymer layer specific regions of the layer are aligned.
The orientation layers are suitably prepared from a solution of the photoalignment material. The polymer solution is applied to a support optionally coated with an electrode [for example a glass plate coated with indium-tin oxide (ITO)] so that homogeneous layers of 0.05 to 50 µm thickness are produced. In this process different coating techniques like spin-coating, meniscus-coating, wire-coating, slot-coating, offset-printing, flexo-printing, gravure-printing may be used. Then, or optionally after a prior imidisation step, the regions to be oriented are irradiated, for example, with a high-pressure mercury vapor lamp, a xenon lamp or a pulsed UV laser, using a polarizer and optionally a mask for creating images of structures.
Further, the present invention concerns the use of a polymer layer according to the present invention, preferably in cross-linked form, as an orientation layer for liquid crystals.
Further, the present invention concerns preferably the use of a polymer layer for the induction of vertical alignment of adjacent liquid crystalline layers, in particular for operating a cell in MVA mode.
The irradiation time is dependent upon the output of the individual lamps and can vary from a few seconds to several hours. The photo-reaction (dimerization, polymerisation, cross-linking) can also be carried out, however, by irradiation of the homogeneous layer using filters that, for example, allow only the radiation suitable for the cross-linking reaction to pass through.

In addition, the present invention relates to the use of a photoalignment material as described in the present invention, or a polymer having in a side chain at least one lateral-substituted portion represented by formula (I) or as prepared as described in claims 1, 8, for the preparation of a polymer layer, especially an orientation layer.

Further the present invention relates to the use of the polymer layer as described in the present invention, or prepared as described in the present invention, or the photoalignment material as described in the present invention, for the preparation of optical and electro-optical unstructured or structured constructional elements, preferably liquid crystal display cells, security devices, multi-layer and hybrid layer elements.

It is understood that the polymer layers of the invention may be used in the production of optical or electro-optical devices having at least one orientation layer as well as unstructured and structured optical elements and multi-layer systems.

The present invention concerns the use of a polymer layer as an orientation layer for liquid crystals. Preferred is the use for the induction of vertical alignment of adjacent liquid crystalline layers.

A further embodiment of the invention relates to an optical or electro-optical device comprising one or more polymers or oligomers according to the present invention. Especially, the present invention relates to optical and electro-optical unstructured or structured constructional elements, preferably liquid crystal display cells, security devices, multi-layer and hybrid layer elements, comprising at least one polymer layer as described in the present invention, or prepared as described in the present invention, or comprising at least one the photoalignment material as described in the present invention.
The electro-optical devices may comprise more than one layer.
Further, the present invention relates to electro-optical unstructured or structured constructional elements, as described in the present invention, which is a liquid crystal display cell, comprising at least one polymer layer as described in the present invention, or prepared as described in the present invention, or comprising at least one the photoalignment material as described in the present invention.
The layer, or each of the layers may contain one or more regions of different spatial orientation.

The present invention the wording optical or electro-optical elements has for example the meaning of multilayer systems, or devices for the preparation of
a display waveguide, a security or brand protection element, a bar code, an optical grating, a filter, a retarder, a compensation film, a reflectively polarizing film, an absorptive polarizing film, an anisotropically scattering film compensator and retardation film, a twisted retarder film, a cholesteric liquid crystal film, a guest-host liquid crystal film, a monomer corrugated film, a smectic liquid crystal film, a polarizer, a piezoelectric cell, a thin film exhibiting non linear optical properties, a decorative optical element, a brightness enhancement film, a component for wavelength-band-selective compensation, a component for multi-domain compensation, a component of multiview liquid crystal displays, an achromatic retarder, a polarization state correction / adjustment film, a component of optical or electro-optical sensors, a component of brightness enhancement film, a component for light-based telecommunication devices, a G/H-polarizer with an anisotropic absorber, a reflective circular polarizer, a reflective linear polarizer, a MC (monomer corrugated film), liquid crystal displays, preferably twisted nematic (TN) liquid crystal displays, (RTN) reverse TN, (VATN), (VECB), hybrid aligned nematic (HAN) liquid crystal displays, electrically controlled birefringence (ECB) liquid crystal displays, supertwisted nematic (STN) liquid crystal displays, optically compensated birefringence (OCB) liquid crystal displays, pi-cell liquid crystal displays, in-plane switching (IPS) liquid crystal displays, fringe field switching (FFS) liquid crystal displays, vertically aligned (VA), preferably (MVA = multidomain vertical alignment), liquid crystal displays ; all above display types are applied in either transmissive or reflective or transflective mode.

The advantages of the present invention could not be foreseen by a skilled person.
It has surprisingly been found that the introduction of a lateral substituted group into a peripheral position of the polymer side groups having specific molecular architecture plays a predominant role in obtaining MVA materials having optimized properties, such as the required high voltage holding ratios, the adjustable pre-tilt angles required for the MVA mode and their stability to light and heat.
Especially , it was found that with the new photoaligning material of this invention the respective desired changes in pretilt angles of liquid crystal is achieved, without disturbing the parameters set for UV exposure energy and incidence angle, Therefore, time consuming modifications of the production line are not needed.

### Examples

Definitions used in the examples:
Mass spectroscopy EI = EI (electron-impact)
¹H NMR = ¹H nuclear magnetic resonance spectroscopy
DMSOd₆ = dimethylsulfoxid deutererd
300MHz = 300 Megaherz
M⁺ = MolecularMass of the cation
m = multiplett
d = douplet
dd = double douplet
t = triplett
s = sigulett
q = quintett
br = broad
HCI = hydrogen chloride
NaOH = sodium hydroxid
NMP = N-methyl-2-pyrrolidone
THF = tetrahydrofuran
Pretilt = tilt of liquid crystal

| Diamine structure | Analytical datas |
|---|---|
| 4-{(1*E*)-3-[2-(2,4-diaminophenyl)ethoxy]-3-oxoprop-1-enyl}phenyl 2-fluoro-4-(4,4,4-trifluorobutoxy)benzoate | Masse spectroscopy EI 546.5 M₊ |
| Compound 6 | |
| 4-{(1*E*)-3-[2-(2,4-diaminophenyl)ethoxy]-3-oxoprop-1-enyl}phenyl 3-fluoro-4-(4,4,4-trifluorobutoxy)benzoate | ¹H NMR DMSO d₆ 300MHz |
| | 7.98 (m, 2H), 7.94 (d, 2H), 7.84 (d, 1H), 7.72 (m, 3H), 6.67 (d, 1H), 6.61 (dd, 1H), 5.90 (d, 1H), 5.82 (dd, 1H), 4.65 (s, 2H), 4.58 (s, 2H), 4.26 (t, 2H), 4.16 (t, 2H), 2.69 (t, 2H), 2.49 (m, 2H), 2.04 (m, 2H). |
| Compound 10 | |
| | |
| 4-[(1 *E*)-3-({6-[(3,5-diaminobenzoyl)oxy]hexyl}oxy)-3-oxoprop-1-enyl]phenyl 2,3-difluoro-4-(pentyloxy)benzoate | Masse spectroscopy EI 624.7 M₊ |
| Compound 12 | |

| Polymer structure | Analytical datas |
|---|---|
| Polyamic acid 1 | ¹H NMR DMSO d₆ 300MHz |
| | 12.36 (br, 2H), 10.05 (m, 1H), 9.52 (m, 1H), 8.11 (br, 1H), 7.81-6.85 (m, 10H), 6.69 (d, 1H), 4.25 (br, 2H), 4.16 (br, 2H), 3.43-2.49 (m, 10H), 2.45 (m, 2H), 1.96 (m, 2H). |
| Polyamic acid 2 | ¹H NMR DMSO d₆ 300MHz |
| | 12.38 (br, 2H), 10.05 (m, 1H), 9.52 (m, 1H), 7.95-7.18 (m, 11H), 6.64 (d, 1H), 4.24 (br, 4H), 3.43-2.49 (m, 10H), 2.44 (m, 2H), 1.95 (m, 2H). |
| | |
| Polyamic acid 4 | ¹H NMR DMSO d₆ 400MHz |
| | 12.48 (s, 2H), 10.33 (s, 2H), 8.31 (m, 1H), 8.05-7.80 (m, 5H), 7.68 (dd, 1H), 7.32 (d, 2H), 7.19 (t, 1H), 6.65 (dd, 1H), 4.27 (br, 2H), 4.17 (t, 4H), 3.88-3.61 (m, 4H), 1.76 (m, 6H), 1.36 (m, 8H), 0.88 (t, 3H). |

### Synthesis

Preparation of 6-hydroxyhexyl-3,5-dinitrobenzoate and 2-(2,4-dinitrophenyl)ethanol is prepared according to the process described in WO 2007/071091 A1 pages 79 and 92 which is herewith incorporated by reference.

### Example 1/Preparation of compound 1

### 2-fluoro-4-(4,4,4-trifluorobutoxy)benzonitrile

464.5g (1.95 mol) of 4-iodo-1,1,1-trifluorobutane, 267.6g (1.95 mol) of 4-nitrile-3-fluorophenol and 539.5g (3.90 mol) of potassium carbonate are dissolved in 3L of NMP. The mixture is heated to 80°C overnight. The solution is cooled to room temperature and the reaction mixture is extracted with ethyl acetate and water. The organic phase is washed repeatedly with water, dried over sodium sulfate, filtrated and concentrated under reduced pressur to give 503g of compound 1.

### Example 2/Preparation of compound 2

### 2-fluoro-4-(4,4,4-trifluorobutoxy)benzoic acid

61.8g (250.0 mmol) of compound 1, 150mL of sulphuric acid, 600mL of acetic acid and 400 mL of hydrochloric acid are heated to reflux for 2 days. The mixture is cooled down and poured on 2.5L of water. The solid is filtrated and washed with water. The solid is dried under vacuum to give 53.4g of compound 2.

### Example 3/Preparation of compound 3 :

### 4-formylphenyl 2-fluoro-4-(4,4,4-trifluorobutoxy)benzoate

5.0g (18.7 mmol) of compound 2, 2.29g (18.78 mmol) of 4-hydroxybenzaldehyde, 0.23g (1.88 mmol) of 4-dimethylaminopyridine are dissolved in 25mL of dichloromethane. 3.88g (18.78 mmol) of dicyclohexylcarbodiimide (DCC) is added at 0°C. The solution is stirred for 1h at 0°C and allowed to stir at room temperature overnight. After 22 hours at room temperature, the reaction mixture is partitioned between dichloromethane and water. The organic phase is washed repeatedly with water, dried over sodium sulfate, filtrated and concentrated under reduced pressur to give 6.92g of compound 3.

### Example 4/ Preparation of compound 4 :

### (2E)-3-(4-{[2-fluoro-4-(4,4,4-trifluorobutoxy)benzoy]oxy}phenyl)prop-2-enoic acid

6.92g (18.68 mmol) of compound 3 and 3.32g (31.93 mmol) of malonic acid are dissolved in 15mL of pyridine. 0.78mL (9.39 mmol) of pyrrolidine is added to the suspension which is allowed to react at 90°C under argon for 2.5h. The yellow solution is then thrown on ice. The solution is carefully acidified to pH=1-2 with 25% HCI solution and is stirred for 15min. The product is filtrated off and dried at room temperature under vacuum to give 7.75g of compound 4.

### Example 5/ Preparation of compound 5 :

### 4-{(1E)-3-[2-(2,4-dinitrophenyl)ethoxy]-3-oxoprop-1-enyl}phenyl 2-fluoro-4-(4,4,4-trifluorobutoxy)benzoate

2.50g (11.8 mmol) of 2-(2,4-dinitrophenyl)ethanol, 4.86g (11.8 mmol) of compound 4, 144 mg (1.2 mmol) of 4-dimethylaminopyridine are dissolved in 30 mL of dichloromethane. 2.48g (13.0 mmol) of N-(3-dimethylaminopropyl)-N'-ethylcarbodiimide hydrochloride (EDC hydrochloride) are added at 0°C. The solution is stirred for 1h at 0°C and allowed to stir at room temperature overnight. After 22 hours at room temperature, the reaction mixture is partitioned between dichloromethane and water. The organic phase is washed repeatedly with water, dried over sodium sulfate, filtrated and concentrated under reduced pressur. Chromatography of the residue on 200g silica gel using toluene: ethyl acetate 95:5 as eluent and crystallization from ethyl acetate: hexane mixture yielded 5.08g (71%) of compound 5 as colorless crystals.

### Example 6/Preparation of compound 6 :

### 4-{(1E)-3-[2-(2,4-diaminophenyl)ethoxy]-3-oxoprop-1-enyl}phenyl 2-fluoro-4-(4,4,4-trifluorobutoxy)benzoate

5.8g (8.38 mmol) of compound 5 are dissolved in a mixture of 54mL of N,N-dimethylformamide and 6mL water. 13.9g (51.4 mmol) ferric chloride hexahydrate are added. 5.60g (85.7 mmol) zinc powder is added portion wise within 60 minutes. The mixture is allowed to react for 2 hours. The reaction mixture is partitioned between ethyl acetate and water and filtrated. The organic phase is washed repeatedly with water, dried over sodium sulfate, filtrated and concentrated under reduced pressur.Filtration of the residue on 200g silica gel using toluene:ethyl acetate 1:3 as eluent and crystallization from ethyl acetate:hexane mixture yielded 3.30g of compound 6 as colorless crystals.

### Example 7/Preparation of compound 7

### 3-methoxy-4-(pentyloxy)benzoic acid

16.57 g (109.7 mmol) of bromopentane, 20g (109.7 mmol) of methylvanillate and 30.30g (219 mmol) of potassium carbonate are dissolved in 200mL of NMP. The mixture is heated to 80°C overnight. 100mL (100 mmol) of a 1N NaOH solution was added to the above mixture. The suspension is heated at reflux temperature for 30 min until the reaction is completed. The reaction mixture is allowed to cool at room temperature and thrown in cold water. The solution is carefully acidified with a 25% HCI solution and is stirred for 15 min. The product is filtrated off, washed with water and dried overnight at room temperature under vacuum to give 23.90g (97%) of compound 7 as a white solid.

### Example 8/Preparation of compound 8

### 2,3-difluoro-4-(pentyloxy)benzoic acid

19.09g (109.7 mmol) of 2,3-difluoro-4-hydroxybenzoic acid is refluxed in 500mL of methanol with 2 drops of sulphuric acid for 22h. The solvent is evaporated under vacuum. To the residue is added 16.57 g (109.7 mmol) of bromopentane, 30.30g (219 mmol) of potassium carbonate and 200mL of NMP. The mixture is heated to 80°C overnight. 100mL (100 mmol) of a 1N NaOH solution was added to the above mixture. The suspension is heated at reflux temperature for 30 min until the reaction is completed. The reaction mixture is allowed to cool at room temperature and thrown in cold water. The solution is carefully acidified with a 25% HCI solution and is stirred for 15 min. The product is filtrated off, washed with water and dried overnight at room temperature under vacuum to give 25.72g (96%) of compound 8 as a white solid.

### Example 9/ Preparation of compound 9/3-fluoro-4-(4,4,4-trifluorobutoxy)benzoic acid

4.37g (28.00 mmol) of 3-fluoro-4-hydroxybenzoic acid is refluxed in 100mL of methanol with 2 drops of sulphuric acid for 22h. The solvent is evaporated under vacuum. To the residue is added 6.66g (28.00 mmol) of 4-iodo-1,1,1-trifluorobutane, 11.84g (85.00 mmol) of potassium carbonate and 50mL of NMP. The mixture is heated to 80°C overnight. 40mL (40 mmol) of a 1N NaOH solution was added to the above mixture. The suspension is heated at reflux temperature for 30 min until the reaction is completed. The reaction mixture is allowed to cool at room temperature and thrown in cold water. The solution was carefully acidified with a 25% HCI solution and is stirred for 15 min. The product is filtrated off, washed with water and dried overnight at room temperature under vacuum to give 5.91g (79%) of compound 9 as a white solid.

The 4-formylphenyl compounds 3A, 3B, 3C bearing respectively compounds 7, 8, 9 as ester substituents are prepared according to the process described in example 3 for compound 3 with the proviso that compound 2 is replaced by compound 7, respectively compound 8, respectively compound 9:
4-formylphenyl 3-methoxy-4-(pentyloxy)benzoate 3A
4-formylphenyl 2,3-difluoro-4-(pentyloxy)benzoate 3B
4-formylphenyl 3-fluoro-4-(4,4,4-trifluorobutoxy)benzoate 3C

The cinnamic acid compounds 4A, 4B, 4C are prepared according to the process described in example 4 for compound 4 with the proviso that compound 3 is replaced by compound 3A, respectively compound 3B, respectively compound 3C:
(2*E*)-3-(4-{[3-methoxy-4-(pentyloxy)benzoyl]oxy}phenyl)prop-2-enoic acid 4A
(2*E*)-3-(4-{[2,3-difluoro-4-(pentyloxy)benzoyl]oxy}phenyl)prop-2-enoic acid 4B
(2*E*)-3-(4-{[3-fluoro-4-(4,4,4-trifluorobutoxy)benzoyl]oxy}phenyl)prop-2-enoic acid 4C

The dinitro compounds 5A, 5B, 5C are prepared according to the process described in example 5 for compound 5 with the proviso that compound 4 is replaced by compound 4A and 2-(2,4-dinitrophenyl)ethanol is replaced by 6-hydroxyhexyl-3,5-dinitrobenzoate, respectively compound 4B and 2-(2,4-dinitrophenyl)ethanol is replaced by 6-hydroxyhexyl-3,5-dinitrobenzoate, respectively compound 4C:
4-[(1*E*)-3-({6-[(3,5-dinitrobenzoyl)oxy]hexyl}oxy)-3-oxoprop-1-enyl]phenyl 3-methoxy-4-(pentyloxy)benzoate 5A
4-[(1*E*)-3-({6-[(3,5-dinitrobenzoyl)oxy]hexyl}oxy)-3-oxoprop-1-enyl]phenyl 2,3-difluoro-4-(pentyloxy)benzoate 5B
4-{(1*E*)-3-[2-(2,4-dinitrophenyl)ethoxy]-3-oxoprop-1-enyl}phenyl 3-fluoro-4-(4,4,4-trifluorobutoxy)benzoate 5C

Compound 11 is prepared according to the process described in example 6 for compound 6 with the proviso that compound 5 is replaced by compound 5A.
Compound 12 is prepared according to the process described in example 6 for compound 6 with the proviso that compound 5 is replaced by compound 5B.
Compound 10 is prepared according to the process described in example 6 for compound 6 with the proviso that compound 5 is replaced by compound 5C.

### Polymerisation Step A (Formation of polyamic acid)

### Example 10:

0.820g (3.66 mmol) of 2,3,5-tricarboxycyclopentylacetic-1,2:3,4-dianhydride is added to a solution of 2.000g (3.66 mmol) of compound 6 in 6.56mL of NMP. Stirring is then carried out at 0°C for 2 hours. The mixture is subsequently allowed to react for 21 hours at room temperature. The polymer mixture is diluted with 18mL of THF, precipitated into 800mL of water to yield, after drying at room temperature under vacuum, 2.76g of polyamic acid 1 in the form of a white powder: [h] = 0.21dL/g

### Example 11:

Analogous to Example 10 the following diamines are used for the preparation of polyamic acid with 2,3,5-tricarboxycyclopentylacetic-1,2:3,4-dianhydride.

### Compound 10

yield Polyamic acid 2 as white powder; [η] = 0.22 dL/g

### Compound 11

yield Polyamic acid 7 as white powder; [η] = 0.26 dL/g

### Compound 12

yield Polyamic acid 8 as white powder; [η] = 0.27 dL/g

### Example 12:

Analogous to Example 10 the following diamines are used for the preparation of polyamic Acid with 1,2,3,4-cyclobutantetracarboxylic acid dianhydride.

### Compound 6

yield Polyamic acid 5 as white powder; [η] = 0.28 dL/g

### Compound 10

yield Polyamic acid 6 as white powder; [η] = 0.29 dL/g

### Compound 11

yield Polyamic acid 3 as white powder; [η] = 0.33 dL/g

### Compound 12

yield Polyamic acid 4 as white powder; [η] = 0.40 dL/g

### Example 13:

Analogous to Example 10 the following tetracarboxylic acid dianhydride mixture are used for the preparation of Polyamic acid with compound 6.
A mixture of 1,2,3,4-cyclobutantetracarboxylic acid dianhydride and 2,3,5-tricarboxycyclopentylacetic-1,2:3,4-dianhydride 25:75 (mole ratio) yield Polyamic acid 9 as white powder; [η] = 0.31 dL/g

### Example 14:

### Polymerisation Step B (Formation of the Polyimide)

0.50 g of Polyamic Acid 3 obtained in above Example 12 are dissolved in 3 ml of 1-methyl-2-pyrrolidon (NMP). Thereto are added 0.28 g (3.57 mmol, 4 equivalent) of pyridine and 364 mg (3.57 mmol, 4 equivalent) acetic acid anhydride, and the dehydration and ring closure is carried out at 80°C for 2 h. The polymer mixture is diluted with 1.5 ml NMP, precipitated into 100 ml diethyl ether and collected by filtration. The polymer is reprecipitated from THF (10 ml) into 200 ml water to yield, after drying at room temperature under vacuum, 0.45 g Polyimide 1; [η] = 0.31 dL/g, Imidization degree ID=100%

Analogous to the polymerization step of Example 12 the following polyamic acids are used for the preparation of partially imidizated polyimide. The imidization degree is adjusted with the ratio of acetic acid anhydride and pyridine.
Polyamic acid 3 with 1.2 equivalent acetic acid anhydride and pyridine yield Polyimide 2 as white powder; [η] = 0.33 dL/g, ID=35 %.

### Example 15 :

A liquid crystal cell is prepared wherein the liquid crystal is aligned by photo reactive Polyamic acid 1.
A 4% solution of Polyamic acid 1 is prepared by mixing the solid Polyamic acid 1 in the solvent N-methyl-2-pyrrolidone(NMP) and stirred thoroughly till the solid Polyamic acid 1 is dissolved and a second solvent butyl cellulose(BC) is added and the whole composition is stirred thoroughly to obtain final solution. The solvent ratio between N-methyl-2-pyrrolidone and butyl cellulose is 1:1. The above polymer solution is spin-coated onto the two ITO coated glass substrates at a spin speed of 1200rpm for 30seconds. After spin coating the substrates are subjected to baking procedure consisting of pre-baking for 5 minutes at 130°C and post-baking for 40 minutes at a temperature of 200°C.The resulting layer thickness is around 70nm.

The substrates with the coated polymer layer on top are exposed to linearly polarized UV light(LPUV) at an incidence angle of 40° relative to the normal of the substrate surface. The plane of polarization is within the plane spanned by the substrate normal and the propagation direction of the light. The applied exposure dose is 48mJ/cm².
After LPUV exposure, a cell is assembled with the two substrates, the exposed polymer layers facing to the inside of the cell. The substrates are adjusted relative to each other such that the induced alignment directions are parallel to each other(corresponds to the antiparallel rubbed configuration in case of alignment by rubbing procedure). The cell is filled using vacuum process with liquid crystal MLC6610(Merck KGA), which has a negative dielectric anisotropy. The liquid crystal in the cell shows well defined homeotropic orientation. A tilt angle of 87.86° is measured using the crystal rotation method.

### Example 16:

Another liquid crystal cell is prepared in the same manner as describe in example 15, except that Polyamic acid 2 is used instead of Polyamic acid 1 which has lateral substitution in a different direction and spin speed of 1250rpm for 30seconds is used.
Pretilt is measured in the same manner as in example 15, which is 88.40°.

### Example 17:

Another liquid crystal cell is prepared in the same manner as describe in example 15, except that Polyamic acid 3 is used and spin speed of 1600rpm for 30seconds is used.
Pretilt is measured in the same manner as in Example 15, which is 88.96°.

### Example 18:

Another liquid crystal cell is prepared in the same manner as describe in example 15, except that Polyamic acid 4 is used and spin speed of 1750rpm for 30seconds is used.
Pretilt is measured in the same manner as in example 15, which is 88.34°. This shows that with liquid crystal cell processing conditions after alignment layer coating step remaining the same, the pretilt can be modified by different lateral substitutions on polymer.

### Example 19:

### Preparation of 4,4'-Dinitro-1,1'-biphenyl-2,2'-dimethanol:

3.6 g (10.83 mmol) 4,4'-Dinitro-1,1'-biphenyl-2,2'-dicarboxylic acid are dissolved in 25 ml tetrahydrofuran and added drop wise in a the course of 1 hours to 65 ml (65.02 mmol) of a borane-tetrahydrofuran complex 1.0 M solution in tetrahydrofuran. After 19 hours at 25°C , 50 ml water are carefully added. After 1h the solution is acidified to pH=1-2 with 10 ml 1N HCI solution and allowed to stirred for 30 min. The reaction mixture is then partitioned between ethyl acetate and water; the organic phase is washed repeatedly with water, dried over sodium sulfate, filtered and concentrated by rotary evaporation. The residue, 4.2 g of 4,4'-Dinitro-1,1'-biphenyl-2,2'-dimethanol as white powder is used without further purification.

### Example 20/Preparation of 2-(2,4-dinitrophenyl)propane-1,3-diol:

20g (106.5mmol) of 2,4-dinitrotoluene is solubilised in 280mL of NMP. To the brown solution is added 7.6g (255.6mmol) of paraformaldehyde. To the suspension is added 597mg (5.32mmol) of potassium tetra butoxyde. The resulting solution is stirred overnight at RT. The mixture was poured on 200mL ice, and neutralized with 2mL of HCI 25%. The reaction mixture is then partitioned between ethyl acetate and water; the organic phase is washed repeatedly with water, dried over sodium sulfate, filtered and concentrated by rotary evaporation. The solution is precipitate at RT by adding 150mL of heptane. The product is filtrated and dried under vacuum at RT. The product is isolate 16.15g as a slightly yellow product.

### Example 21/Preparation of compound 21

### 4-((1E)-3-{[2'-({[(2E)-3-(4-{[2-fluoro-4-(4,4,4-trifluorobutoxy)benzoyl]oxy}phenyl)prop-2-enoyl]oxy}methyl)-4,4'-dinitro-1,1'-biphenyl-2-yl]methoxy}-3-oxoprop-1-enyl)phenyl 2-fluoro-4-(4,4,4-trifluorobutoxy)benzoate

8.48g (27.9 mmol) of 4,4'-Dinitro-1,1'-biphenyl-2,2'-dimethanol, 23.0g (55.7 mmol) of compound 5, 170mg (1.4 mmol) of 4-dimethylaminopyridine are dissolved in 100 mL of dichloromethane. 8.64g (55.7 mmol) of N-(3-dimethylaminopropyl)-N'-ethylcarbodiimide hydrochloride (EDC hydrochloride) are added at 0°C. The solution is stirred for 1h at 0°C and allowed to stir at room temperature overnight. After 22 hours at room temperature, the reaction mixture is partitioned between dichloromethane and water. The organic phase is washed repeatedly with water, dried over sodium sulfate, filtrated and concentrated under reduced pressur. Chromatography of the residue on 200g silica gel using toluene:ethyl acetate 95:5 as eluent and crystallization from ethyl acetate:hexane mixture yielded 21g (71%) of compound 21 as colourless crystals.

### Example 22/Preparation of compound 22

### 4-[(1E)-3-(2-(2,4-dinitrophenyl)-3-{[(2E)-3-(4-{[2-fluoro-4-(4,4,4-trifluorobutoxy)benzoyl]oxy}phenyl)prop-2-enoyl]oxy}propoxy)-3-oxoprop-1-enyl]phenyl 4-(4,4,4-trifluorobutoxy)-2-fluorobenzoate :

6.75g (27.9 mmol) of 2-(2,4-dinitrophenyl)-propan-1,3-diol, 23.0g (55.7 mmol) of compound 5, 170mg (1.4 mmol) of 4-dimethylaminopyridine are dissolved in 100 mL of dichloromethane. 8.64g (55.7 mmol) of N-(3-dimethylaminopropyl)-N'-ethylcarbodiimide hydrochloride (EDC hydrochloride) are added at 0°C. The solution is stirred for 1h at 0°C and allowed to stir at room temperature overnight. After 22 hours at room temperature, the reaction mixture is partitioned between dichloromethane and water. The organic phase is washed repeatedly with water, dried over sodium sulfate, filtrated and concentrated under reduced pressur. Chromatography of the residue on 200g silica gel using toluene: ethyl acetate 95:5 as eluent and crystallization from ethyl acetate: hexane mixture yielded 21.3g (74%) of compound 22 as colorless crystals.

### Example 23/Preparation of compound 23

### 4-((1E)-3-{[4,4'-diamino-2'-({[(2E)-3-(4-{[2-fluoro-4-(4,4,4-trifluorobutoxy)benzoyl]oxy}phenyl)prop-2-enoyl]oxy}methyl)-1,1'-biphenyl-2-yl]methoxy}-3-oxoprop-1-enyl)phenyl 2-fluoro-4-(4,4,4-trifluorobutoxy)benzoate

9.15g (8.38 mmol) of compound 21 are dissolved in a mixture of 54mL of N,N-dimethylformamide and 6mL water. 13.9g (51.4 mmol) ferric chloride hexahydrate are added. 5.60g (85.7 mmol) zinc powder is added portion wise within 60 minutes. The mixture is allowed to react for 2 hours. The reaction mixture is partitioned between ethyl acetate and water and filtrated. The organic phase is washed repeatedly with water, dried over sodium sulfate, filtrated and concentrated under reduced pressur.Filtration of the residue on 200g silica gel using toluene:ethyl acetate 1:3 as eluent and crystallization from ethyl acetate:hexane mixture yielded 6.05g of compound 23 as colourless crystals.

### Example 24/Preparation of compound 24

### 4-[(1E)-3-(2-(2,4-diaminophenyl)-3-{[(2E)-3-(4-{[2-fluoro-4-(4,4,4-trifluorobutoxy)benzoyl]oxy}phenyl)prop-2-enoyl]oxy}propoxy)-3-oxoprop-1-enyl]phenyl 4-(4,4,4-trifluorobutoxy)-2-fluorobenzoate :

8.63g (8.38 mmol) of compound 22 are dissolved in a mixture of 54mL of N,N-dimethylformamide and 6mL water. 13.9g (51.4 mmol) ferric chloride hexahydrate are added. 5.60g (85.7 mmol) zinc powder is added portionwise within 60 minutes. The mixture is allowed to react for 2 hours. The reaction mixture is partitioned between ethyl acetate and water and filtrated. The organic phase is washed repeatedly with water, dried over sodium sulfate, filtrated and concentrated under reduced pressur. Filtration of the residue on 200g silica gel using toluene:ethyl acetate 1:3 as eluent and crystallization from ethyl acetate:hexane mixture yielded 6.50g of compound 24 as colourless crystals.

### Example 25:

0.277g (1.24 mmol) of 2,3,5-tricarboxycyclopentylacetic-1,2:3,4-dianhydride is added to a solution of 1.20g (1.24 mmol) of compound 24 in 3.51 mL of NMP. Stirring is then carried out at 0°C for 2 hours. The mixture is subsequently allowed to react for 21 hours at room temperature. The polymer mixture is diluted with 25mL of THF, precipitated into 800mL of water to yield, after drying at room temperature under vaccum, 1.1g of polyamic acid 25 in the form of a white powder: [h] = 0.19dUg

### Example 26:

Analogous to Example 25 the following diamine is used for the preparation of polyamic acid with 2,3,5-tricarboxycyclopentylacetic-1,2:3,4-dianhydride.

### Compound 23

yield Polyamic acid 26 as white powder; [η] = 0.48 dL/g

| | |
|---|---|
| 4-((1*E*)-3-{[4,4'-diamino-2'-({[(2*E*)-3-(4-{[2-fluoro-4-(4,4,4-trifluorobutoxy)benzoyl]oxy}phenyl)prop-2-enoyl]oxy}methyl)-1,1'-biphenyl-2-yl]methoxy}-3-oxoprop-1-enyl)phenyl 2-fluoro-4-(4,4,4-trifluorobutoxy)benzoate | ¹H NMR 300MHz DMSO d6: |
| | 8.04 (d, 2H), 7.75 (m, 4H), 7.64 (d, 2H), 7.29 (d, 4H), 6.97 (m, 4H), 6.71 (d, 2H), 6.60 (dd, 2H), 6.54 (d, 2H), 6.53 (m, 2H), 5.15 (s, 4H), 4.83 (s, 4H), 4.17 (t, 4H), 2.43 (m, 4H), 1.97 (m, 4H |
| Compound 23 | |
| 4-[(1*E*)-3-(2-(2,4-diaminophenyl)-3-{[(2*E*)-3-(4-{[2-fluoro-4-(4,4,4-trifluorobutoxy)benzoyl]oxy}phenyl)prop-2-enoyl]oxy}propoxy)-3-oxoprop-1-enyl]phenyl4-(4,4,4-trifluorobutoxy)-2-fluorobenzoate | ¹H NMR 300MHz DMSO d6: |
| | 7.96 (t, 2H), 7.72 (d, 4H), 7.66 (d, 2H), 7.24 (d, 4H), 7.01 (dd, 2H), 6.93 (dd, 2H), 6.72 (d, 1H), 6.65 (d, 2H), 5.95 (d, 1H), 5.89 (dd, 1H), 4.81 (s, 2H), 4.69 (s, 2H), 4.37 (br, 4H), 4.17 (t, 4H), 3.44 (q, 1H), 2.44 (m, 4H), 1.99 (m, 4H). |
| Compound 24 | |
| polyamic acid 25 | ¹H NMR 300MHz DMSO d6: |
| | 12.39 (s, 2H), 10.11 (m, 1H), 9.64 (m, 1H), 7.95 (s, 2H), 7.71 (m, 9H), 7.24 (s, 4H), 6.88 (m, 4H), 6.57 (m, 2H), 4.45 (m, 4H), 4.13 (s, 4H), 3.72 (s, 1H), 3.43-2.49 (m, 8H), 2.42 (m, 4H), 1.95 (m, 4H). |
| polyamic acid 26 | ¹H NMR 300MHz DMSO d6: |
| | 12.42 (s, 2H), 10.21 (m, 2H), 8.02-7.70 (m, 12H), 7.27-7.02 (m, 10H), 6.55 (m, 2H), 4.96 (s, 4H), 4.15 (s, 4H), 3.43-2.49 (m, 8H), 2.42 (m, 4H), 1.95 (m, 4H). |

### Example 27

Another liquid crystal cell is prepared in the same manner as describe in example 15, except that Polyamic acid 25 is used and spin speed of 1500rpm for 30seconds is used.
Pretilt was measured in the same manner as in Example 15, which was 88.05°.

### Example 28/ Preparation of 3-methoxv-4-(4,4,4-trifluorobutoxy)benzoic acid compound 28

This compound is prepared according to the process described in example 7 for compound 7 with the proviso that bromopentane is replaced by 4-iodo-1,1,1-trifluorobutane.

### Example 29/ Preparation of 4-formylphenyl 3-methoxy-4-(4,4,4-trifluorobutoxy)benzoate compound 29

This compound is prepared according to the process described in example 3 for compound 3 with the proviso that compound 2 is replaced by compound 28.

### Example 30/ Preparation of (2E)-3-(4-{[3-methoxy-4-(4,4,4-trifluorobutoxy)benzoyl]oxy}phenyl)prop-2-enoic acid compound 30

This compound is prepared according to the process described in example 4 for compound 4 with the proviso that compound 3 is replaced by compound 29.

### Example 31/ Preparation of 4-[(1E)-3-({6-[(3,5-dinitrobenzoyl)oxy]hexyl}oxy)-3-oxoprop-1-enyl]phenyl 3-methoxy-4-(4,4,4-trifluorobutoxy)benzoate compound 31

This compound is prepared according to the process described in example 5 for compound 5B with the proviso that compound 4B is replaced by compound 30.

### Example 32/ Preparation of 4-[(1E)-3-({6-[(3,5-diaminobenzoyl)oxy]hexyl}oxy)-3-oxoprop-1-enyl]phenyl 3-methoxy-4-(4,4,4-trifluorobutoxy)benzoate compound 32

This compound is prepared according to the process described in example 6 for compound 6 with the proviso that compound 5B is replaced by compound 31.

### Example 33/ Preparation of 3,4-bis[(4,4,5,5,5-pentafluoropentyl)oxy]benzoic acid compound 33

This compound is prepared according to the process described in example 7 for compound 7 with the proviso that bromopentane is replaced by 5-iodo-1,1,1,2,2-pentafluoropentane and methyl vanillate is replaced by ethyl 3,4-dihydroxybenzoate.

### Example 34/ Preparation of 4-formylphenyl 3,4-bis[(4,4,5,5,5-pentafluoropentyl)oxy]benzoate compound 34

This compound is prepared according to the process described in example 3 for compound 3 with the proviso that compound 2 is replaced by compound 33.

### Example 35/ Preparation of (2E)-3-[4-({3,4-bis[(4,4,5,5,5-pentafluoropentyl)oxy]benzoyl}oxy)phenyl]prop-2-enoic acid compound 35

This compound is prepared according to the process described in example 4 for compound 4 with the proviso that compound 3 is replaced by compound 34.

### Example 36/ Preparation of 4-{(1E)-3-[2-(2,4-dinitrophenyl)ethoxy]-3-oxoprop-1-enyl}phenyl 3,4-bis[(4,4,5,5,5-pentafluoropentyl)oxy]benzoate compound 36

This compound is prepared according to the process described in example 5 for compound 5 with the proviso that compound 4 is replaced by compound 35.

### Example 37/ Preparation of 4-{(1E)-3-[2-(2,4-diaminophenyl)ethoxy]-3-oxoprop-1-enyl}phenyl 3,4-bis[(4,4,5,5,5-pentafluoropentyl)oxy]benzoate compound 37

This compound is prepared according to the process described in example 6 for compound 6 with the proviso that compound 5 is replaced by compound 36.

### Example 38/Preparation of 2-fluoro-4-[(4,4,5,5,5-pentafluoropentyl)oxy]benzonitrile compound 38

This compound is prepared according to the process described in example 1 for compound 1 with the proviso that 4-iodo-1,1,1-trifluorobutane is replaced by 5-iodo-1,1,1,2,2-pentafluoropentane.

### Example 39/ Preparation of 2-fluoro-4-[(4,4,5,5,5-pentafluoropentyl)oxy]benzoic acid compound 39

This compound is prepared according to the process described in example 2 for compound 2 with the proviso that compound 1 is replaced by compound 38.

### Example 40/ Preparation of 4-formylphenyl 2-fluoro-4-[(4,4,5,5,5-pentafluoropentyl)oxy]benzoate compound 40

This compound is prepared according to the process described in example 3 for compound 3 with the proviso that compound 2 is replaced by compound 39.

### Example 41/ Preparation of (2E)-3-[4-({2-fluoro-4-[(4,4,5,5,5-pentafluoropentyl)oxy]benzoyl}oxy)phenyl]prop-2-enoic acid compound 41

This compound is prepared according to the process described in example 4 for compound 4 with the proviso that compound 3 is replaced by compound 40.

### Example 42/ Preparation of 4-{(1E)-3-[2-(2,4-dinitrophenyl)ethoxy]-3-oxoprop-1-enyl}phenyl 2-fluoro-4-[(4,4,5,5,5-pentafluoropentyl)oxy]benzoate compound 42

This compound is prepared according to the process described in example 5 for compound 5 with the proviso that compound 4 is replaced by compound 41.

### Example 43/ Preparation of 4-{(1E)-3-[2-(2,4-diaminophenyl)ethoxy]-3-oxoprop-1-enyl}phenyl 2-fluoro-4-[(4,4,5,5,5-pentafluoropentyl)oxy]benzoate compound 43

This compound is prepared according to the process described in example 6 for compound 6 with the proviso that compound 5 is replaced by compound 42.

### Example 44/ Preparation of methyl 2-fluoro-4-(4,4,4-trifluorobutoxy)benzoate compound 44

3.0g (11.3 mmol) of 2-fluoro-4-(4,4,4-trifluorobutoxy)benzoic acid is refluxed in 40mL of methanol with 2 drops of sulphuric acid for 22h. The solvent is evaporated under vacuum. The crude material is used without further purification.

### Example 45/ Preparation of [2-fluoro-4-(4,4,4-trifluorobutoxy)phenyl]methanol compound 45

3.13g (11.2 mmol) of compound 44 in 40mL of THF is cooled to 0°C. To the solution is added 8.8mL of LiAIH4 THF solution. After 3 hours, the solution is quenched by addition of 20 mL HCl 1N. The product is extracted with AcOEt, washed with 200mL of water. The organic phase is dried over sodium sulphate, and the solvent is removed under vaccum to afford 2.32g of compound 45 as orange oil.

### Example 46/ Preparation of 1-(bromomethyl)-2-fluoro-4-(4,4,4-trifluorobutoxy)benzene compound 46

2.00 g (7.93 mmol) of compound 45 and 3.42g (10.31 mmol) of CBr4 are solved in 20mL of THF. To the solution is added 2.70g (10.31 mmol) of triphenylphosphine. After 1 hour, the mixture is filtrated over a plug of silica gel and eluted with a mixture of AcOEt/hexane 1/1. The excess of solvent is removed under vaccum to afford 2.28g of compound 46 as a colourless oil.

### Example 47/ Preparation of 4-{[2-fluoro-4-(4,4,4-trifluorobutoxy)benzyl]oxy}benzaldehyde compound 47

0.66 g (2.09 mmol) of compound 46, 0.32g (2.30 mmol) of K2CO3 and 0.25g (2.30 mmol) of 4-hydroxybenzaldehyde are mixed in 10mL of NMP. The mixture is heated to 65°C for 1 hour. The solution is poured on 100mL of HCI 0.1N. The solid is filtrated and dried under vaccum to give compound 47.

### Example 48/ Preparation of (2E)-3-(4-{[2-fluoro-4-(4,4,4-trifluorobutoxy)benzyl]oxy}phenyl)prop-2-enoic acid compound 48

This compound is prepared according to the process described in example 4 for compound 4 with the proviso that compound 3 is replaced by compound 47

### Example 49/ Preparation of 2-(2,4-dinitrophenyl)ethyl (2E)-3-(4-{[2-fluoro-4-(4,4,4-trifluorobutoxy)benzyl]oxy}phenyl)prop-2-enoate compound 49

This compound is prepared according to the process described in example 5 for compound 5 with the proviso that compound 4 is replaced by compound 48.

### Example 50/ Preparation of 2-(2,4-diaminophenyl)ethyl (2E)-3-(4-{[2-fluoro-4-(4,4,4-trifluorobutoxy)benzyl]oxy}phenyl)prop-2-enoate compound 50

This compound is prepared according to the process described in example 6 for compound 6 with the proviso that compound 5 is replaced by compound 49.

### Example 51/Preparation of 1,2-difluoro-3-(4,4,4-trifluorobutoxy)benzene compound 51

This compound is prepared according to the process described in example 1 for compound 1 with the proviso that 3-fluoro-4-hydroxybenzonitrile is replaced by 2,3-difluorophenol.

### Example 52/ Preparation of 2,3-difluoro-4-(4,4,4-trifluorobutoxy)phenylboronic acid compound 52

5.0g (20.8 mmol) of compound 51 is solved in 58mL of THF and cooled to -78°C. To this solution is added dropwise 7.71mL (20.8 mmol) of a solution of BuLi in hexane. After 3 hours a mixture of 2.84mL (24.98 mmol) of trimethylborate in 20mL THF is added to the previous solution. After addition the solution is stirred overnight at room temperature. The mixture is quenched by addition of 20ml HCl 1N. The resulting emulsion is treated by addition of 10mL of concentrated HCI. The mixture is stirred for two hours. The organic phase is extracted with ethyl acetate, washed with water, dried over sodium sulphate. The excess of solvent is removed under vaccum to give 5.3g of compound 52 as a brown solid.

### Example 53/ Preparation of 2',3'-difluoro-4'-(4,4,4-trifluorobutoxy)-1,1'-biphenyl-4-carbaldehyde compound 53

5.3g (18.66 mmol) of compound 52, 3.4g (18366 mmol) of 4-bromobenzaldehyde and 862mg (0.74mmol) of tetrakis (triphenylphosphine) palladium are mixed in 90mL of toluene. The mixture is degassed and purged with argon. The reaction is heated to 50°C and 90mL of Na2CO3 2M is slowly added. The reaction is heated to 90°C and stirred for 2 days. After cooling to room temperature, the mixture is quenched with 50mL HCI 25%. The organic phase is extracted with ethyl acetate and dried over sodium sulfate. The excess of solvent is removed under vaccum. The product 53 is purified by flash chromatography on silica gel with a mixture of toluene/AcOEt 98/2.

### Example 54/ Preparation of (2E)-3-[2',3'-difluoro-4'-(4,4,4-trifluorobutoxy)-1,1'-biphenyl-4-yl]prop-2-enoic acid compound 54

This compound is prepared according to the process described in example 4 for compound 4 with the proviso that compound 3 is replaced by compound 53.

### Example 55/ Preparation of 2-(2,4-dinitrophenyl)ethyl (2E)-3-[2',3'-difluoro-4'-(4,4,4-trifluorobutoxy)-1,1'-biphenyl-4-yl]prop-2-enoate compound 55

This compound is prepared according to the process described in example 5 for compound 5 with the proviso that compound 4 is replaced by compound 54.

### Example 56/ Preparation of 2-(2,4-diaminophenyl)ethyl (2E)-3-[2',3'-difluoro-4'-(4,4,4-trifluorobutoxy)-1,1'-biphenyl-4-yl]prop-2-enoate compound 56

This compound is prepared according to the process described in example 6 for compound 6 with the proviso that compound 5 is replaced by compound 55.

### Example 57/ Preparation of 4-{(1E)-3-[(3,5-dinitrobenzyl)oxy]-3-oxoprop-1-enyl}phenyl 2-fluoro-4-(4,4,4-trifluorobutoxy)benzoate compound 57

This compound is prepared according to the process described in example 5 for compound 5 with the proviso that compound 2,4-dinitrophenethanol is replaced by 3,5-dinitrobenzylalcohol.

### Example 58/ Preparation of 4-{(1E)-3-[(3,5-diaminobenzyl)oxy]-3-oxoprop-1-enyl}phenyl 2-fluoro-4-(4,4,4-trifluorobutoxy)benzoate compound 58

This compound is prepared according to the process described in example 6 for compound 6 with the proviso that compound 5 is replaced by compound 57.

### Example 59:

Analogous to Example 10 the following diamines are used for the preparation of polyamic acid with 2,3,5-tricarboxycyclopentylacetic-1,2:3,4-dianhydride.

### Compound 37

yield Polyamic acid 60 as white powder; [η] = 0.24 dUg

### Compound 43

yield Polyamic acid 61 as white powder; [η] = 0.28 dUg

### Compound 50

yield Polyamic acid 62 as white powder; [η] = 0.25 dUg

### Compound 56

yield Polyamic acid 63 as white powder; [η] = 0.21 dUg

### Compound 58

yield Polyamic acid 64 as white powder; [η] = 0.32 dUg

### Example 60:

Analogous to Example 10 the following diamines are used for the preparation of polyamic Acid with 1,2,3,4-cyclobutantetracarboxylic acid dianhydride.

### Compound 32

yield Polyamic acid 59 as white powder; [η] = 0.38 dUg

| Diamine structure | Analytical datas |
|---|---|
| 2-(2,4-diaminophenyl)ethyl (2*E*)-3-(4-{[2-fluoro-4-(4,4,4-trifluorobutoxy)benzyl]oxy}phenyl)prop-2-enoate compound 50 | ¹H NMR CDCl₃ 300MHz |
| | 7.67 (d, 1H), 7.50 (d, 2H), 7.38 (t, 1H), 7.01 (d, 2H), 6.85 (d, 1H), 6.69 (m, 2H), 6.35 (d, 1H), 6.10 (dd, 1H), 6.09 (d, 1H), 5.09 (s, 2H), 4.32 (t, 2H), 4.03 (t, 2H), 3.70 (br, 4H), 2.83 (t, 2H), 2.34 (m, 2H), 2.07 (m, 2H). |
| 4-{(1 *E*)-3-[(3,5-diaminobenzyl)oxy]-3-oxoprop-1-enyl}phenyl2-fluoro-4-(4,4,4-trifluorobutoxy)benzoate compound 58 | ¹H NMR 300MHz DMSO d6: |
| | 8.05 (t, 1H), 7.84 (d, 2H), 7.71 (d, 1H), 7.32 (d, 2H), 7.00 (m, 2H), 6.68 (d, 1H), 5.82 (d, 2H), 5.78 (t, 1H), 4.93 (s, 2H), 4.76 (s, 2H), 4.19 (t, 2H), 2.45 (m, 2H), 2.00 (m, 2H) |
| 2-(2,4-diaminophenyl)ethyl (2*E*)-3-[2',3'-difluoro-4'-(4,4,4-trifluorobutoxy)-1,1'-biphenyl-4-yl]prop-2-enoate Compound 56 | ¹H NMR 300MHz DMSO d6: |
| | 7.82 (d, 2H), 7.69 (d, 1H), 7.59 (d, 2H), 7.36 (m, 1H), 7.14 (m, 1H), 6.69 (d, 1H), 6.61 (d, 1H), 5.90 (d, 1H), 5.82 (dd, 1H), 4.65 (s, 2H), 4.58 (s, 2H), 4.22 (m, 4H), 2.69 (t, 2H), 2.45 (m, 2H), 2.00 (m, 2H) |
| 4-{(1 *E*)-3-[2-(2,4-diaminophenyl)ethoxy]-3-oxoprop-1-enyl}phenyl 2-fluoro-4-[(4,4,5,5,5-pentafluoropentyl)oxy]benzoate Compound 43 | ¹H NMR 300MHz DMSO d6: |
| | 8.04 (t, 1H), 7.84 (d, 2H), 7.71 (d, 1H), 7.34 (d, 2H), 7.09 (dd, 1H), 7.01 (dd, 1H), 6.66 (d, 1H), 6.62 (d, 1H), 5.90 (d, 1H), 5.82 (dd, 1H), 4.66 (s, 2H), 4.58 (s, 2H), 4.21 (t, 2H), 4.19 (t, 2H), 2.69 (t, 2H), 2.34 (m, 2H), 2.01 (m, 2H) |
| 4-{(1*E*)-3-[2-(2,4-diaminophenyl)ethoxy]-3-oxoprop-1-enyl}phenyl 3,4-bis[(4,4,5,5,5-pentafluoropentyl)oxy]benzoate Compound 37 | Masse spectroscopy |
| | 755.1 (MH+) ESI+ |
| | 813.2 (M+AcO-) ESI- |
| 4-[(1*E*)-3-({6-[(3,5-diaminobenzoyl)oxy]hexyl}oxy)-3-oxoprop-1-enyl]phenyl 3-methoxy-4-(4,4,4-trifluorobutoxy)benzoate Compound 32 | Masse spectroscopy |
| | 658.4 (M+) ESI+ |

| Polymer structure | Analytical datas |
|---|---|
| Polyamic acid 59 | ¹H NMR 400MHz DMSO d6: |
| | 12.35 (s, 2H), 10.73 (s, 2H), 8.32 (br, 1H), 7.98 (br, 2H), 7.76 (br, 3H), 7.69 (d, 1H), 7.58 (s, 1H), 7.31 (br, 2H), 7.14 (d, 1H), 6.65 (br, 1H), 4.15 (m, 6H), 3.85 (br, 1H), 3.84 (s, 3H) 3.61 (m, 4H), 2.42 (m, 2H), 1.99 (m, 2H), 1.74 (m, 5H), 1.43 (br, 4H) |
| Polyamic acid 60 | ¹H NMR 400MHz DMSO d6: |
| | 12.35 (s, 2H), 10.05 (br, 1H), 9.50 (br, 1H), 7.90-7.00 (br, 11H), 6.59 (br, 1H), 4.25 (br, 2H), 4.14 (br, 4H), 3.63-2.49 (m, 10H), 2.45 (m, 4H), 1.96 (m, 4H). |
| Polyamic acid 61 | ¹H NMR 400MHz DMSO d6: |
| | 12.35 (s, 2H), 10.05 (br, 1H), 9.50 (br, 1H), 8.04 (s, 1H), 7.90-7.16 (m, 8H), 7.06 (d, 2H), 6.60 (br, 1H), 4.20 (br, 4H), 3.66-2.49 (m, 10H), 2.45 (m, 2H), 1.96 (m, 2H). |
| Polyamic acid 62 | ¹H NMR 300MHz DMSO d6: |
| | 12.36 (br, 2H), 10.05 (m, 1H), 9.52 (m, 1H), 8.11 (br, 1H), 7.81-6.85 (m, 10H), 6.69 (d, 1H), 5.07 (s, 2H), 4.25 (br, 2H), 4.16 (br, 2H), 3.43-2.49 (m, 10H), 2.45 (m, 2H), 1.96 (m, 2H). |
| Polyamic acid 63 | ¹H NMR 300MHz DMSO d6: |
| | 12.33 (s, 2H), 10.05 (br, 1H), 9.50 (br, 1H), 7.82-7.7.08 (m, 7H), 6.66 (br, 1H), 4.20 (br, 4H), 3.66-2.49 (m, 10H), 2.45 (m, 2H), 1.96 (m, 2H). |
| Polyamic acid 64 | ¹H NMR 300MHz DMSO d6: |
| | 12.40 (br, 2H), 10.08 (m, 2H), 8.11-7.60 (br, 5H), 7.43 (m, 4H), 7.01 (m, 2H), 6.69 (m, 1H), 5.05 (s, 2H), 4.16 (br, 2H), 3.43-2.49 (m, 8H), 2.45 (m, 2H), 1.96 (m, 2H). |

### Example 61:

Analogous to Example 10 the following mixture of diamine is used for the preparation of polyamic Acid with 1,2,3,4-cyclobutantetracarboxylic acid dianhydride.
A mixture of 1,2,3,4-cyclobutantetracarboxylic acid dianhydride and compound 6 and 4-{(1E)-3-[2-(2,4-diaminophenyl)ethoxy]-3-oxoprop-1-enyl}phenyl 4-(4,4,4-trifluorobutoxy)benzoate 50:50 (mole ratio) yield Polyamic acid 65 as white powder; [η] = 0.64 dUg
¹H NMR 300MHz DMSO d6: 12.51 (s, 2H), 10.19 (s, 1H), 9.59 (s, 1H), 8.08-7.61 (m, 6H), 7.43-6.94 (m, 7H), 6.65-6.59 (m, 1H), 4.30 (s, 2H), 4.16 (s, 2H), 3.83-3.58 (m, 4H), 2.95 (s, 2H), 2.39 (m, 2H), 1.96 (m, 2H).

### Example 62:

Another liquid crystal cell is prepared in the same manner as describe in example 15, except that Polyamic acid 25 is used and spin speed of 1200rpm for 30seconds is used.
Pretilt is measured in the same manner as in Example 15, which is 88.15°.

### Example 63:

Another liquid crystal cell is prepared in the same manner as describe in example 15, except that Polyamic acid 26 is used and spin speed of 1400rpm for 30seconds is used.
Pretilt is measured in the same manner as in Example 15, which is 88.60°.

### Example 64:

Another liquid crystal cell is prepared in the same manner as describe in example 15, except that Polyamic acid 59 is used and spin speed of 1600rpm for 30seconds is used.
Pretilt is measured in the same manner as in Example 15, which is 89.33°.

### Example 65:

Another liquid crystal cell is prepared in the same manner as describe in example 15, except that Polyamic acid 60 is used and spin speed of 1900rpm for 30seconds is used.
Pretilt is measured in the same manner as in Example 15, which is 87.44°.

### Example 66:

Another liquid crystal cell is prepared in the same manner as describe in example 15, except that Polyamic acid 61 is used and spin speed of 1800rpm for 30seconds is used.
Pretilt is measured in the same manner as in Example 15, which is 88.52°.

### Example 67:

Another liquid crystal cell is prepared in the same manner as describe in example 15, except that Polyamic acid 62 is used and spin speed of 1200rpm for 30seconds is used.
Pretilt is measured in the same manner as in Example 15, which is 77.2°.

### Example 68:

Another liquid crystal cell is prepared in the same manner as describe in example 15, except that Polyamic acid 63 is used and spin speed of 1200rpm for 30seconds is used.
Pretilt is measured in the same manner as in Example 15, which is 89.61 °.

### Example 69:

Another liquid crystal cell is prepared in the same manner as describe in example 15, except that Polyamic acid 64 is used and spin speed of 1600rpm for 30seconds is used.
Pretilt is measured in the same manner as in Example 15, which is 87.84°.

## Claims

1. A compound, which is an aromatic diamine, comprising a mono- or multichromophoric lateral-substituted portion represented by formula (I) 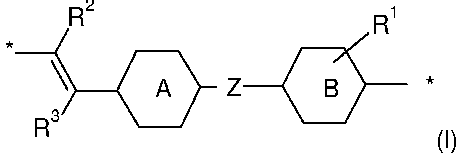 wherein
A represents an unsubstituted carbocyclic or heterocyclic aromatic selected from a monocyclic ring of five or six atoms, two adjacent monocyclic rings of five or six atoms, a bicyclic ring system of eight, nine or ten atoms, or a tricyclic ring system of thirteen or fourteen atoms; of eight, nine or ten atoms, or a tricyclic ring system of thirteen or fourteen atoms;
B substituted carbocyclic or heterocyclic aromatic selected from a monocyclic ring of five or six atoms, two adjacent monocyclic rings of five or six atoms, a bicyclic ring system of eight, nine or ten atoms, or a tricyclic ring system of thirteen or fourteen atoms; of eight, nine or ten atoms, or a tricyclic ring system of thirteen or fourteen atoms;
Z represents -OCO-, -OCH₂- or a single bond,
R¹ represents fluorine, chlorine or nitrile,
R² and R³ are independently from each other hydrogen, halogen or nitrile; unsubstituted or with halogen substituted C₁-C₁₂alkyl, in which one or more C-atom, CH- or CH₂- group may be replaced by a linking group; preferably R² and R³ are H, nitrile or fluorine; and a polymerizable group.

2. A compound according to claim 1, represented by formula (IV) 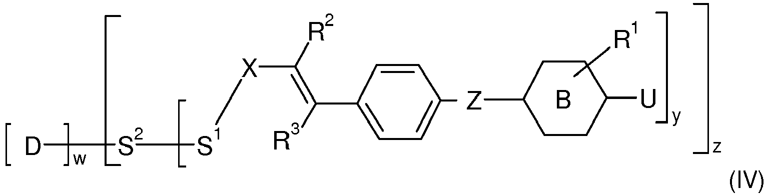 wherein
B represents an substituted benzene, phenylene, pyridine, triazine, pyrimidine, biphenylene, naphthalene, phenanthrene, triphenylene, tetraline,
R¹ represents fluorine, chlorine or nitrile,
R² and R³ are hydrogen and/or nitrile,
X is a bivalent aromatic group; or X is -CH₂-, -CO-, -CS-, -O(CO)-, -(CO)O-, -NH(CO)-, -(CO)NH-, -OCF₂-, ((C₁-C₆alkyl)-N)CO-, -(C₁-C₁₆alkylen)(CO)O-, -(C₁-C₁₆alkylen)O(CO)-, -(CO)O(C₁-C₁₆alkylen)-, -O(CO)(C₁-C₁₆alkylen)-, -O(C₁-C₁₆alkylen)-, -(C₁-C₁₆alkylen)O-, ((CH₃)N)CO-, or -S(CS)-, -O(CS), -S(CO) preferably 1,4-phenylene, O(CS), -S(CO), - CS-,
-CO- or -O(CO)-, and more preferably -CO- or -O(CO)- or 1,4-phenylene;
Z represents -OCO-, -OCH₂- or a single bond,
U is hydrogen, -CF₃, -CF₂H, -CH₂F, -Q¹-(C₁-C₆alkylen)-CF₃, -Q¹-(C₁-C₆alkylen)-CF₂H, -Q¹-(C₁-C₆alkylen)-CH₂F, -Q¹-(C₁-C₆alkylen)-CF₂CF₃, -Q¹-(C₁-C₆alkylen)-CF₂CHF₂, -Q¹-(C₁-C₆alkylen)-CF₂CH₂F, -Q¹-(C₁-C₆alkylen)-CFHCF₃, -Q¹-(C₁-C₆alkylen)-CFHCHF₂,
-Q¹-(C₁-C₆alkylen)-CFHCH₂F, -Q¹-(C₁-C₆alkylen)-CF₂CH₃, -Q¹-(C₁-C₆alkylen)-CFHCHF₂, -Q¹-(C₁-C₆alkylen)-(CF₂)₂CF₃, -Q¹-(C₁-C₆alkylen)-(CF₂)₂CHF₂, -Q¹-(C₁-C₆alkylen)-(CF₂)₂CH₂F, -Q¹-(C₁-C₆alkylen)-(CF₂)₂CH₃, -Q¹-(C₁-C₆alkylen)-(CF₂)₃CHF₂, -Q¹-(C₁-C₆alkylen)-(CF₂)₃CH₂F, -Q¹-(C₁-C₆alkylen)-(CF₂)₃CF₃, -Q¹-(C₁-C₆alkylen)-CF(CF₃)₂, -Q¹-(C₁-C₆alkylen)-CF₂(CHF)CF₃;
wherein one or more C-atom, CH- or CH₂- group is independently from each other not replaced or replaced by a linking group, and
wherein
Q¹ represents a single bond or -NH-, -NCH₃-, -NH-CO-, -CO-NH-, -NH-CO-O-, -O-CO-NH-,
-NH-CONH-, -O-, -CO-, -COO-, -OCO-, -S-, -CS-, -SCS-, -SCO-, -CH=CH-, -C≡C- or -O-CO-O-, preferably Q¹ is -O-, -CO-, -COO-, -OCO- or a single bond,
D represents an unsubstituted or substituted aromatic polymerizable group, preferably a diamine group having from 1 to 40 carbon atoms,
y and z are each independently from each other 1, 2, 3 or 4, preferably 1 or 2; w is 1,2,3,4 and preferably 1 or 2,
S¹ and S² each independently from each other represents a single bond or a spacer unit, which is a cyclic, straight-chain or branched, substituted or unsubstituted
C₁-C₂₄alkylen, in which one or more, preferably non-adjacent, C-atom, CH- or CH₂- group may be replaced by at least one linking group; and/or a non-aromatic, aromatic, unsubstituted or substituted carbocyclic or heterocyclic group of formula (V):
-(z^{1a'})_{a3'}-(Z¹-C¹)ₐ₁-(Z²-C²) ₐ₂-(Z^{1a})ₐ₃- (V)
wherein:
C¹, C² each independently represents an alicyclic or aromatic, unsubstituted or substituted carbocyclic or heterocyclic group, preferably C¹ and C² are connected at the opposite positions via Z¹ ,Z² , Z^{1a} and/or Z^{1a'} so that groups S¹ and/or S² have a long molecular axis, and
Z¹, Z², Z^{1a} , Z^{1a'} each independently represents a bridging group, and
a₁, a_{3'}, a₂, a₃ each independently represents an integer from 0 to 3, such that a₁ + a_{3'} + a₂+ a₃ ≤ 6, preferably a₃ and or a_{3'} is 1 and a₁ + a₂ ≤ 4.

3. A compound according to claim 1, represented by formula (XVI) 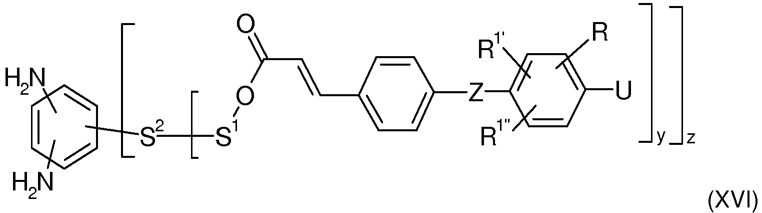 wherein
S¹, S², Z, U, y and z have the above given meanings and preferences as described in claim 2; and R, R^{1'}, R^{1"} have independently from each other the meaning of hydrogen, fluorine, nitrile and/or chlorine or U, with the proviso that at least one R, R^{1'} or R^{1"} is not hydrogen; or 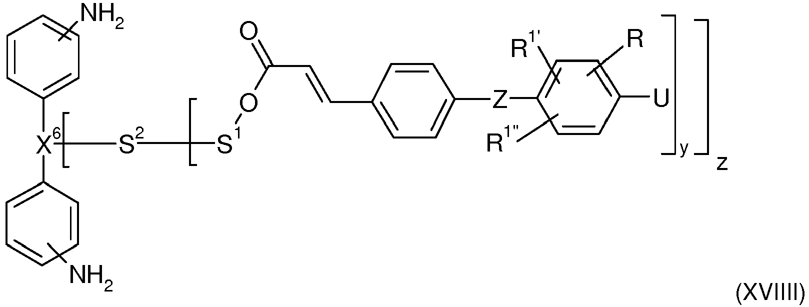 wherein U, R, R^{1'} and R^{1"} S², S¹, Z, y and z have the meanings described above for (XVI) ; and wherein X⁶ is a single bond or straight-chain or branched, substituted or unsubstituted C₁-C₆alkylen; or 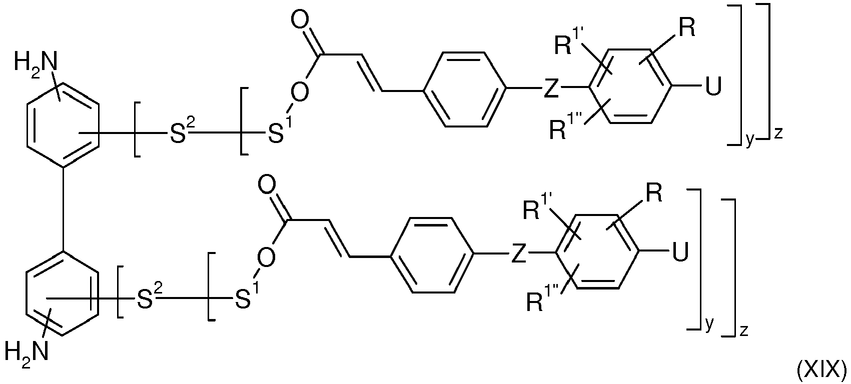 wherein U, R, R^{1'}, R^{1"} S², S¹, Z, y and z have the meanings described above for (XVI).

4. A compound according to claim 1, comprising at least one lateral-substituted portion represented by formulae (XVIIa), (XVIIb), (XVIIc), (XVIIf), (XVIII) or (XIX) 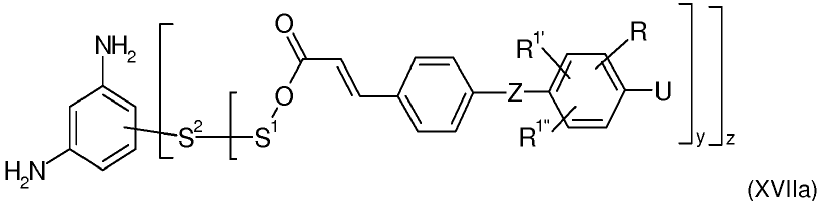 wherein
S¹, S², Z, U, y and z have the above given meanings and preferences as described in claim 2; and R, R^{1'}, R^{1"} have independently from each other the meaning of hydrogen, fluorine, nitrile and/or chlorine or U, with the proviso that at least one R, R^{1'} or R^{1"} is not hydrogen; and
S¹ and S² each independently from each other represent a single bond or a straight-chain or branched, substituted, or unsubstituted C₁-C₁₂alkylen; and in which one or more, preferably non
-adjacent, C-atom, CH- or CH₂- group may be replaced by at least one linking group; or a compound of formulae (XVIIb) or (XVIIc) 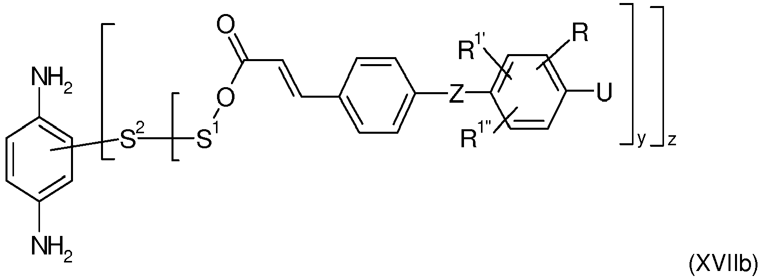 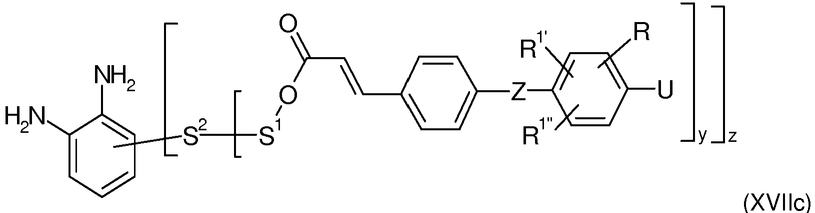 wherein
S¹, S², y, z, R, R^{1'}, R^{1"}, Z and U have the above given meanings and preferences; or a compound of formula (XVIIf) 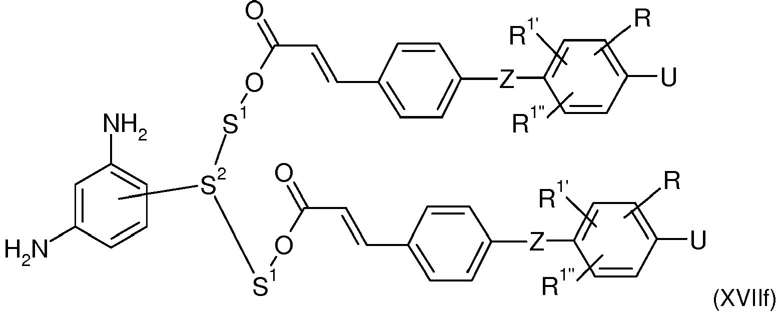 wherein
S¹, S², R¹, R^{1'}, R^{1"}, Z and U have the above given meanings and preferences; or
compound of formulae (XVIII) or (XIX) 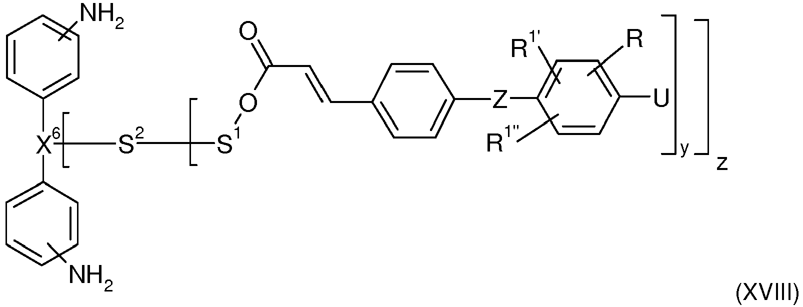 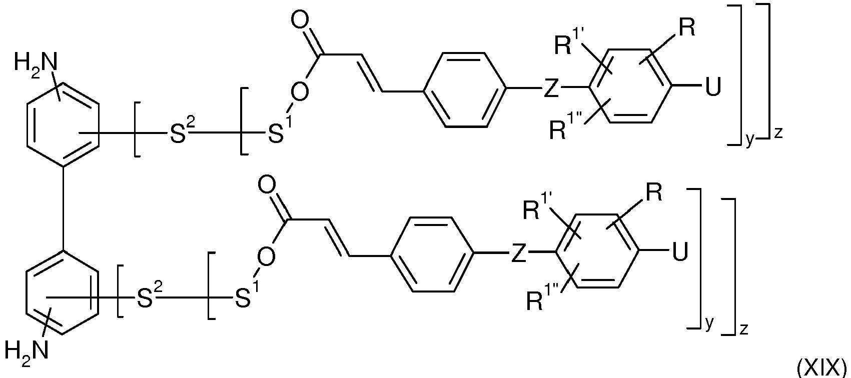 S¹, S², y, z, R, R^{1'}, R^{1"}, Z and U have the above given meanings and preferences, and wherein X⁶ is a single bond or straight-chain or branched, substituted or unsubstituted C₁-C₆alkylen.

5. A compound according to claim 1 comprising at least one lateral-substituted portion represented by formulae (XX), (XXI), (XXII), (XXIII), (XXIV), (XXV), (XXVa) or (XXVb) 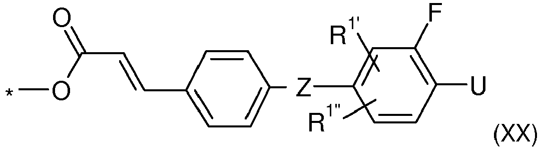 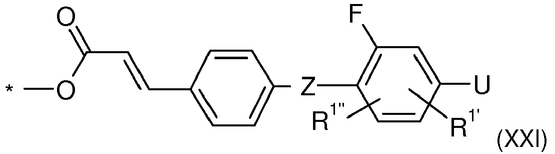 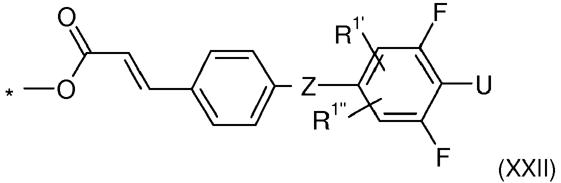 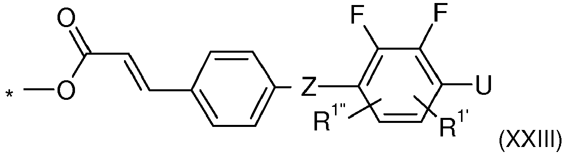 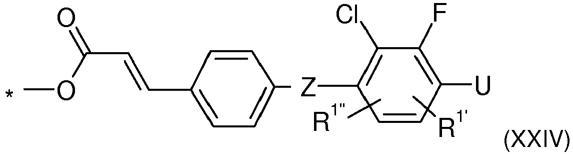 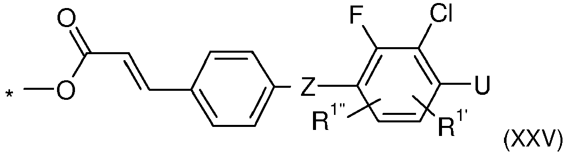 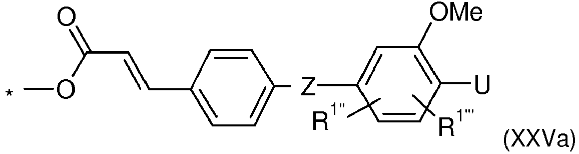 wherein in (XX), (XXI), (XXII), (XXIII), (XXIV), (XXV), (XXVa)
U, Z, have the meanings as described in claim 2, and
R^{1'}, R^{1"} and R^{1"'} have independently from each other the meaning of hydrogen, fluorine, nitrile and/or chlorine, 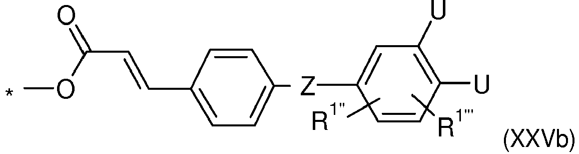
wherein
U, Z, have the meanings as described in claim 2, and
R^{1"'} and R^{1"'} have independently from each other the meaning of hydrogen, fluorine, nitrile and/or chlorine, with the proviso that at least one R^{1"} or R^{1"'} is not hydrogen.

6. A compound according to claim 1 comprising at least one lateral-substituted portion represented by formulae (XXVc), (XXVd), (XXVe), (XXVf), (XXVg), (XVIIII), (XIX) comprising a polymer having in a side chain at least one lateral-substituted portion represented by formulae (XXVc), (XXVd), (XXVe), (XXVf), (XXVg), (XVIIII), (XIX) 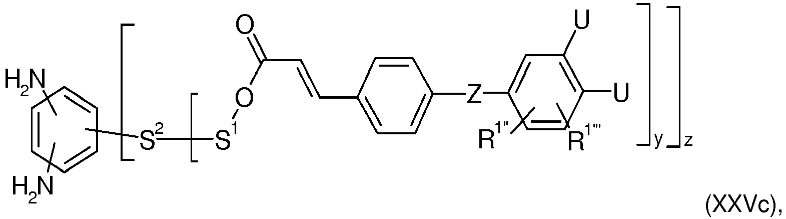 wherein
S¹, S², Z, U, y and z have independently from each other the meanings and preferences as described in claim 2; and R^{1"}, R^{1'"} have independently from each other the meaning of hydrogen, fluorine, nitrile and/or chlorine or U, with the proviso that at least one R^{1"} or
R^{1"'} is not hydrogen; 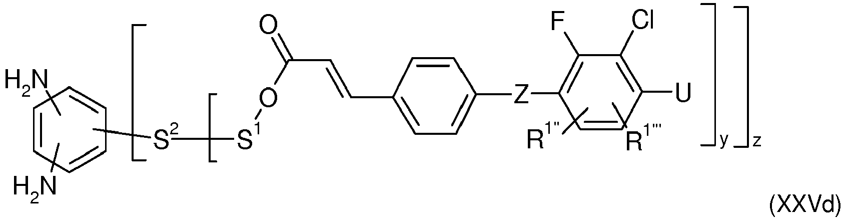 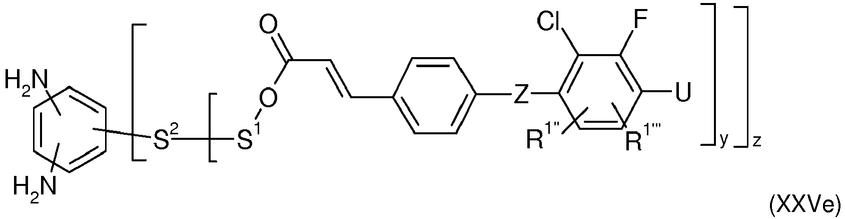 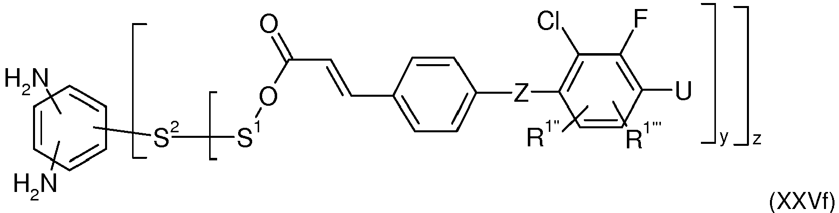 wherein
S¹, S², Z, U, y and z have independently from each other the meanings and preferences as described in claim 2; and R^{1"}, R^{1"'} have independently from each other the meaning of hydrogen, fluorine, nitrile and/or chlorine or U, preferably of hydrogen; 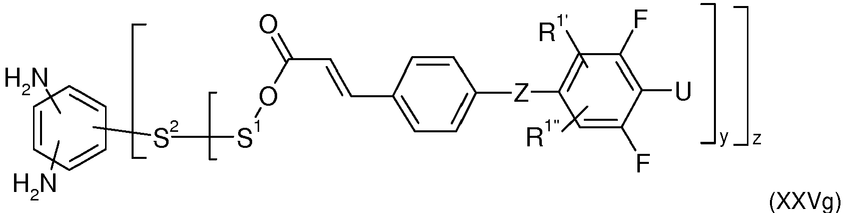 wherein
S¹, S², y, z, Z and U have the above given meanings as described in claim 2; and
R^{1'}, R^{1"} have independently from each other the meaning of hydrogen, fluorine, nitrile and/or chlorine or U, preferably of hydrogen; and 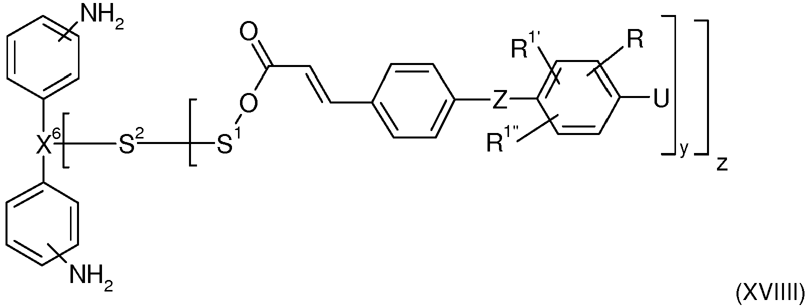 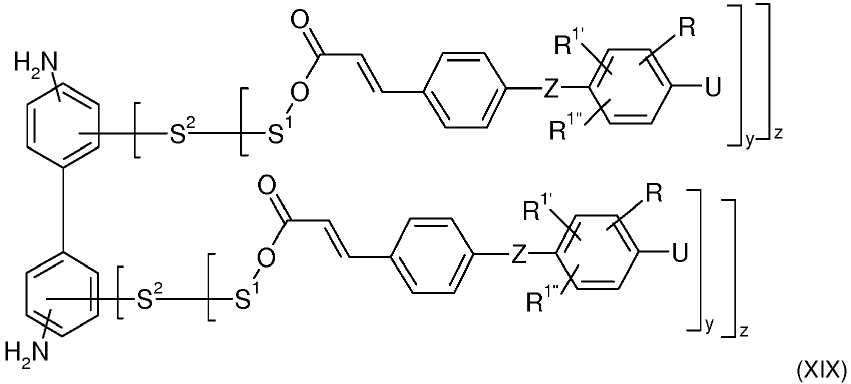
wherein
S¹, S², y, z, Z and U have the above given meanings as described in claim 2; and
R, R^{1'}, R^{1"} have independently from each other the meaning of hydrogen, fluorine, nitrile and/or chlorine or U, with the proviso that at least one R, R^{1'}, R^{1"} is not hydrogen; and wherein X⁶ is a single bond or straight-chain or branched, substituted or unsubstituted C₁-C₆alkylen.

7. Method for the preparation of a polymer, which is a polyamic acid, polyimide or a mixture thereof, which comprises bringing into contact at least one tetracarboxilic dianhydride with at least one monomeric compound as described in claim 1.

8. Homo- and/or copolymer, which is a polyamic acid, polyimide or a mixture thereof, obtainable by the method according to claim 7.

9. Composition, especially a blend or/and a formulation, comprising a polymer, which is a polyamic acid, polyimide, polyamic acid ester, polyester, polyamide, polysiloxane, cellulose derivative, polyacetal, polyurea, polyurethane, polystyrene derivative, poly(styrene-phenyl-maleimide)-derivative and poly(meth)acrylate, cyclo olefin polymer or a mixture thereof, having in a side chain at least one lateral-substituted portion represented by compound of formula (I) as described in claim 1.

10. A photoalignment material, comprising polymer as described in claim 8, having in a side chain at least one lateral-substituted portion represented by formula (I) 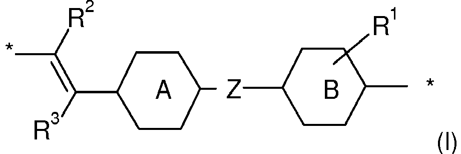 wherein
A represents an unsubstituted carbocyclic or heterocyclic aromatic selected from a monocyclic ring of five or six atoms, two adjacent monocyclic rings of five or six atoms, a bicyclic ring system of eight, nine or ten atoms, or a tricyclic ring system of thirteen or fourteen atoms; of eight, nine or ten atoms, or a tricyclic ring system of thirteen or fourteen atoms;
B substituted carbocyclic or heterocyclic aromatic selected from a monocyclic ring of five or six atoms, two adjacent monocyclic rings of five or six atoms, a bicyclic ring system of eight, nine or ten atoms, or a tricyclic ring system of thirteen or fourteen atoms; of eight, nine or ten atoms, or a tricyclic ring system of thirteen or fourteen atoms;
Z represents -OCO-, -OCH₂- or a single bond,
R¹ represents fluorine, chlorine or nitrile,
R² and R³ are independently from each other hydrogen, halogen or nitrile; unsubstituted or with halogen substituted C₁-C₁₂alkyl, in which one or more C-atom, CH- or CH₂- group may
be replaced by a linking group; preferably R² and R³ are H, nitrile or fluorine.

11. Use of a photoalignment material as described in claim 10, or a polymer having in a side chain at least one lateral-substituted portion represented by compound of formula (I) as described in claim 1.

12. Polymer layer, especially an orientation layer, comprising at least one photoalignment material having in a side chain at least one lateral-substituted portion represented by compound of formula (I) as described in claim 1.

13. Method for the preparation of a polymer layer, especially an orientation layer, comprising applying photoalignment material as described in claim 10, to a support, and treating it with aligning light.

14. Use of the polymer layer according to claim 12, for the preparation of optical and electro-optical unstructured or structured constructional elements, preferably liquid crystal display cells, multi-layer and hybrid layer elements.

15. Optical and electro-optical unstructured or structured constructional elements, preferably liquid crystal display cells, multi-layer and hybrid layer elements, comprising at least one polymer layer according to claim 12.

16. Electro-optical unstructured or structured constructional elements, according to claim 15, which is a liquid crystal display cell, comprising at least one polymer layer according to claim 12

## Patentansprüche

1. Eine Verbindung, welche ein aromatisches Diamin darstellt, umfassend eine mono- oder multichromophore, lateral substituierte Einheit, die durch die folgende Formel (I) dargestellt wird 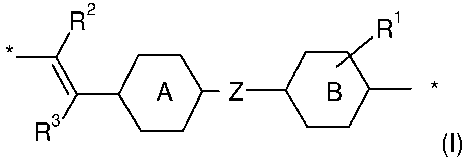 wobei
A einen unsubstituierten carbocyclischen oder heterocyclischen Aromaten ausgewählt aus einem monocyclischen Ring mit fünf oder sechs Atomen, zwei benachbarten monocyclischen Ringen mit fünf oder sechs Atomen, einem bicyclischen Ringsystem mit acht, neun oder zehn Atomen, oder einem tricyclischen Ringsystem mit dreizehn oder vierzehn Atomen darstellt;
B einen substituierten carbocyclischen oder heterocyclischen Aromaten ausgewählt aus einem monocyclischen Ring mit fünf oder sechs Atomen, zwei benachbarten monocyclischen Ringen mit fünf oder sechs Atomen, einem bicyclischen Ringsystem mit acht, neun oder zehn Atomen, oder einem tricyclischen Ringsystem mit dreizehn oder vierzehn Atomen darstellt;
Z -OCO-, -OCH₂- oder eine Einfachbindung darstellt,
R¹ Fluor, Chlor oder Nitril darstellt,
R² und R³ unabhängig voneinander Wasserstoff, Halogen oder Nitril; unsubstituiertes oder mit Halogen substituiertes C₁-C₁₂-Alkyl darstellen, in dem eine oder mehrere C-Atome, CH- oder CH₂-Gruppen durch eine Linkergruppe ersetzt sein können; vorzugsweise sind R² und R³ H, Nitril oder Fluor; und eine polymerisierbare Gruppe.

2. Eine Verbindung gemäß Anspruch 1 dargestellt durch die Formel (IV) 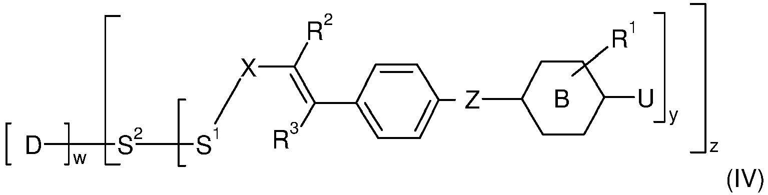 wobei
B ein substituiertes Benzol, Phenylen, Pyridin, Triazin, Pyrimidin, Biphenylen, Naphthalin, Phenanthren, Triphenylen, Tetralin darstellt,
R¹ Fluor, Chlor oder Nitril darstellt,
R² und R³ Wasserstoff und/oder Nitril darstellen,
X eine bivalente aromatische Gruppe darstellt; oder X -CH₂-, -CO-, -CS-, -O(CO)-, -(CO)O-, -NH(CO)-, -(CO)NH-, -OCF₂-, ((C₁-C₆-Alkyl)-N)CO-, -(C₁-C₁₆-Alkylen)(CO)O-, -(C₁-C₁₆-Alkylen)O(CO)-, -(CO)O(C₁-C₁₆-Alkylen)-, -O(CO)(C₁-C₁₆-Alkylen)-, -O(C₁-C₁₆-Alkylen)-, -(C₁-C₁₆-Alkylen)O-, ((CH₃)N)CO-, oder -S(CS)-, -O(CS), -S(CO) vorzugsweise 1,4-Phenylen, O(CS), -S(CO), -CS-, -CO- oder -O(CO)-, und weiter bevorzugt -CO- oder -O(CO)- oder 1,4-Phenylen darstellt;
Z -OCO-, -OCH₂- oder eine Einfachbindung darstellt,
U Wasserstoff, -CF₃, -CF₂H, -CH₂F, -Q¹-(C₁-C₆-Alkylen)-CF₃, -Q¹-(C₁-C₆-Alkylen)-CF₂H, -Q¹-(C₁-C₆-Alkylen)-CH₂F, -Q¹-(C₁-C₆-Alkylen)-CF₂CF₃, -Q¹-(C₁-C₆-Alkylen)-CF₂CHF₂, -Q¹-(C₁-C₆-Alkylen)-CF₂CH₂F, -Q¹-(C₁-C₆-Alkylen)-CFHCF₃, -Q¹-(C₁-C₆-Alkylen)-CFHCHF₂, -Q¹-(C₁-C₆-Alkylen)-CFHCH₂F, -Q¹-(C₁-C₆-Alkylen)-CF₂CH₃, -Q¹-(C₁-C₆-Alkylen)-CFHCHF₂, -Q¹-(C₁-C₆-Alkylen)-(CF₂)₂CF₃, -Q¹-(C₁-C₆-Alkylen)-(CF₂)₂CHF₂, -Q¹-(C₁-C₆-Alkylen)-(CF₂)₂CH₂F, -Q¹-(C₁-C₆-Alkylen)-(CF₂)₂CH₃, -Q¹-(C₁-C₆-Alkylen)-(CF₂)₃CHF₂, -Q¹-(C₁-C₆-Alkylen)-(CF₂)₃CH₂F, -Q¹-(C₁-C₆-Alkylen)-(CF₂)₃CF₃, -Q¹-(C₁-C₆-Alkylen)-CF(CF₃)₂, -Q¹-(C₁-C₆-Alkylen)-CF₂(CHF)CF₃ darstellt;
wobei eine oder mehrere C-Atome, CH- oder CH₂-Gruppen unabhängig voneinander durch eine Linkergruppe ersetzt ist oder nicht ersetzt ist, und
wobei
Q¹ eine Einfachbindung oder -NH-, -NCH₃-, -NH-CO-, -CO-NH-, -NH-CO-O-, -O-CO-NH-, -NH-CONH-, -O-, -CO-, -COO-, -OCO-, -S-, -CS-, -SCS-, -SCO-, -CH=CH-, -C≡C- oder -O-CO-O- darstellt, wobei vorzugsweise Q¹ -O-, -CO-, -COO-, -OCO- oder eine Einfachbindung darstellt,
D eine unsubstituierte oder substituierte aromatische polymerisierbare Gruppe darstellt, vorzugsweise eine Diamingruppe mit 1 bis 40 Kohlenstoffatomen,
y und z unabhängig voneinander 1, 2, 3 oder 4 ist, vorzugsweise 1 oder 2;
w 1,2,3,4 und vorzugsweise 1 oder 2 ist,
S¹ und S² unabhängig voneinander eine Einfachbindung oder eine Spacereinheit darstellen, die ein cyclisches, geradkettiges oder verzweigtes, substituiertes oder unsubstituiertes C₁-C₂₄-Alkylen darstellt, in dem ein oder mehrere vorzugsweise nicht benachbarte C-Atome, CH- oder CH₂-Gruppen durch mindestens eine Linkergruppe ersetzt sein können; und/oder eine nicht-aromatische, aromatische, unsubstituierte oder substituierte carbocyclische oder heterocyclische Gruppe mit der Formel (V) darstellen:
-(Z^{1a'})_{a3'}-(Z¹-C¹)ₐ₁-(Z²-C²)ₐ₂-(Z^{1a})ₐ₃- (V)
wobei:
C¹, C² unabhängig voneinander eine alicyclische oder aromatische, unsubstituierte oder substituierte carbocyclische oder heterocyclische Gruppe darstellen, vorzugsweise sind C¹ und C² an den gegenüberliegenden Positionen über Z¹ ,Z², Z^{1a} und/oder Z^{1a'} miteinander verbunden so, dass Gruppen S¹ und/oder S² eine lange Molekülachse aufweisen, und
Z¹, Z², Z¹ a , Z^{1a'} jeweils unabhängig voneinander eine überbrückende Gruppe darstellen, und
a₁, a_{3'}, a₂, a₃ jeweils unabhängig voneinander eine ganze Zahl von 0 bis 3 darstellen so, dass a₁ + a_{3'} + a₂+ a₃ ≤ 6, vorzugsweise ist a₃ und/oder a_{3'} 1 und a₁ + a₂ ≤ 4.

3. Eine Verbindung gemäß Anspruch 1 dargestellt durch die Formel (XVI) 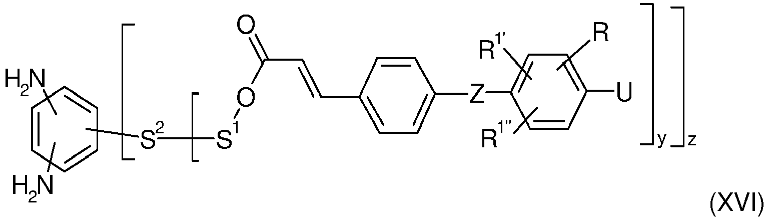 wobei
S¹, S², Z, U, y und z die oben angegebenen Bedeutungen und Bevorzugungen wie in Anspruch 2 beschrieben aufweisen; und R, R^{1'}, R^{1"} unabhängig voneinander Wasserstoff, Fluor, Nitril und/oder Chlor oder U darstellen, mit der Maßgabe, dass mindestens eines von R, R^{1'} oder R^{1"} nicht Wasserstoff ist; oder 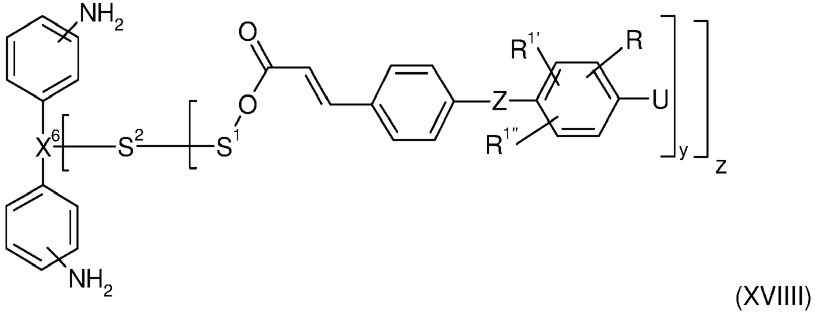 wobei U, R, R^{1'} und R^{1"}, S², S¹, Z, y und z die oben für (XVI) beschriebenen Bedeutungen haben; und wobei X⁶ eine Einfachbindung oder ein geradkettiges oder verzweigtes, substituiertes oder unsubstituiertes C₁-C₆-Alkylen darstellt;
oder 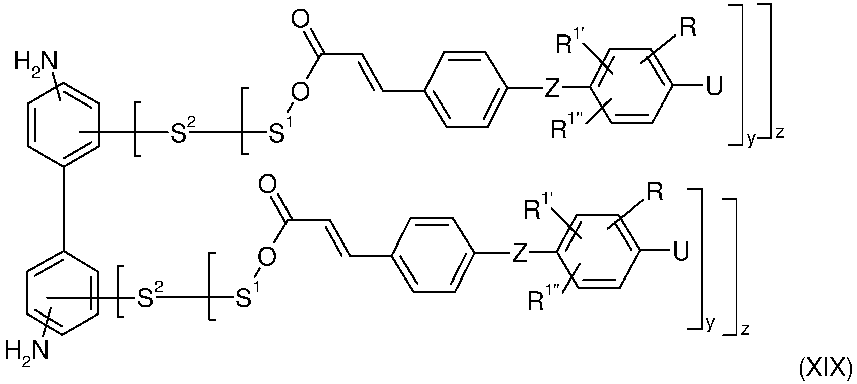 wobei U, R, R^{1'}, R^{1"}, S², S¹, Z, y und z die oben für (XVI) beschriebenen Bedeutungen haben.

4. Eine Verbindung gemäß Anspruch 1, umfassend mindestens eine lateral substituierte Einheit, die durch die Formeln (XVIIa), (XVIIb), (XVIIc), (XVIIf), (XVIII) oder (XIX) dargestellt wird 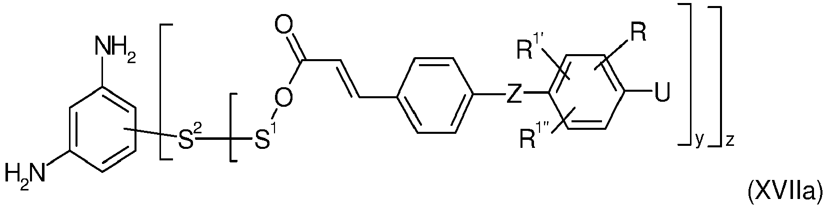 wobei
S¹, S², Z, U, y und z die oben genannten Bedeutungen und Bevorzugungen wie in Anspruch 2 beschrieben haben; und R, R^{1'}, R^{1"} unabhängig voneinander Wasserstoff, Fluor, Nitril und/oder Chlor oder U darstellen, mit der Maßgabe, dass mindestens eines von R, R^{1'} oder R^{1"} nicht Wasserstoff darstellt; und
S¹ und S² unabhängig voneinander eine Einfachbindung oder ein geradkettiges oder verzweigtes, substituiertes, oder unsubstituiertes C₁-C₁₂-Alkylen darstellt; und wobei eine oder mehrere vorzugsweise nicht benachbarte C-Atome, CH- oder CH₂-Gruppen durch mindestens eine Linkergruppe ersetzt sein können; oder
eine Verbindung mit den Formeln (XVIIb) oder (XVIIc) 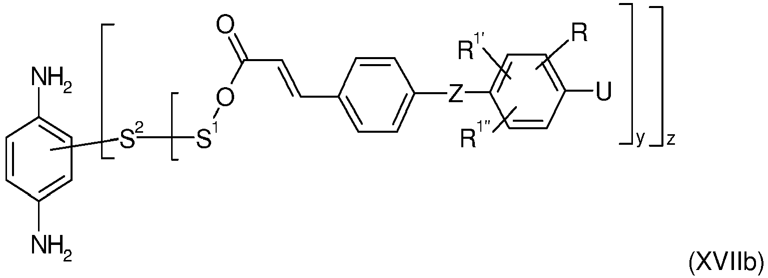 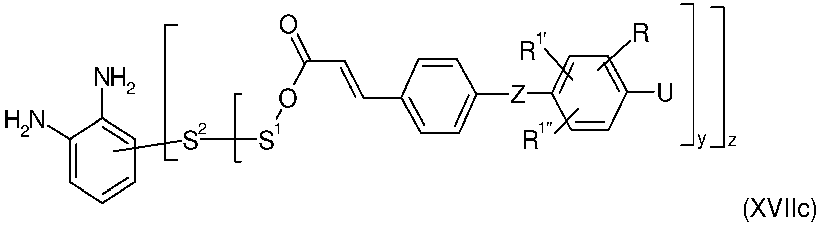
wobei
S¹, S², y, z, R, R^{1'}, R^{1"}, Z und U die oben angegebenen Bedeutungen und Bevorzugungen haben;
oder eine Verbindung mit der Formel (XVIIf) 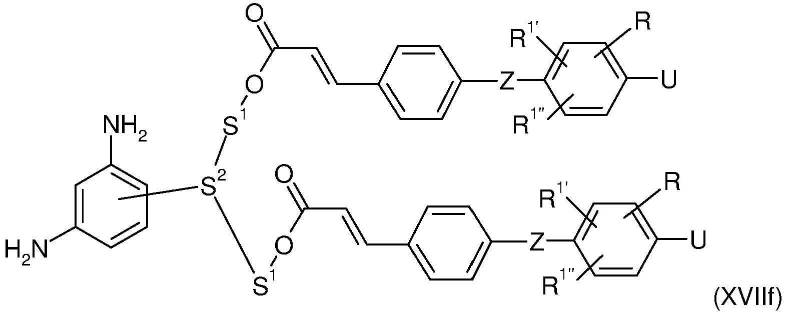 wobei
S¹, S², R¹, R^{1'}, R^{1"}, Z und U die oben angegebenen Bedeutungen und Bevorzugungen haben;
oder
eine Verbindung mit den Formeln (XVIII) oder (XIX) 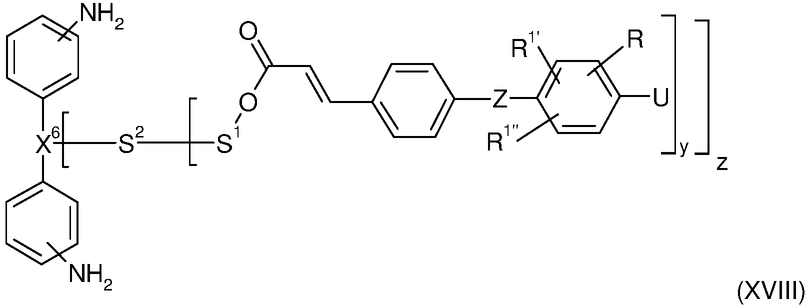 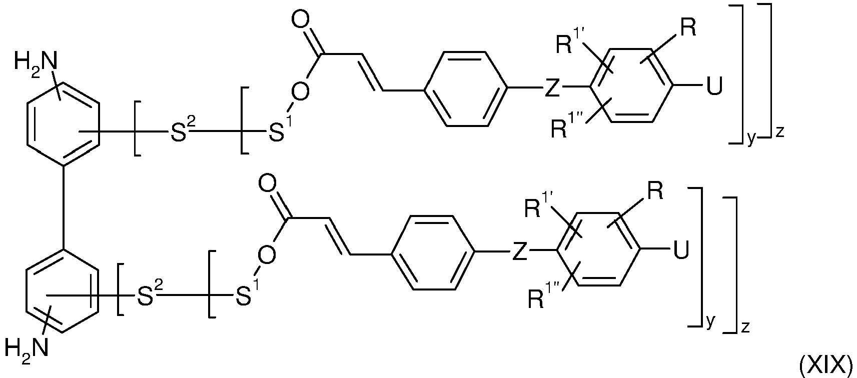 wobei S¹, S², y, z, R, R^{1'}, R^{1"}, Z und U die oben angegebenen Bedeutungen und Bevorzugungen haben und wobei X⁶ eine Einfachbindung oder ein geradkettiges oder verzweigtes, substituiertes oder unsubstituiertes C₁-C₆-Alkylen darstellt.

5. Eine Verbindung gemäß Anspruch 1 umfassend mindestens eine lateral substituierte Einheit, die durch die Formeln (XX), (XXI), (XXII), (XXIII), (XXIV), (XXV), (XXVa) oder (XXVb) dargestellt wird 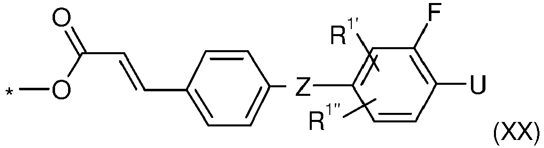 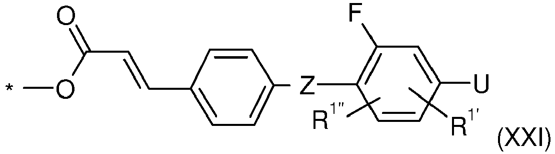 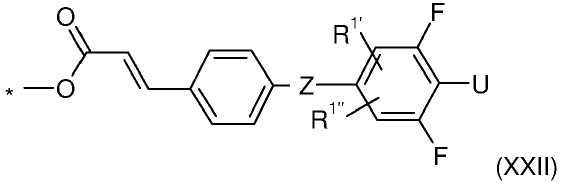 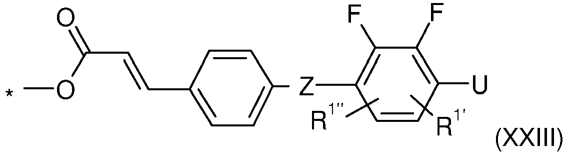 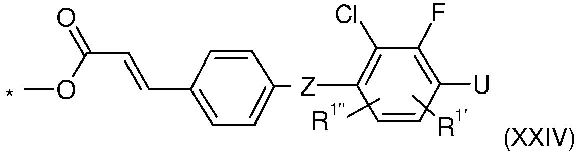 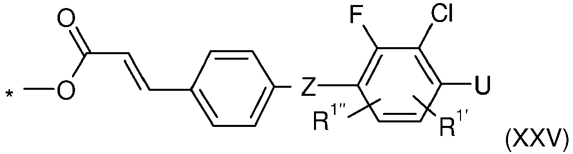 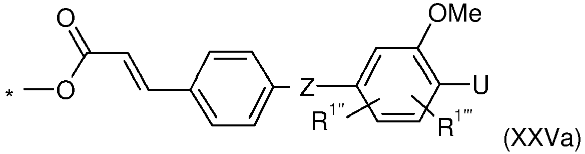 wobei in den Formeln (XX), (XXI), (XXII), (XXIII), (XXIV), (XXV), (XXVa)
U, Z die gleichen Bedeutungen wie in Anspruch 2 beschreiben haben, und
R^{1'}, R^{1"} und R^{1"'} unabhängig voneinander Wasserstoff, Fluor, Nitril und/oder Chlor darstellen, 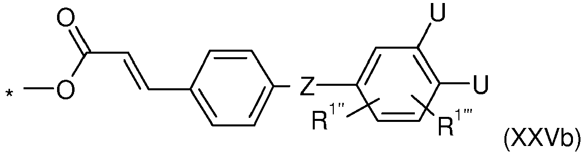
wobei
U, Z die Bedeutungen wie in Anspruch 2 beschrieben haben, und
R^{1"} und R^{1"'} unabhängig voneinander Wasserstoff, Fluor, Nitril und/oder Chlor darstellen, mit der Maßgabe, dass mindestens eines von R^{1"} oder R^{1"'} nicht Wasserstoff darstellt.

6. Eine Verbindung gemäß Anspruch 1 umfassend mindestens eine lateral substituierte Einheit, die durch die Formeln (XXVc), (XXVd), (XXVe), (XXVf), (XXVg), (XVIIII), (XIX) dargestellt wird, umfassend ein Polymer, das in einer Seitenkette mindestens eine lateral substituierte Einheit umfasst, die durch die Formeln (XXVc), (XXVd), (XXVe), (XXVf), (XXVg), (XVIIII), (XIX) dargestellt wird 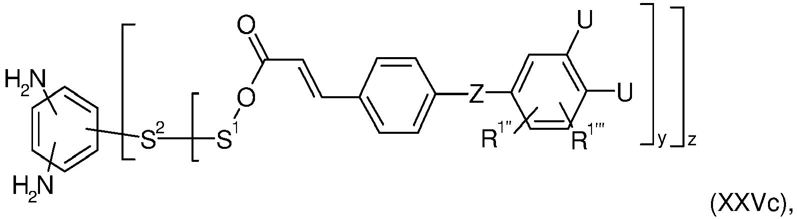 wobei
S¹, S², Z, U, y und z unabhängig voneinander die Bedeutungen und Bevorzugungen wie in Anspruch 2 beschrieben haben; und R^{1"}, R^{1"'} unabhängig voneinander Wasserstoff, Fluor, Nitril und/oder Chlor oder U darstellen, mit der Maßgabe, dass mindestens eines von R^{1"} oder R^{1"'} nicht Wasserstoff darstellt; 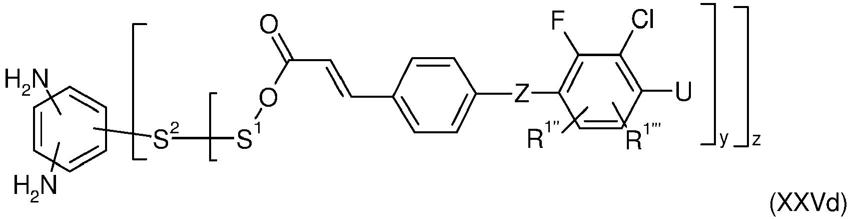 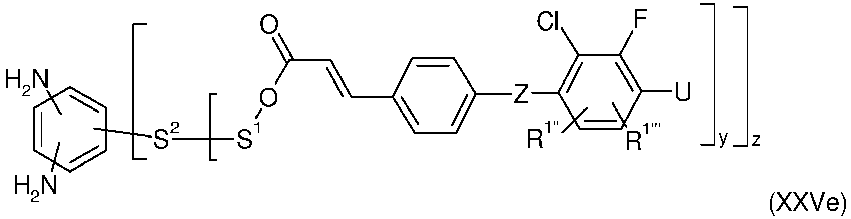 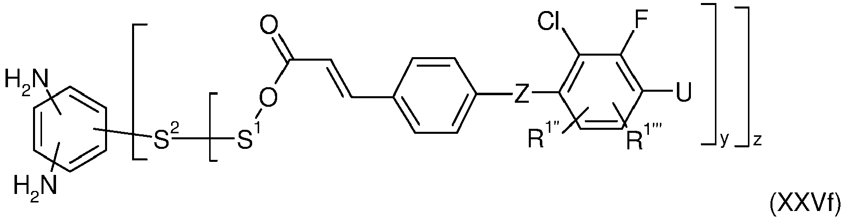 wobei
S¹, S², Z, U, y und z unabhängig voneinander die Bedeutungen und Bevorzugungen wie in Anspruch 2 beschrieben haben; und R^{1"}, R^{1"'} unabhängig voneinander Wasserstoff, Fluor, Nitril und/oder Chlor oder U darstellen, vorzugsweise Wasserstoff; 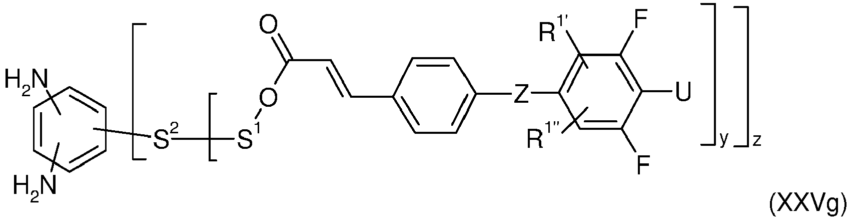 wobei
S¹, S², y, z, Z und U die oben angegebenen Bedeutungen wie in Anspruch 2 beschrieben haben; und
R^{1'}, R^{1"} unabhängig voneinander Wasserstoff, Fluor, Nitril und/oder Chlor oder U darstellen, vorzugsweise Wasserstoff; und 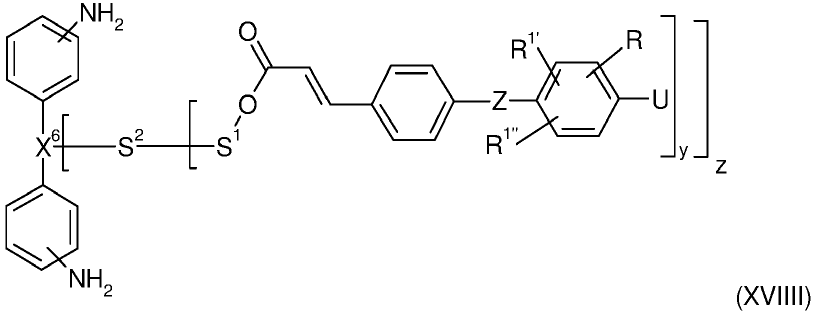 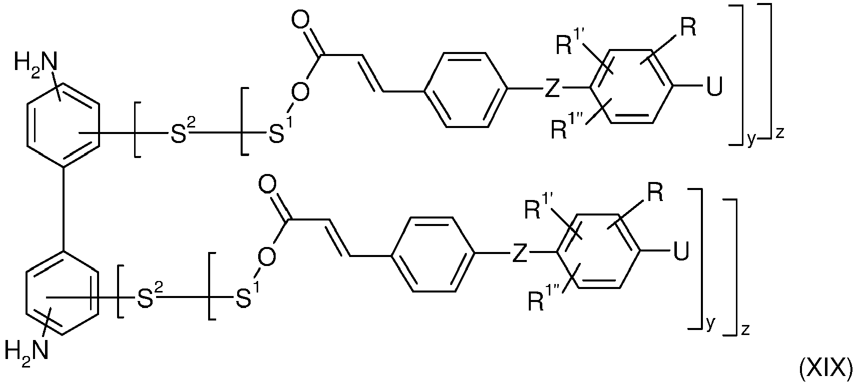
wobei
S¹, S², y, z, Z und U die oben genannten Bedeutungen wie in Anspruch 2 beschrieben haben; und
R, R^{1'}, R^{1"} unabhängig voneinander Wasserstoff, Fluor, Nitril und/oder Chlor oder U darstellen, mit der Maßgabe, dass mindestens eines von R, R^{1'}, R^{1"} kein Wasserstoff darstellt; und
wobei X⁶ eine Einfachbindung oder ein geradkettiges oder verzweigtes, substituiertes oder unsubstituiertes C₁-C₆-Alkylen darstellt.

7. Verfahren zur Herstellung eines Polymers, das eine Polyaminsäure oder ein Polyimid oder eine Mischung davon ist, umfassend das Inkontaktbringen mindestens eines tetracarboxylischen Dianhydrids mit mindestens einer monomeren Verbindung wie in Anspruch 1 beschrieben.

8. Homo- und/oder Copolymer, das eine Polyaminsäure oder ein Polyimid oder eine Mischung davon ist, erhältlich durch das Verfahren gemäß Anspruch 7.

9. Zusammensetzung, insbesondere eine Mischung und/oder eine Formulierung, umfassend ein Polymer, das eine Polyaminsäure, Polyimid, Polyaminsäureester, Polyester, Polyamid, Polysiloxan, Cellulosederivat, Polyacetal, Polyharnstoff, Polyurethan, Polystyrolderivat, Poly(styrol-phenyl-maleimid)-Derivat und Poly(meth)acrylat, Cycloolefinpolymer oder eine Mischung davon ist, das in einer Seitenkette mindestens eine lateral substituierte Einheit umfasst, die durch die in Anspruch 1 beschriebene Formel (I) dargestellt wird.

10. Ein Photoausrichtungsmaterial umfassend das in Anspruch 8 beschriebene Polymer, das in einer Seitenkette mindestens eine lateral substituierte Einheit umfasst, die durch die Formel (I) dargestellt wird 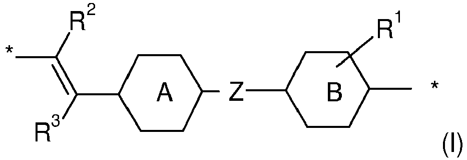 wobei
A einen unsubstituierten carbocyclischen oder heterocyclischen Aromaten ausgewählt aus einem monocyclischen Ring mit fünf oder sechs Atomen, zwei benachbarten monocyclischen Ringen mit fünf oder sechs Atomen, einem bicyclischen Ringsystem mit acht, neun oder zehn Atomen, oder einem tricyclischen Ringsystem mit dreizehn oder vierzehn Atomen darstellt;
B einen substituierten carbocyclischen oder heterocyclischen Aromaten ausgewählt aus einem monocyclischen Ring mit fünf oder sechs Atomen, zwei benachbarten monocyclischen Ringen mit fünf oder sechs Atomen, einem bicyclischen Ringsystem mit acht, neun oder zehn Atomen, oder einem tricyclischen Ringsystem mit dreizehn oder vierzehn Atomen darstellt;
Z -OCO-, -OCH₂- oder eine Einfachbindung darstellt,
R¹ Fluor, Chlor oder Nitril darstellt,
R² und R³ unabhängig voneinander Wasserstoff, Halogen oder Nitril; unsubstituiertes oder mit Halogen substituiertes C₁-C₁₂-Alkyl darstellen, in dem eine oder mehrere C-Atome, CH- oder CH₂-Gruppen durch eine Linkergruppe ersetzt sein können; vorzugsweise stellen R² und R³ H, Nitril oder Fluor dar.

11. Verwendung eines Photoausrichtungsmaterials wie in Anspruch 10 beschrieben, oder eines Polymers, das in einer Seitenkette mindestens eine lateral substituierte Einheit umfasst, die durch die in Anspruch 1 beschriebene Formel (I) dargestellt wird.

12. Polymerschicht, insbesondere eine Orientierungsschicht, umfassend mindestens ein Photoausrichtungsmaterial, das in einer Seitenkette mindestens eine lateral substituierte Einheit umfasst, die durch die in Anspruch 1 beschriebene Verbindung mit der Formel (I) dargestellt wird.

13. Verfahren zur Herstellung einer Polymerschicht, insbesondere einer Orientierungsschicht, umfassend das Auftragen eines Photoausrichtungsmaterials wie in Anspruch 10 beschrieben, auf einen Träger und Behandeln mit Ausrichtungslicht.

14. Verwendung der Polymerschicht gemäß Anspruch 12 zur Herstellung von optischen und elektrooptischen unstrukturierten oder strukturierten Bauelementen, vorzugsweise von Flüssigkristallanzeigezellen, von Mehrschicht- und Hybridschichtelementen.

15. Optische und elektrooptische unstrukturierte oder strukturierte Bauelemente, vorzugsweise Flüssigkristallanzeigezellen, Mehrschicht- und Hybridschichtelemente, umfassend mindestens eine Polymerschicht gemäß Anspruch 12.

16. Elektrooptische unstrukturierte oder strukturierte Bauelemente gemäß Anspruch 15, das eine Flüssigkristallanzeigezelle darstellt, umfassend mindestens eine Polymerschicht gemäß Anspruch 12.

## Revendications

1. Composé, qui est une diamine aromatique, comprenant un fragment à substitution latérale mono- ou multi-chromophore représenté par la formule (I) 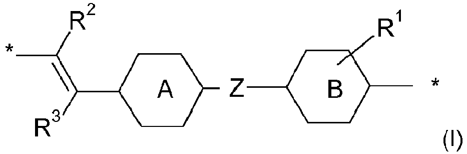 dans laquelle
A représente un aromatique hétérocyclique ou carbocyclique non substitué choisi parmi un cycle monocyclique de cinq ou six atomes, deux cycles monocycliques adjacents de cinq ou six atomes, un système bicyclique de huit, neuf ou dix atomes, ou un système tricyclique de treize ou quatorze atomes ;
B représente un aromatique hétérocyclique ou carbocyclique substitué choisi parmi un cycle monocyclique de cinq ou six atomes, deux cycles monocycliques adjacents de cinq ou six atomes, un système bicyclique de huit, neuf ou dix atomes, ou un système tricyclique de treize ou quatorze atomes ;
Z représente -OCO-, -OCH₂- ou une liaison simple,
R¹ représente le fluor, le chlore ou le nitrile,
R² et R³ sont, indépendamment l'un de l'autre, l'hydrogène, un halogène ou un nitrile ; alkyle en C₁ à C₁₂ non substitué ou substitué par un halogène, dont un ou plusieurs atomes C ou groupes -CH ou -CH₂ peuvent être remplacés par un groupe de liaison ; de préférence R² et R³ sont H, le nitrile ou le fluor ;
et un groupe polymérisable.

2. Composé selon la revendication 1, représenté par la formule (IV) 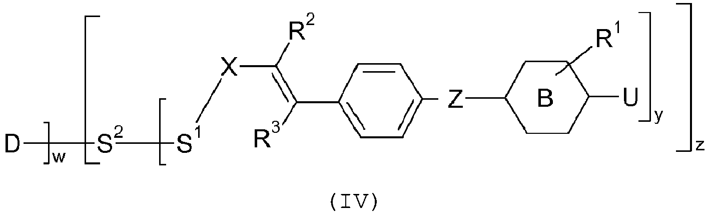 dans laquelle
B représente un radical substitué benzène, phénylène, pyridine, triazine, pyrimidine, biphénylène, naphtalène, phénanthrène, triphénylène, tétraline,
R¹ représente le fluor, le chlore ou le nitrile,
R² et R³ sont l'hydrogène et/ou le nitrile,
X est un groupe aromatique divalent ; ou bien X est -CH₂-, -CO-, -CS-, -O(CO)-, -(CO)O-, -NH(CO)-, -(CO)NH-, -OCF₂-, ((alkyle en C₁ à C₆) -N) CO-, -(alkylène en C₁ à C₁₆) (CO)O-, -(alkylène en C₁ à C₁₆)O(CO)-, - (CO)O (alkylène en C₁ à C₁₆)-, -O-(CO) (alkylène en C₁ à C₁₆)-, -O (alkylène en C₁ à C₁₆)-, -(alkylène en C₁ à C₁₆)O-, ((CH₃N)CO-, ou -S(CS)-, -O(CS), -S(CO), de préférence 1,4-phénylène, O(CS), -S(CO), -CS-, -CO- ou -O(CO)-, et mieux encore -CO- ou -O(CO)- ou 1,4-phénylène ;
Z représente -OCO-, -OCH₂- ou une liaison simple,
U est l'hydrogène, -CF₃, -CF₂H, -CH₂F, -Q¹-(alkylène en C₁ à C₆)-CF₃, -Q¹-(alkylène en C₁ à C₆)-CF₂H, -Q¹-(alkylène en C₁ à C₆)-CH₂F, -Q¹-(alkylène en C₁ à C₆)-CF₂CF₃, -Q¹-(alkylène en C₁ à C₆)-CF₂CHF₂, -Q¹-(alkylène en C₁ à C₆)-CF₂CH₂F, -Q¹-(alkylène en C₁ à C₆)-CFHCF₃, -Q¹-(alkylène en C₁ à C₆) -CFHCHF₂, -Q¹- (alkylène en C₁ à C₆) -CFHCH₂F, -Q¹-(alkylène en C₁ à C₆) -CF₂CH₃, -Q¹- (alkylène en C₁ à C₆)-CFHCHF₂, -Q¹- (alkylène en C₁ à C₆) - (CF₂)₂CF₃, -Q¹- (alkylène en C₁ à C₆) - (CF₂)₂CHF₂, -Q¹-(alkylène en C₁ à C₆) - (CF₂)₂CH₂F, -Q¹- (alkylène en C₁ à C₆) - (CF₂)₂CH₃, -Q¹- (alkylène en Ci à C₆)-(CF₂) ₃CHF₂, -Q¹-(alkylène en C₁ à C₆) - (CF₂)₃CH₂F, -Q¹-(alkylène en C₁ à C₆) - (CF₂)₃CF₃, -Q¹-(alkylène en C₁ à C₆) - CF(CF₃)₂, -Q¹-(alkylène en C₁ à C₆) -CF₂ (CHF) CF₃ ;
où un ou plusieurs atomes C ou groupes -CH ou -CH₂ sont, indépendamment des autres, non remplacés ou remplacés par un groupe de liaison, et
où
Q¹ représente une liaison simple ou -NH-, -NCH₃-, -NH-CO-, -CO-NH-, -NH-CO-O-, -O-CO-NH-, -NH-CONH-, -O-, -CO-, -COO-, -OCO-, -S-, -CS-, -SCS-, -SCO-, -CH=CH-, -C=C- ou -O-CO-O-, de préférence Q¹ est -O-, -CO-, -COO-, -OCO- ou une liaison simple,
D représente un groupe polymérisable aromatique substitué ou non substitué, de préférence un groupe diamine ayant de 1 à 40 atomes de carbone,
chacun de y et z, indépendamment de l'autre, vaut 1, 2, 3 ou 4, de préférence 1 ou 2 ;
w vaut 1, 2, 3, 4 et de préférence 1 ou 2,
chacun de S¹ et S², indépendamment de l'autre, représente une liaison simple ou un motif d'espacement, qui est un alkylène en Ci à C₂₄ cyclique, linéaire ou ramifié, substitué ou non substitué, dans lequel un ou plusieurs atomes C ou groupes CH- ou CH₂-, de préférence non adjacents, peuvent être remplacés par au moins un groupe de liaison ; et/ou un groupe hétérocyclique ou carbocyclique non aromatique, aromatique, non substitué ou substitué de formule (V) :
- (Z^{1a'})_{a3'}-(Z¹-C¹)ₐ₁-(Z²-C²)ₐ₂(Z^{1a})ₐ₃- (V)
dans laquelle :
chacun de C¹ et C² représente indépendamment un groupe hétérocyclique ou carbocyclique alicyclique ou aromatique, non substitué ou substitué, de préférence C¹ et C² sont connectés aux positions opposées via Z¹, Z², Z^{1a} et/ou Z^{1a'} de façon que les groupes S¹ et/ou S² aient un axe moléculaire long, et
chacun de Z¹, Z², Z^{1a}, Z^{1a'} représente indépendamment un groupe pontant, et
chacun d'a₁, a_{3'}, a₂ et a₃ représente indépendamment un entier de 0 à 3, de façon que a₁ + a_{3'} + a₂+ a₃ ≤ 6, de préférence a₃ et/ou a_{3'} vaut 1 et a₁ + a₂ ≤ 4.

3. Composé selon la revendication 1, représenté par la formule (XVI) 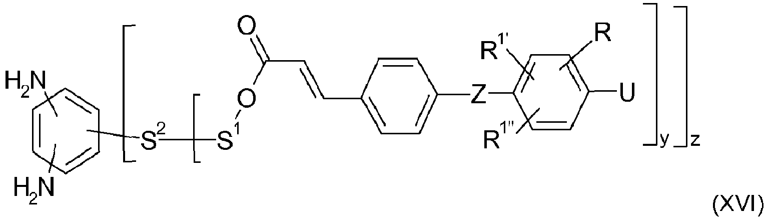 dans laquelle
S¹, S², Z, U, y et z ont les significations et préférences indiquées ci-dessus comme décrit dans la revendication 2 ; et R, R^{1'} et R^{1"}, indépendamment les uns des autres, signifient l'hydrogène, le fluor, le nitrile et/ou le chlore ou U, sous réserve qu'au moins l'un parmi R, R^{1'} et R^{1"} ne soit pas l'hydrogène ; ou 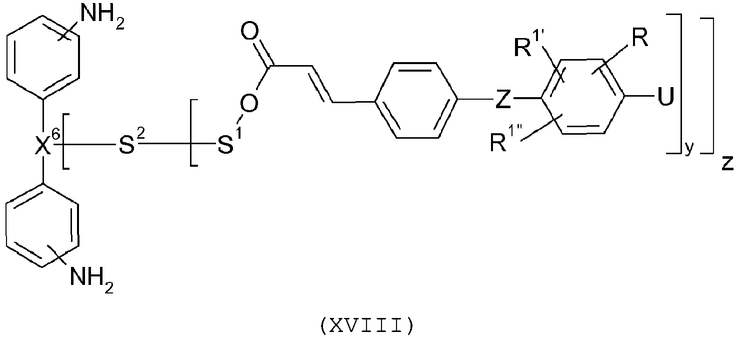 dans laquelle U, R, R^{1'} et R^{1"}, S², S¹, Z, y et z ont les significations décrites ci-dessus à propos de la formule (XVI) ; et X⁶ est une liaison simple ou un alkylène en C₁ à C₆ linéaire ou ramifié, substitué ou non substitué ; ou 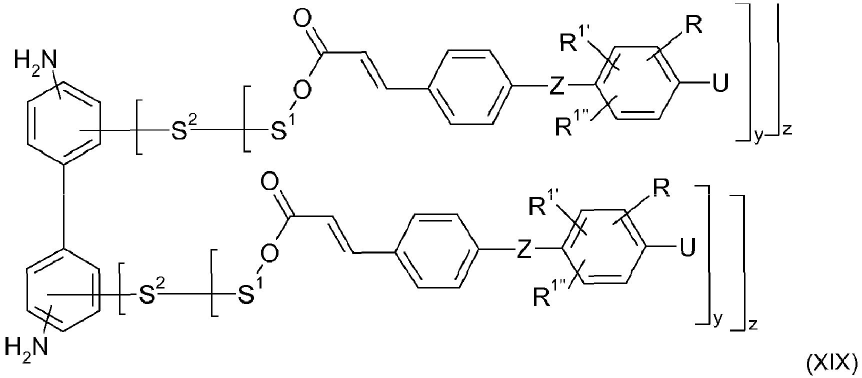 où U, R, R^{1'}, R^{1"}, S², S¹, Z, y et z ont les significations décrites ci-dessus à propos de la formule (XVI) .

4. Composé selon la revendication 1, comprenant au moins un fragment à substitution latérale représenté par l'une des formules (XVIIa), (XVIIb), (XVIIc), (XVIIf), (XVIII) et (XIX) 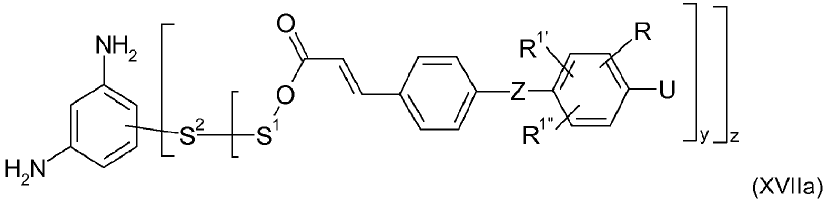 dans laquelle
S¹, S², Z, U, y et z ont les significations et préférences indiquées ci-dessus comme décrit dans la revendication 2 ; et R, R^{1'} et R^{1"}, indépendamment les uns des autres, signifient l'hydrogène, le fluor, le nitrile et/ou le chlore ou U, sous réserve qu'au moins l'un parmi R, R^{1'} et R^{1"} ne soit pas l'hydrogène ; et
chacun de S¹ et S², indépendamment de l'autre, représente une liaison simple ou un alkylène en C₁ à C₁₂ linéaire ou ramifié, substitué ou non substitué ; et dont un ou plusieurs atomes C ou groupes -CH ou -CH₂, de préférence non adjacents, peuvent être remplacés par au moins un groupe de liaison ;
ou un composé de formule (XVIIb) ou (XVIIc) 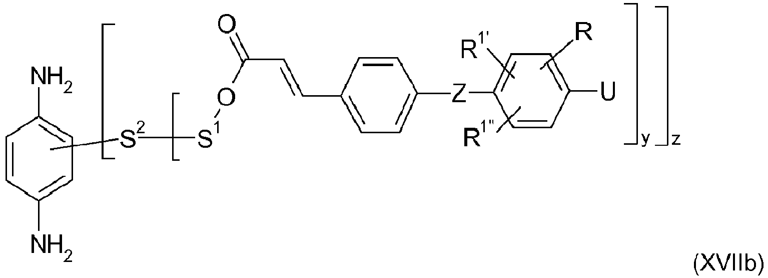 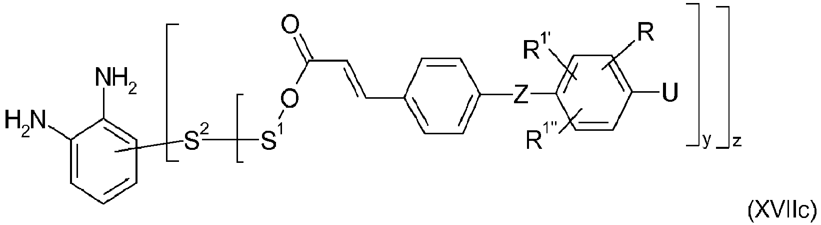 dans lesquelles S¹, S², y, z, R, R^{1'}, R^{1"}, Z et U ont les significations et préférences indiquées ci-dessus ;
ou un composé de formule (XVIIf) 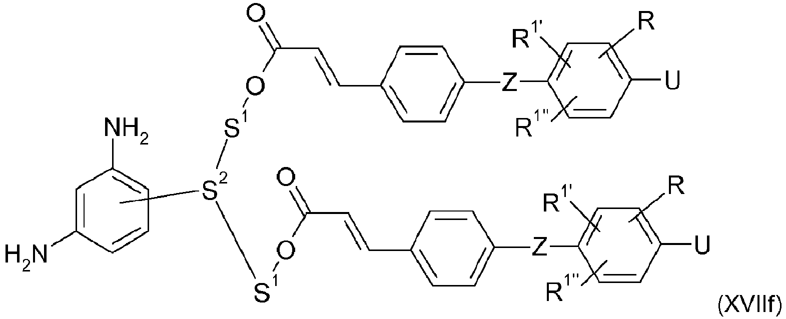 dans laquelle S¹, S², R¹, R^{1'}, R^{1"}, Z et U ont les significations et préférences indiquées ci-dessus ;
ou un composé de formule (XVIII) ou (XIX) 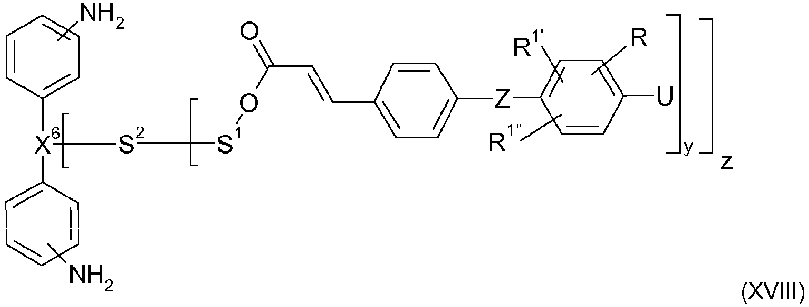 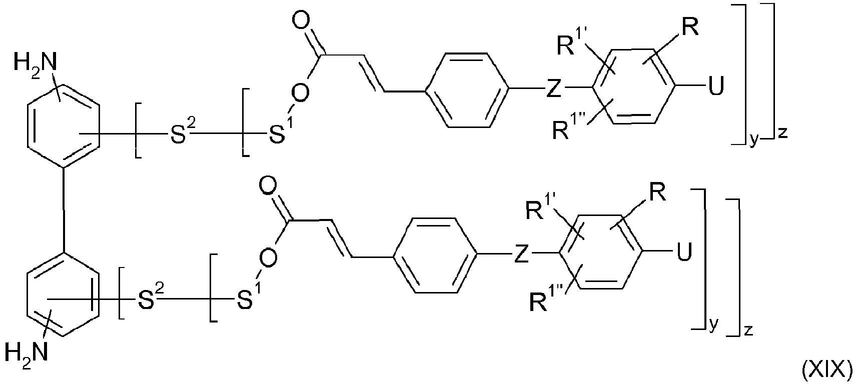 dans lesquelles S¹, S², y, z, R, R^{1'}, R^{1"}, Z et U ont les significations et préférences indiquées ci-dessus, et X⁶ est une liaison simple ou un alkylène en Ci à C₆ linéaire ou ramifié, substitué ou non substitué.

5. Composé selon la revendication 1, comprenant au moins un fragment à substitution latérale représenté par l'une des formules (XX), (XXI), (XXII), (XXIII), (XXIV), (XXV), (XXVa) et (XXVb) 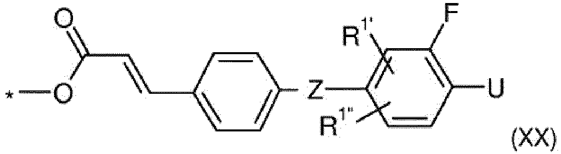 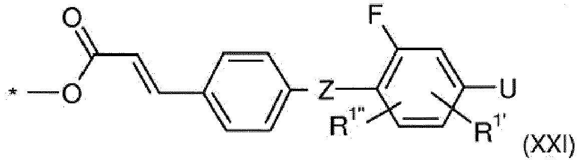 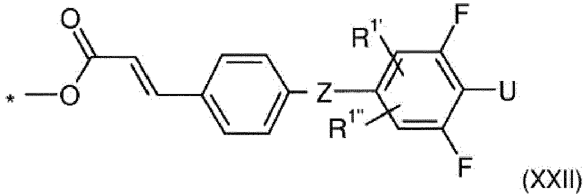 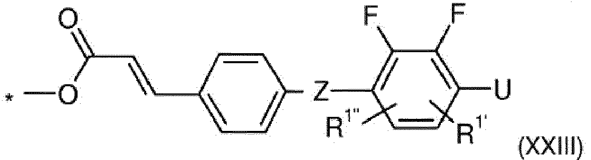 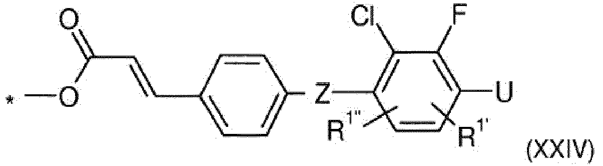 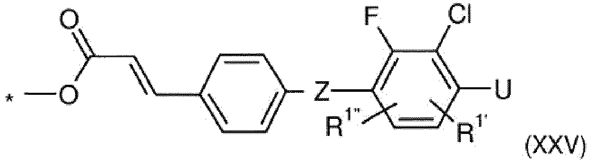 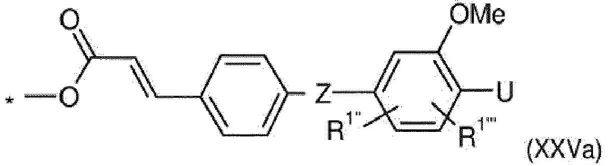 où, dans les formules (XX), (XXI), (XXII), (XXIII), (XXIV), (XXV), (XXVa), U et Z ont les significations telles qu'indiquées dans la revendication 2, et R^{1'}, R^{1"} et R^{1"'} représentent, indépendamment des autres, l'hydrogène, le fluor, le nitrile et/ou le chlore, 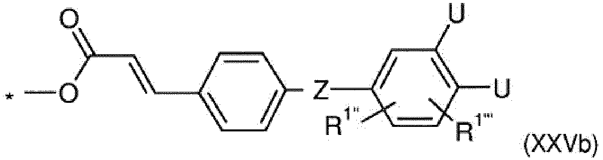 dans laquelle U et Z ont les significations telles qu'indiquées dans la revendication 2, et R^{1"} et R^{1"'} représentent, indépendamment de l'autre, l'hydrogène, le fluor, le nitrile et/ou le chlore, sous réserve qu'au moins l'un parmi R^{1"} et R^{1"'} ne soit pas l'hydrogène.

6. Composé selon la revendication 1, comprenant au moins un fragment à substitution latérale représenté par l'une des formules (XXVc), (XXVd), (XXVe), (XXVf), (XXVg), (XVIII), (XIX), comprenant un polymère ayant, dans une chaîne latérale, au moins un fragment à substitution latérale représenté par l'une des formules (XXVc), (XXVd), (XXVe), (XXVf), (XXVg), (XVIII), (XIX) 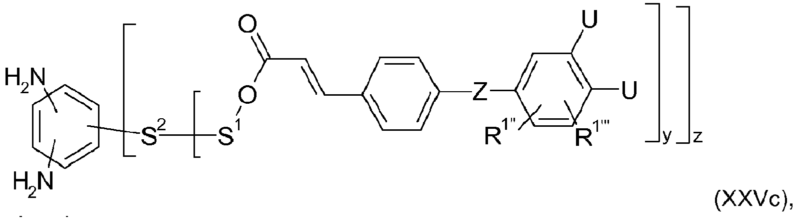 dans laquelle S¹, S², Z, U, y et z ont, indépendamment des autres, les significations et préférences telles qu'indiquées dans la revendication 2 ; et R^{1"} et R^{1"'}, indépendamment de l'autre, signifie l'hydrogène, le fluor, le nitrile et/ou le chlore ou U, sous réserve qu'au moins l'un parmi R^{1"} et R^{1"'} ne soit pas l'hydrogène ; 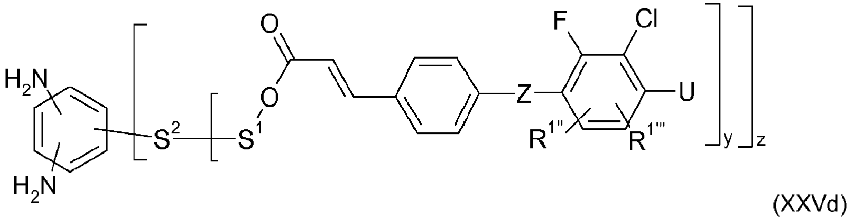 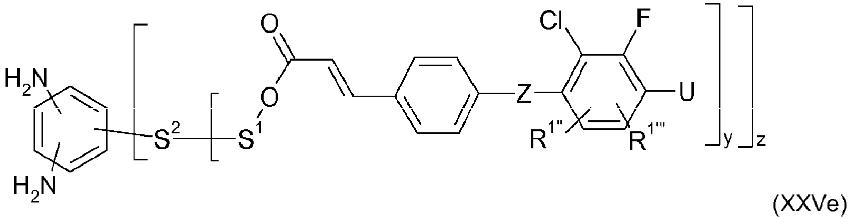 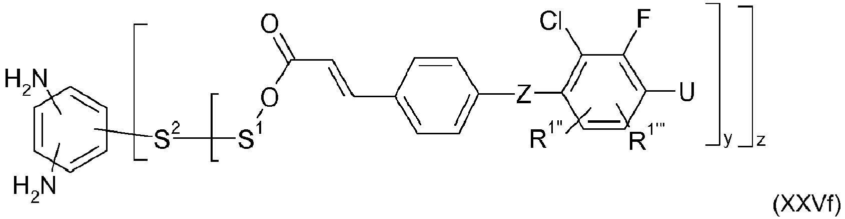 dans lesquelles S¹, S², Z, U, y et z ont, indépendamment des autres, les significations et préférences telles qu'indiquées dans la revendication 2 ; et R^{1"} et R^{1"'}, indépendamment de l'autre, signifient l'hydrogène, le fluor, le nitrile et/ou le chlore ou U, de préférence l'hydrogène ; 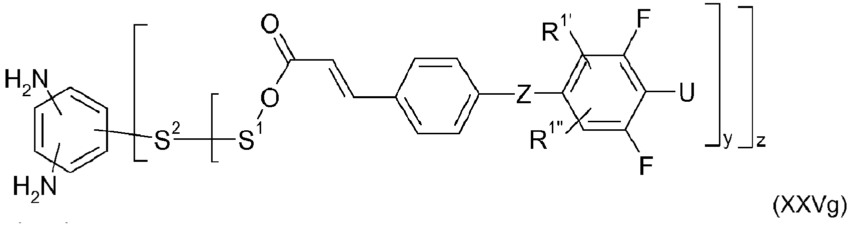 dans laquelle S¹, S², y, z, Z et U ont les significations indiquées ci-dessus telles que décrites dans la revendication 2 ; et R^{1'} et R^{1"}, indépendamment de l'autre, signifient l'hydrogène, le fluor, le nitrile et/ou le chlore ou U, de préférence l'hydrogène ; et 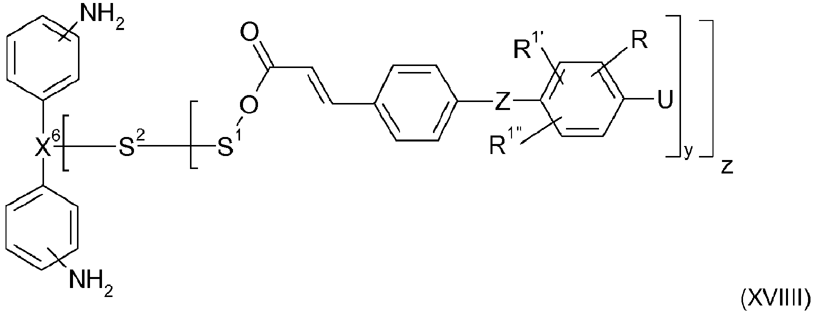 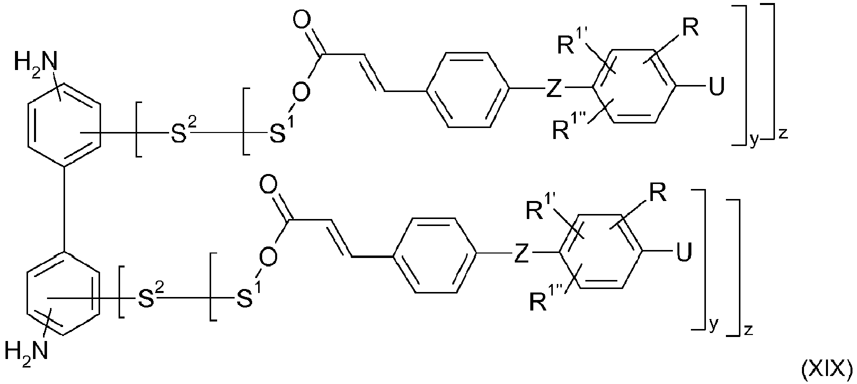 dans lesquelles S¹, S², y, z, Z et U ont les significations indiquées ci-dessus telles que décrites dans la revendication 2 ; et R, R^{1'} et R^{1"}, indépendamment des autres, signifient l'hydrogène, le fluor, le nitrile et/ou le chlore ou U, sous réserve qu'au moins l'un parmi R, R^{1'} et R^{1"} ne soit pas l'hydrogène ; et X⁶ est une liaison simple ou un alkylène en C₁ à C₆ linéaire ou ramifié, substitué ou non substitué.

7. Procédé pour la préparation d'un polymère, qui est un poly(acide amique), un polyimide ou un mélange de ceux-ci, qui comprend la mise en contact d'au moins un dianhydride tétracarboxylique avec au moins un composé monomère tel que décrit dans la revendication 1.

8. Homo et/ou co-polymère, qui est un poly(acide amique), un polyimide ou un mélange de ceux-ci, susceptible d'être obtenu par le procédé de la revendication 7.

9. Composition, en particulier un mélange et/ou une formulation, comprenant un polymère, qui est un poly(acide amique), un polyimide, un polyester d'acide amique, un polyester, un polyamide, un polysiloxane, un dérivé de cellulose, un polyacétal, une polyurée, un polyuréthane, un dérivé de polystyrène, un dérivé de poly(styrène-phénylmaléimide) et un poly(méth)acrylate, un polymère d'oléfine cyclique, ou un mélange de ceux-ci, ayant dans une chaîne latérale au moins un fragment à substitution latérale représenté par le composé de formule (I) tel que décrit dans la revendication 1.

10. Matériau de photoalignement, comprenant un polymère selon la revendication 8, ayant dans une chaîne latérale au moins un fragment à substitution latérale représenté par la formule (I) 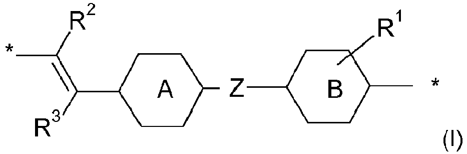 dans laquelle
A représente un aromatique hétérocyclique ou carbocyclique non substitué choisi parmi un cycle monocyclique de cinq ou six atomes, deux cycles monocycliques adjacents de cinq ou six atomes, un système bicyclique de huit, neuf ou dix atomes, ou un système tricyclique de treize ou quatorze atomes ;
B représente un aromatique hétérocyclique ou carbocyclique substitué choisi parmi un cycle monocyclique de cinq ou six atomes, deux cycles monocycliques adjacents de cinq ou six atomes, un système bicyclique de huit, neuf ou dix atomes, ou un système tricyclique de treize ou quatorze atomes ;
Z représente -OCO-, -OCH₂- ou une liaison simple,
R¹ représente le fluor, le chlore ou le nitrile,
R² et R³ sont, indépendamment l'un de l'autre, l'hydrogène, un halogène ou un nitrile ; alkyle en C₁ à C₁₂ non substitué ou substitué par un halogène, dont un ou plusieurs atomes C ou groupes CH- ou CH₂- peuvent être remplacés par un groupe de liaison ; de préférence R² et R³ sont H, le nitrile ou le fluor.

11. Utilisation d'un matériau de photoalignement selon la revendication 10, ou d'un polymère ayant dans une chaîne latérale au moins un fragment à substitution latérale représenté par un composé de formule (I) tel que décrit dans la revendication 1.

12. Couche de polymère, en particulier une couche d'orientation, comprenant au moins un matériau de photoalignement ayant dans une chaîne latérale au moins un fragment à substitution latérale représenté par un composé de formule (I) tel que décrit dans la revendication 1.

13. Procédé pour la préparation d'une couche de polymère, en particulier d'une couche d'orientation, comprenant l'application d'un matériau de photoalignement tel que décrit dans la revendication 10 sur un support, et son traitement avec une lumière d'alignement.

14. Utilisation de la couche de polymère de la revendication 12 pour la préparation d'éléments de construction optiques et électro-optiques structurés ou non structurés, de préférence de cellules d'affichage à cristaux liquides, d'éléments multicouches et d'éléments à couches hybrides.

15. Eléments de construction optiques et électro-optiques structurés ou non structurés, de préférence cellules d'affichage à cristaux liquides, éléments multicouches et éléments à couches hybrides, comprenant au moins une couche de polymère selon la revendication 12.

16. Elément de construction électro-optique structuré ou non structuré selon la revendication 15, qui est une cellule d'affichage à cristaux liquides, comprenant au moins une couche de polymère selon la revendication 12.
